# EUROPEAN PATENT APPLICATION

(11) **EP 4 509 546 A1**
(43) Date of publication of application: **19.02.2025**
(21) Application number: 23788188.3
(22) Date of filing: 03.04.2023
(51) Int. Cl.: C08G 65/336, C09K 3/18

(54) **FLUOROPOLYETHER GROUP-CONTAINING POLYMER, SURFACE TREATMENT AGENT, AND ARTICLE**

(30) Priority: 15.04.2022 JP 2022067432
(71) Applicant: SHIN-ETSU CHEMICAL CO., LTD., Tokyo 1000005 (JP)
(72) Inventor: SAKOH Ryusuke, Annaka-shi, Gunma 379-0224 (JP); UCHIDA Takashi, Annaka-shi, Gunma 379-0224 (JP); MOTEGI Miki, Annaka-shi, Gunma 379-0224 (JP)
(74) Representative: Ter Meer Steinmeister & Partner
(86) International application number: PCT/JP2023/013759
(87) International publication number: WO 2023/199768

(57) **Abstract**

A surface treatment agent according to the present invention comprises a fluoropolyether group-containing polymer, which is a high molecular polymer having a number-average molecular weight of a fluorooxyalkylene group-containing polymer residue in the main chain of 6,000-30,000, has a silanol group or a hydrolyzable silyl group at both ends of the molecular chain, and has a siloxane structure in a linking group of the fluorooxyalkylene group-containing polymer residue in the main chain and the silanol group or the hydrolyzable silyl group at both ends of the molecular chain, and/or a partial (hydrolyzed) condensate thereof. The surface treatment agent can form a cured coating film having excellent water-repellency and oil-repellency, abrasion resistance, and chucking properties.

## Description

### TECHNICAL FIELD

This invention relates to a fluoropolyether-containing polymer (or compound having a divalent fluorooxyalkylene-containing polymer residue in the molecule), and more particularly, to a fluoropolyether-containing polymer having a silanol or hydrolyzable silyl group and capable of forming a coating having improved water/oil repellency and abrasion resistance, a surface treating agent comprising the polymer and/or partial (hydrolytic) condensate thereof, and an article having a surface treated with the surface treating agent.

### BACKGROUND ART

Generally, fluoropolyether-containing compounds exhibit, by virtue of their extremely low surface free energy, water/oil repellency, chemical resistance, lubricity, parting, antifouling and other properties. Taking advantage of these properties, they find use in a variety of industrial fields as water/oil repellent antifouling agents for paper and textiles, lubricants for magnetic recording media, oil-repellent agents for precision instruments, parting agents, cosmetic ingredients, protective films and the like. Inversely, the same properties indicate non-tackiness or non-adhesion to other substrates. Even if they can be coated to the substrate surface, it is difficult for the coating to tightly adhere thereto.

On the other hand, silane coupling agents are well known for their ability to bond surfaces of glass or fabric substrates to organic compounds. They are widely used as surface coating agents for numerous substrates. The silane coupling agent contains an organic functional group and a reactive silyl group (typically hydrolyzable silyl such as alkoxysilyl) in the molecule. In the presence of airborne moisture or the like, the hydrolyzable silyl groups undergo self-condensation reaction to form a coating. The hydrolyzable silyl groups form chemical and physical bonds with the surface of substrates, whereby the coating becomes a tough coating having durability.

Patent Documents 1 to 4 (JP-A 2012-072272, JP-A 2012-157856, JP-A 2013-136833, JP-A 2015-199906) disclose a composition comprising a fluoropolyether-containing polymer which is obtained by introducing a hydrolyzable silyl group into a fluoropolyether-containing compound at one end, the composition being tightly adherent to the substrate surface and able to form a coating with water/oil repellency, chemical resistance, lubricity, parting, antifouling and other properties on the substrate surface.

When lenses and antireflective coatings are surface-treated with a composition comprising the fluoropolyether-containing polymer obtained by introducing a hydrolyzable silyl group into a fluoropolyether-containing compound, the cured film-bearing substrate is improved in slipping and parting properties. When the cured film-bearing substrate is fixedly secured and machined, tight securement is difficult due to slippage, indicating poor chucking. This allows the substrate to be shifted during machining, making it difficult to machine the substrate to the desired shape.

Using a fluoropolyether-containing polymer which is obtained by introducing hydrolyzable silyl groups into a fluoropolyether-containing compound at both ends, the substrate-securing problem can be solved. With respect to abrasion durability, this polymer fails to perform well.

As the prior art pertinent to the present invention, the following documents are cited as well as the foregoing.

### PRIOR ART DOCUMENTS

### PATENT DOCUMENTS

Patent Document 1: JP-A 2012-072272
Patent Document 2: JP-A 2012-157856
Patent Document 3: JP-A 2013-136833
Patent Document 4: JP-A 2015-199906
Patent Document 5: JP-A 2003-238577

### SUMMARY OF INVENTION

### TECHNICAL PROBLEM

An object of the invention, which has been made under the above-mentioned circumstances, is to provide a fluoropolyether-containing polymer having a silanol or hydrolyzable silyl group and capable of forming a cured film having improved water/oil repellency, abrasion resistance and chucking properties, a surface treating agent comprising the polymer and/or a partial (hydrolytic) condensate thereof, and an article having a surface treated with the surface treating agent.

### SOLUTION TO PROBLEM

Making extensive investigations to attain the above object, the inventors have found that among the foregoing fluoropolyether-containing polymers, a fluoropolyether-containing polymer having a silanol or hydrolyzable silyl group, represented by the general formula (1) shown below, is effective in that a surface treating agent comprising the polymer and/or a partial (hydrolytic) condensate thereof is capable of forming a cured coating having improved water/oil repellency, abrasion resistance, and chucking properties. The present invention is predicated on this finding.

Accordingly, the invention provides a fluoropolyether-containing polymer, a surface treating agent, and an article as defined below.
[1] A fluoropolyether-containing polymer having a silanol group or hydrolyzable silyl group, represented by the general formula (1): 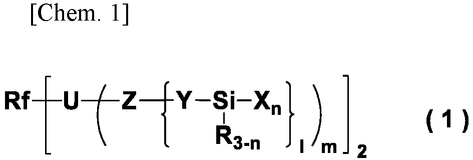
   wherein Rf is a divalent fluorooxyalkylene-containing polymer residue represented by the general formula (2): 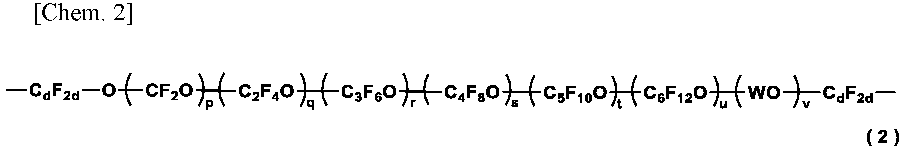
   wherein W is a fluoroalkylene group containing at least one hydrogen, d is independently for each unit an integer of 1 to 3, p, q, r, s, t, u, and v each are an integer of 0 to 450, p+q+r+s+t+u+v is 20 to 450, each of the units associated with p, q, r, s, t, u and v may be linear or branched, and individual repeating units within the parentheses with p, q, r, s, t, u and v may be randomly bonded, and the polymer residue has a number average molecular weight of 6,000 to 30,000,
      U is independently a di- to tetravalent organic group,
      Z is independently a di- to hexavalent linear organo(poly)siloxane residue of 2 to 10 silicon atoms or a di- to hexavalent branched or cyclic organo(poly)siloxane residue of 3 to 10 silicon atoms,
      Y is independently a divalent organic group,
      R is independently a C₁-C₄ alkyl group or phenyl group,
      X is independently a hydroxy or hydrolyzable group,
      n is independently for each attachment silicon an integer of 1 to 3, m is independently an integer of 1 to 3, and l is independently an integer of 1 to 5.
[2] The fluoropolyether-containing polymer of [1] wherein in formula (1), U is
   a C₁-C₂₀ di- or trivalent aliphatic saturated hydrocarbon group which may contain at least one atom or group selected from among C₆-C₈ arylene groups, oxygen, sulfur, hydroxy, diorganosilylene, unsubstituted or substituted secondary amino, tertiary amino, carbonyl, amide, ester, isocyanurate, and triazine ring-containing groups, or
   a tetravalent group which contains a carbon or silicon atom having four valence bonds as the center atom and in which a C₁-C₂₀ aliphatic saturated hydrocarbon group, which may contain at least one atom or group selected from among oxygen, unsubstituted or substituted secondary amino, carbonyl, and amide, or oxygen is attached to three or four of the four valence bonds of the center atom.
[3] The fluoropolyether-containing polymer of [1] or [2] wherein in formula (1), Y is a C₁-C₂₀ alkylene group which may contain at least one atom or group selected from among oxygen, sulfur and C₆-C₈ arylene groups.
[4] The fluoropolyether-containing polymer of any one of [1] to [3] wherein in formula (1), X is selected from the group consisting of hydroxy, C₁-C₁₀ alkoxy groups, C₂-C₁₀ alkoxyalkoxy groups, C₂-C₁₀ acyloxy groups, C₂-C₁₀ alkenyloxy groups, and halogen.
[5] The fluoropolyether-containing polymer of any one of [1] to [4] wherein the polymer having formula (1) is represented by any one of the following formulae. 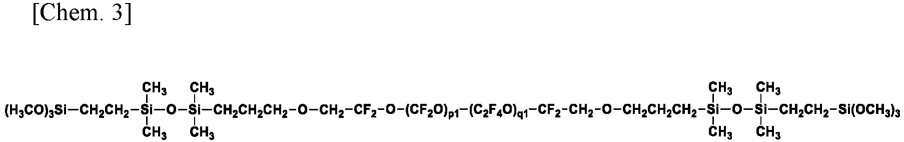 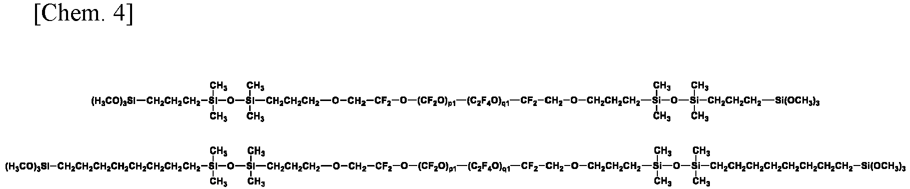 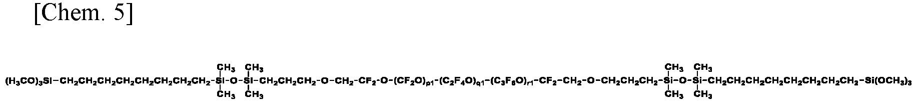 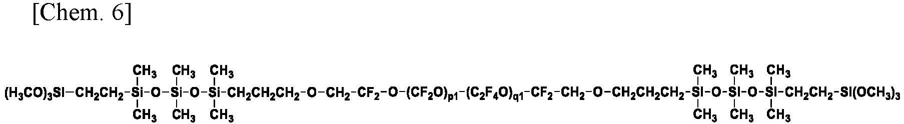 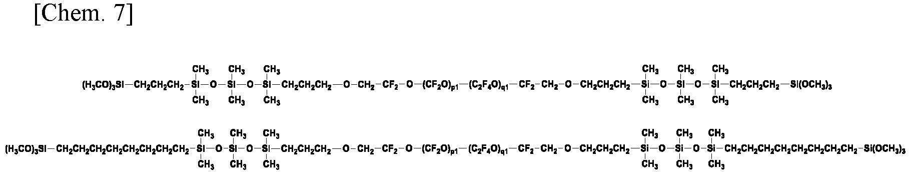 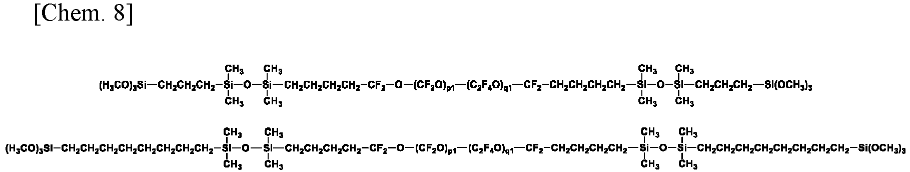 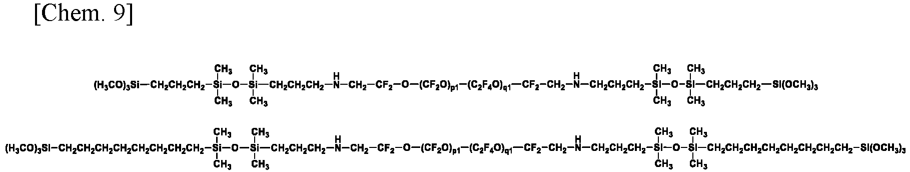 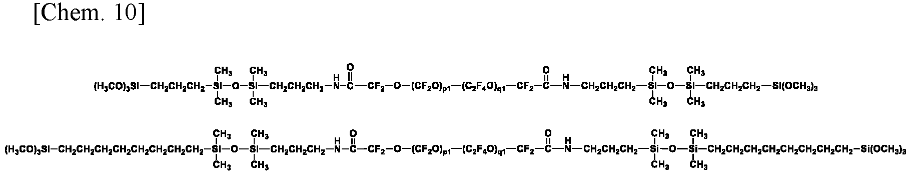 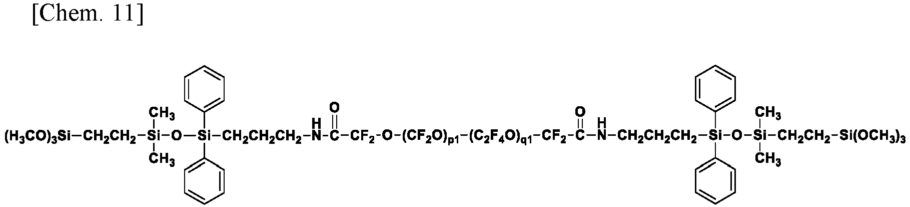 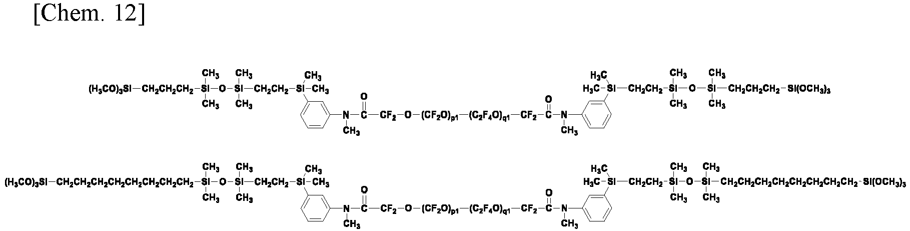 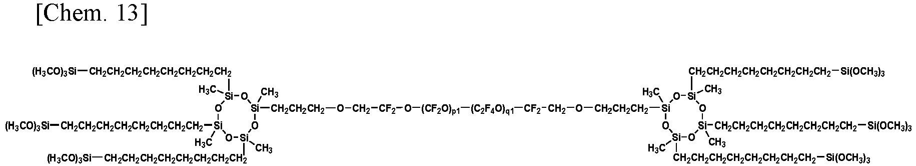 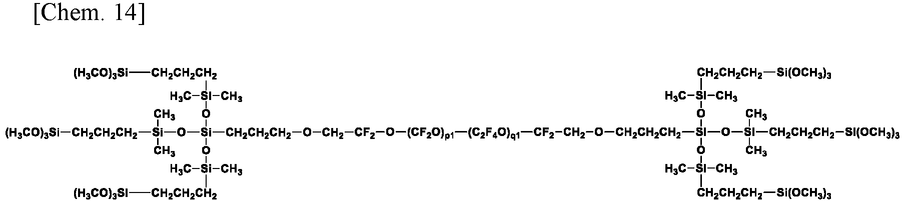 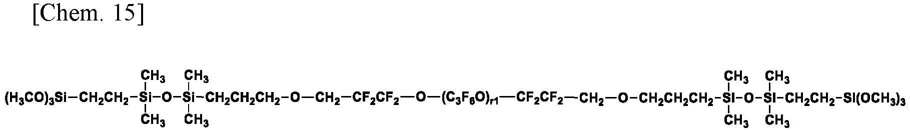 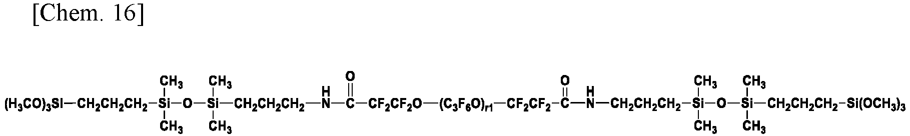 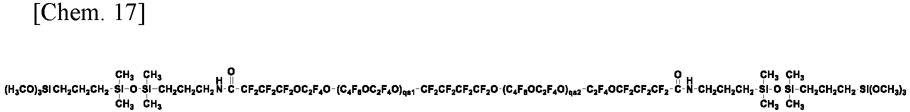 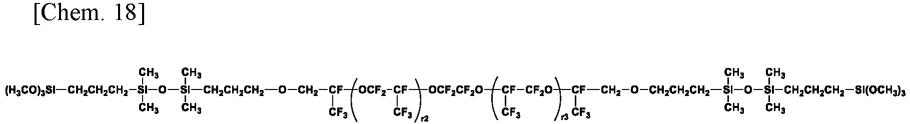 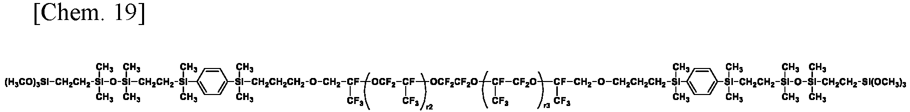 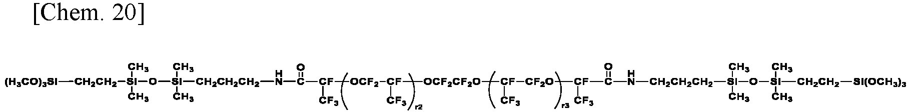 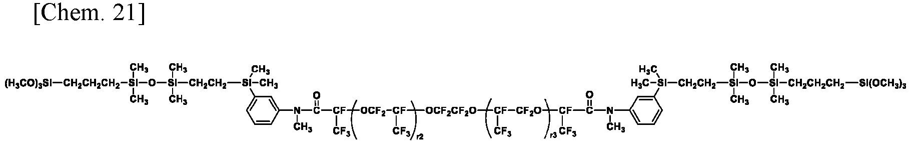 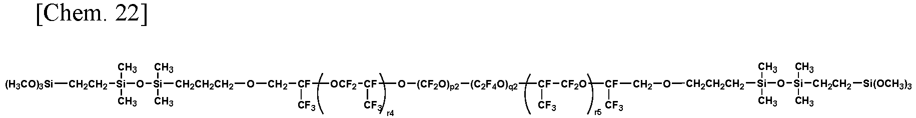 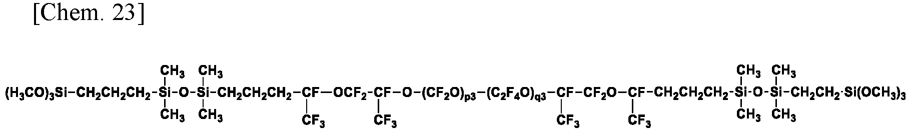 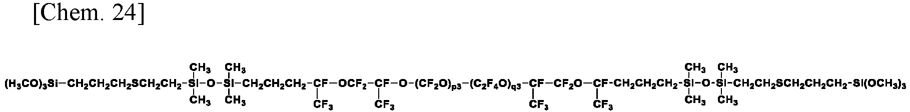 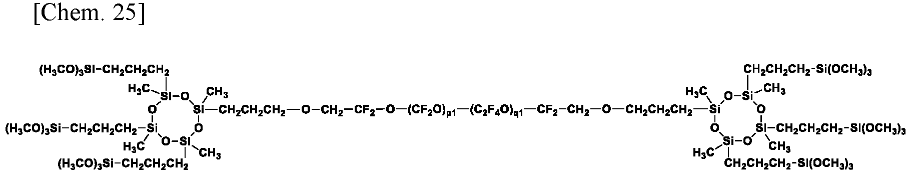 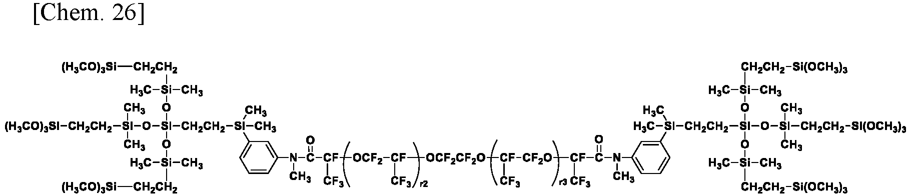 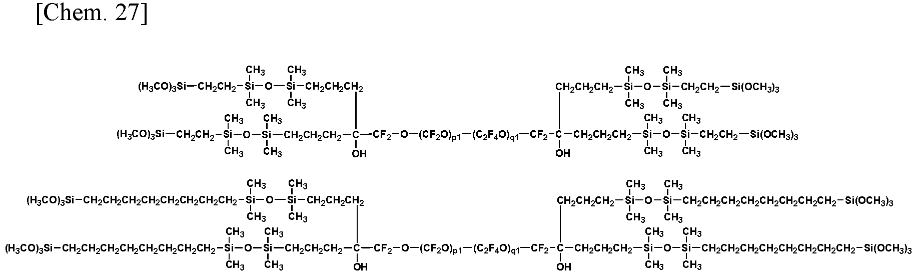 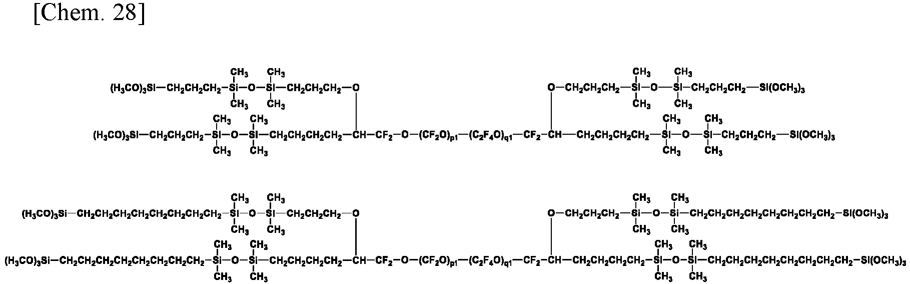 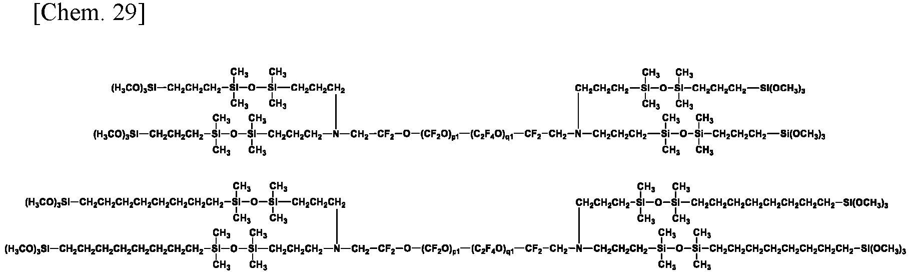 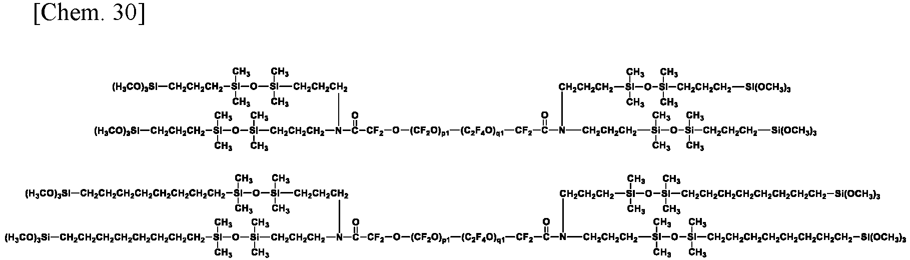 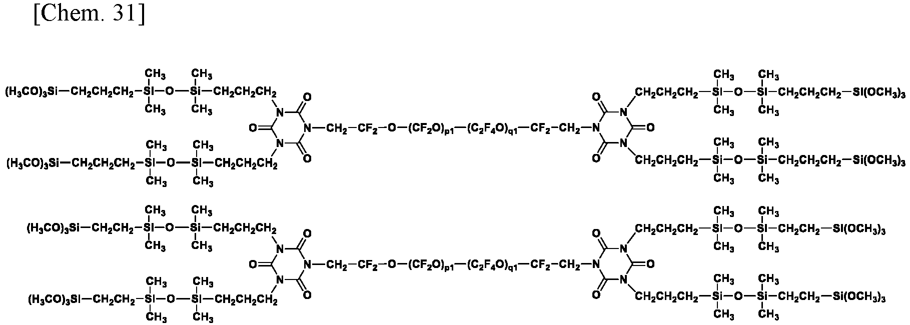 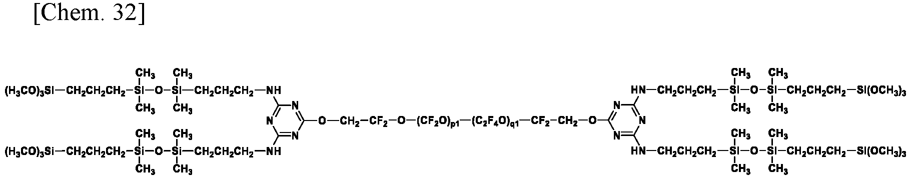 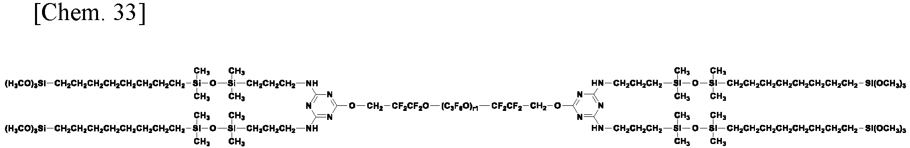 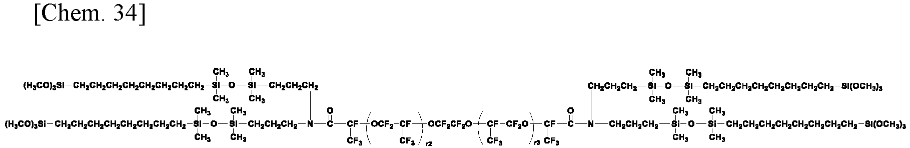 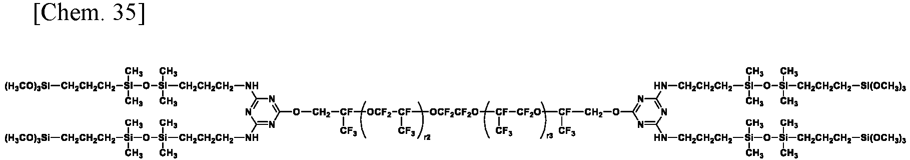 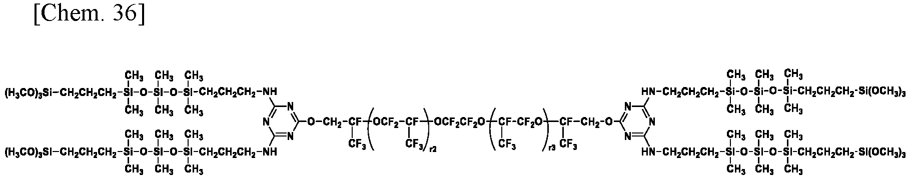 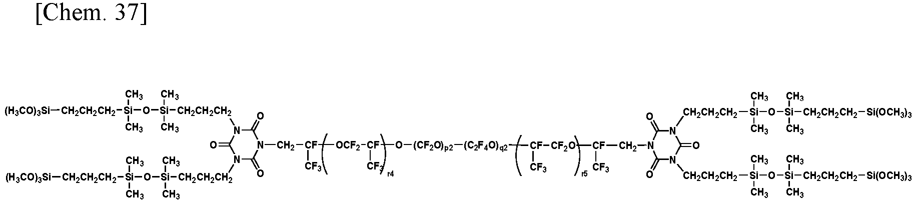 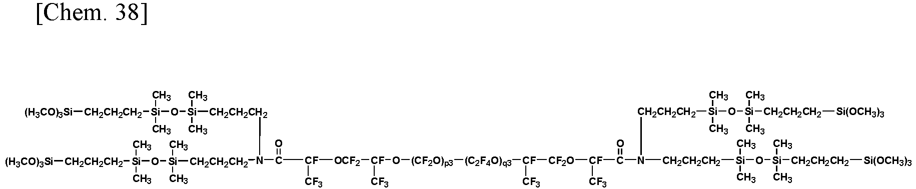 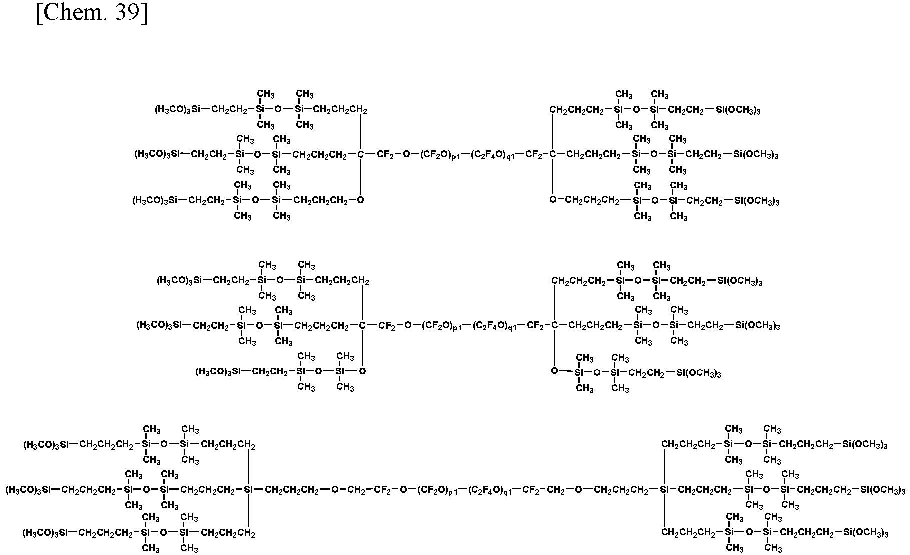 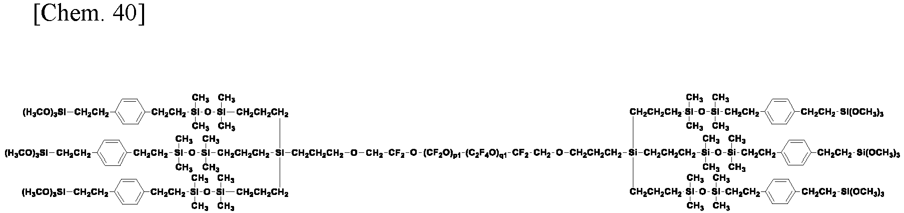 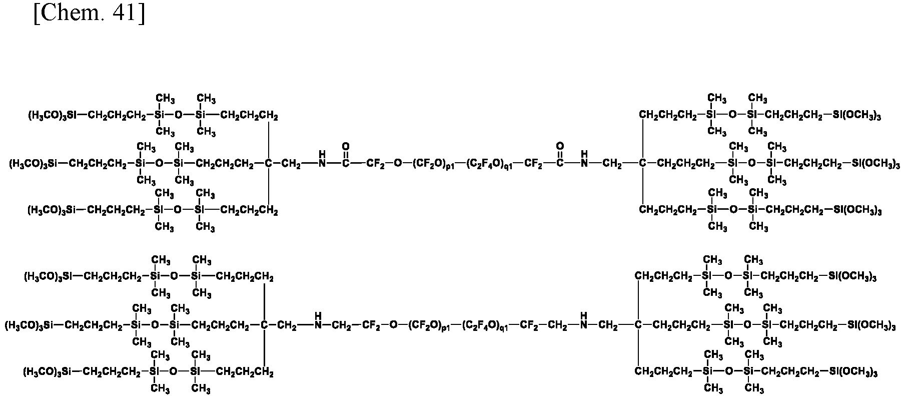 Herein p1 is an integer of 5 to 440, q1 is an integer of 5 to 250, p1+q1 is an integer of 50 to 450, r1 is an integer of 35 to 180, r2 is an integer of 1 to 100, r3 is an integer of 1 to 100, r2+r3 is an integer of 35 to 180, p2 is an integer of 1 to 400, q2 is an integer of 1 to 250, r4 is an integer of 1 to 100, r5 is an integer of 1 to 100, p2+q2+r4+r5 is an integer of 40 to 403, p3 is an integer of 5 to 440, q3 is an integer of 5 to 250, p3+q3 is an integer of 50 to 445, qs1 is an integer of 1 to 85, qs2 is an integer of 1 to 85, qs1+qs2 is an integer of 16 to 86, individual repeating units within the parentheses with p1 and q1, p2 and q2, and p3 and q3 may be randomly bonded, and the fluorooxyalkylene-containing polymer residue has a number average molecular weight of 6,000 to 30,000.
[6] A surface treating agent comprising the fluoropolyether-containing polymer of any one of [1] to [5] and/or a partial (hydrolytic) condensate thereof as a main component.
[7] The surface treating agent of [6], further comprising a fluoropolyether-containing polymer having a silanol group or hydrolyzable silyl group, represented by the general formula (3), and/or a partial (hydrolytic) condensate thereof, 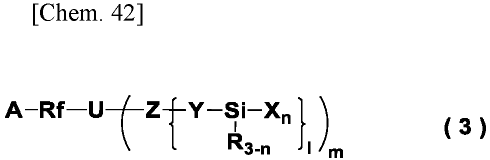 wherein A is independently fluorine, hydrogen or a monovalent fluorinated group terminated with -CF₃, -CF₂H or -CH₂F group,
   Rf is a divalent fluorooxyalkylene-containing polymer residue having the general formula (2): 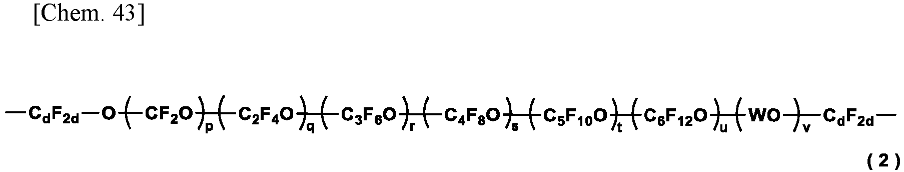 wherein W is a fluoroalkylene group containing at least one hydrogen, d is independently for each unit an integer of 1 to 3, p, q, r, s, t, u, and v is independently an integer of 0 to 450, p+q+r+s+t+u+v is 20 to 450, each of the units associated with p, q, r, s, t, u and v may be linear or branched, and individual repeating units within the parentheses with p, q, r, s, t, u and v may be randomly bonded, and the polymer residue has a number average molecular weight of 6,000 to 30,000,
   U is independently a di- to tetravalent organic group,
   Z is independently a di- to hexavalent linear organo(poly)siloxane residue of 2 to 10 silicon atoms or a di- to hexavalent branched or cyclic organo(poly)siloxane residue of 3 to 10 silicon atoms,
   Y is independently a divalent organic group,
   R is independently a C₁-C₄ alkyl group or phenyl group,
   X is independently a hydroxy or hydrolyzable group,
   n is independently for each attachment silicon an integer of 1 to 3, m is independently an integer of 1 to 3, and l is independently an integer of 1 to 5.
[8] An article having a surface treated with the surface treating agent of [6] or [7].
[9] The article of [8] which is a lens.

### ADVANTAGEOUS EFFECTS OF INVENTION

The fluoropolyether-containing polymer of the invention is a high-molecular-weight polymer whose backbone is a fluorooxyalkylene-containing polymer residue (Rf) having a number average molecular weight of 6,000 to 30,000. Since silanol groups or hydrolyzable silyl groups (-SiXₙ(R)₃₋ₙ) are present at both ends of the molecular chain, and a linking group between the fluorooxyalkylene-containing polymer residue (Rf) as the backbone and the silanol groups or hydrolyzable silyl groups (-SiXₙ(R)₃₋ₙ) at both ends of the molecular chain has a siloxane structure or siloxane bond, the polymer is improved in substrate adhesion. An article which is surface-treated with a surface treating agent comprising the polymer and/or a partial (hydrolytic) condensate thereof is improved in water/oil repellency, abrasion resistance (especially paper abrasion resistance), and chucking properties to substrates, especially lens substrates.

### DESCRIPTION OF EMBODIMENTS

As used herein, the "partial (hydrolytic) condensate" refers to a partial condensate or partial hydrolytic condensate. The "organo(poly)siloxane residue" refers to an organosiloxane residue or organopolysiloxane residue.

As used herein, the term "about (a value)" is a numerical value (approximate value) obtained by counting fractions over 1/2 as one and disregarding the rest, and when the lowest digit of the numerical value described is not "0", includes a numerical value range in which the numerical value described is reached by counting fractions of the digit below the lowest digit over 1/2 as one and disregarding the rest. For example, "about 1.5 equivalents" implies a range from 1.45 equivalents to 1.54 equivalents, and "about 65 parts by weight" implies a range from 64.5 parts by weight to 65.4 parts by weight. When the lowest digit of the numerical value described is "0", the term "about (a value)" includes a numerical value range in which the numerical value described is reached by counting fractions of the lowest digit over 1/2 as one and disregarding the rest. For example, "about 80°C" implies a range from 75°C to 84°C, and "about 100 parts by weight" implies a range from 95 parts by weight to 104 parts by weight.

The fluoropolyether-containing polymer of the invention is a polymer, represented by the general formula (1), whose backbone is composed of a divalent fluorooxyalkylene-containing polymer residue (Rf) wherein a linking group between the divalent fluorooxyalkylene-containing polymer residue (Rf) and reactive functional groups (specifically silanol groups or hydrolyzable silyl groups) at both ends of the molecular chain has a siloxane bond (Si-O-Si).

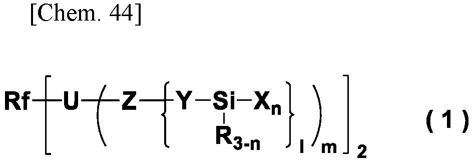

Herein Rf is a divalent fluorooxyalkylene-containing polymer residue represented by the general formula (2).

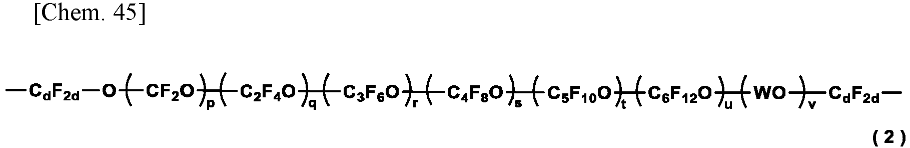

Herein W is a fluoroalkylene group containing at least one hydrogen, d is independently for each unit an integer of 1 to 3, p, q, r, s, t, u, and v each are an integer of 0 to 450, p+q+r+s+t+u+v is 20 to 450, each of the units associated with p, q, r, s, t, u and v may be linear or branched, and individual repeating units within the parentheses with p, q, r, s, t, u and v may be randomly bonded, and the polymer residue has a number average molecular weight of 6,000 to 30,000.

U is independently a di- to tetravalent organic group. Z is independently a di- to hexavalent linear organo(poly)siloxane residue of 2 to 10 silicon atoms or a di- to hexavalent branched or cyclic organo(poly)siloxane residue of 3 to 10 silicon atoms. Y is independently a divalent organic group. R is independently a C₁-C₄ alkyl group or phenyl group. X is independently a hydroxy or hydrolyzable group, n is independently for each attachment silicon an integer of 1 to 3, m is independently an integer of 1 to 3, and l is independently an integer of 1 to 5.

In formula (1), Rf is a divalent fluorooxyalkylene-containing polymer residue represented by formula (2).

In formula (2), W is a fluoroalkylene group containing at least one hydrogen. Examples thereof include perfluoroalkylene groups such as CF₂, C₂F₄, C₃F₆, C₄F₈, CₛF₁₀, and C₆F₁₂, in which one or two fluorine atoms are substituted by hydrogen atoms.

In formula (2), d is independently for each unit an integer of 1 to 3, preferably 1 or 2.

Also, p, q, r, s, t, u, and v each are an integer of 0 to 450, preferably p is an integer of 5 to 440, q is an integer of 5 to 250, r is an integer of 0 to 180, s is an integer of 0 to 100, t is an integer of 0 to 100, u is an integer of 0 to 100, v is an integer of 0 to 100, p+q+r+s+t+u+v is 20 to 450, preferably 50 to 200, more preferably p+q is an integer of 50 to 450, especially 50 to 200. When p+q+r+s+t+u+v is not more than the upper limit, adhesion and curability are satisfactory, and when the same is not less than the lower limit, the characteristics of fluoropolyether group are fully developed. Each of the units associated with p, q, r, s, t, u and v may be linear or branched. Individual repeating units within the parentheses with p, q, r, s, t, u and v may be randomly bonded.

The fluorooxyalkylene-containing polymer residue Rf should have a number average molecular weight (Mn) of 6,000 to 30,000, preferably 6,000 to 20,000. As used herein, Mn may be computed by gel permeation chromatography (GPC) using a fluorochemical solvent as the developing solvent or spectroscopy such as 19F -NMR. As long as the Mn of the fluorooxyalkylene-containing polymer residue is in the range, the cured film is provided on its surface with a low coefficient of dynamic friction despite the inclusion of hydrolyzable groups at both ends.

Examples of Rf are shown below.

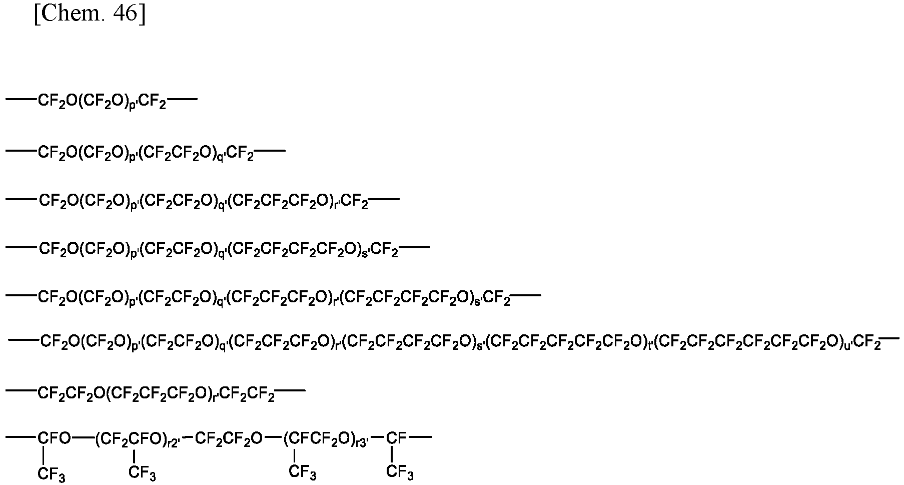

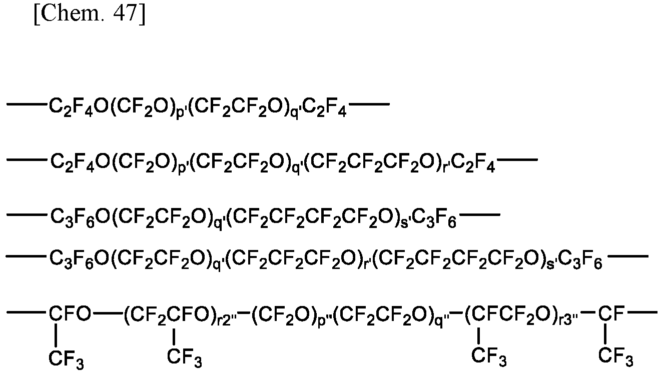

Herein, p', q', r', s', t', and u' each are an integer of at least 1, their upper limit is the same as the upper limit of p, q, r, s, t, and u, and the sum of p', q', r', s', t', and u' is 20 to 450; r2' and r3' each are an integer of at least 1, and the sum of r2' and r3' is 35 to 180; p", q", r2", and r3" each are an integer of at least 1, and the sum of p", q", r2" and r3" is 35 to 450. Also, individual repeating units within the parentheses with p', q', r', s', t', u', p", and q" may be randomly bonded. The polymer residue has a Mn of 6,000 to 30,000.

In formula (1), U is independently a di- to tetravalent organic group, preferably a C₁-C₂₀ di- to tetravalent, unsubstituted or substituted, aliphatic saturated hydrocarbon group, which may contain at least one atom or group selected from among C₆-C₈ arylene groups, oxygen, sulfur, silicon, hydroxy, diorganosilylene groups (e.g., dimethylsilylene), unsubstituted or substituted secondary amino (e.g., imino, N-methyl-substituted imino, N-phenyl-substituted imino), tertiary amino, carbonyl (ketone structure), amide, ester, isocyanurate, and triazine ring-containing groups.

Preferably U is a C₁-C₂₀ di- or trivalent aliphatic saturated hydrocarbon group which may contain at least one atom or group selected from among C₆-C₈ arylene group, oxygen, sulfur, hydroxy, diorganosilylene groups, unsubstituted or substituted secondary amino, tertiary amino, carbonyl, amide, ester, isocyanurate, and triazine ring-containing groups, or a tetravalent group which has carbon or silicon as a center atom wherein a C₁-C₂₀ aliphatic saturated hydrocarbon group which may contain one or more atoms or groups selected from oxygen, unsubstituted or substituted secondary amino, carbonyl and amide groups, or oxygen is bonded to three or four of four valence bonds of the center atom.

Examples of U include the following groups. Preferably the valence bond on the left side is attached to Rf and other valence bonds are attached to Z.

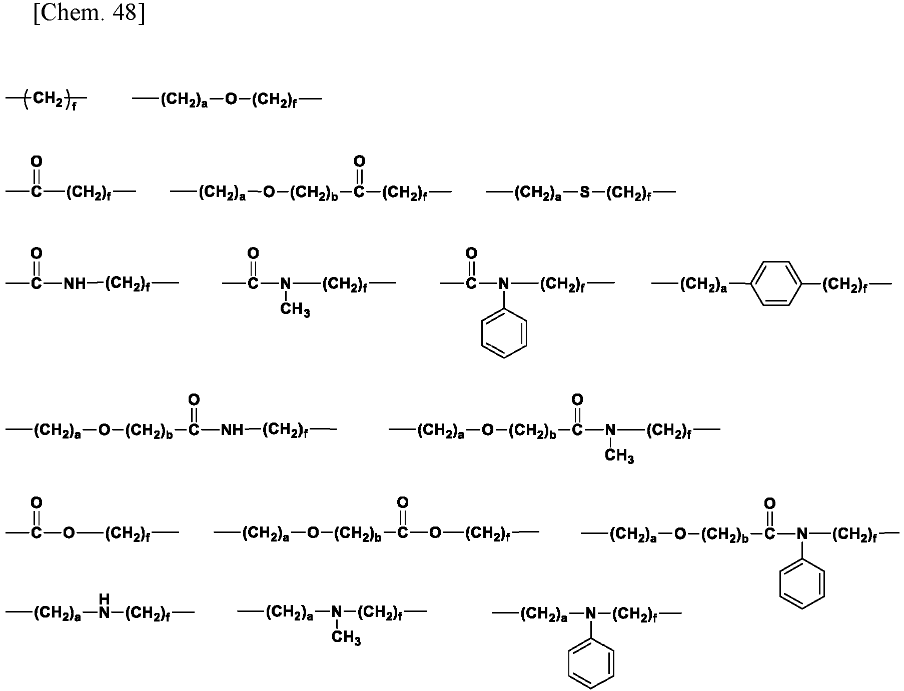

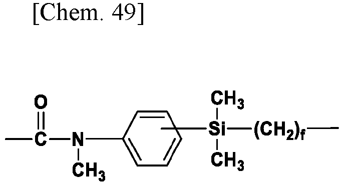

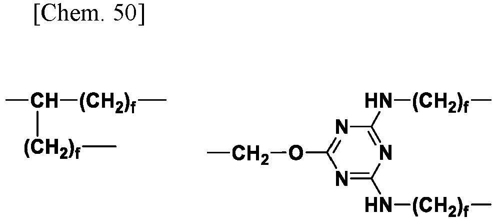

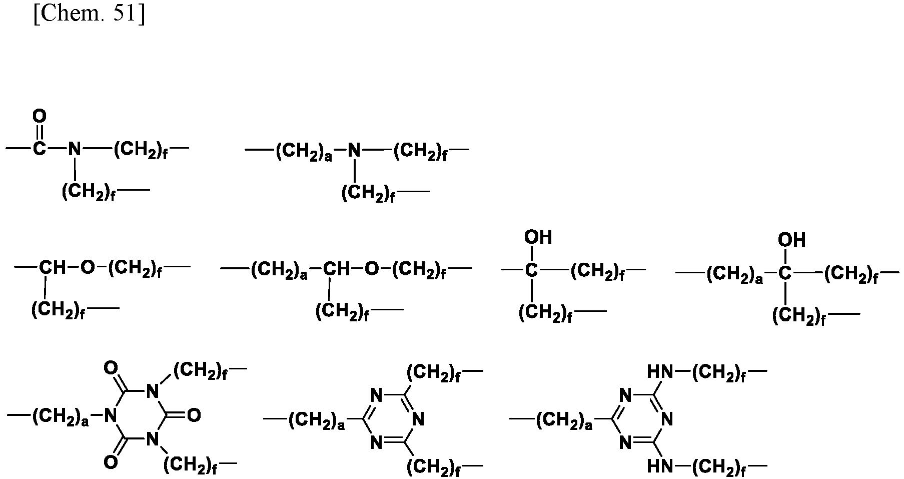

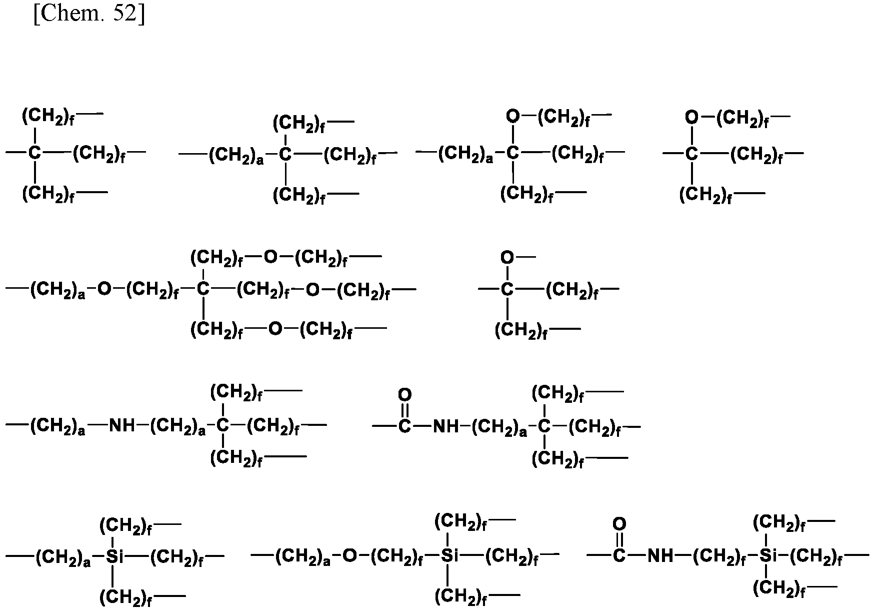

Herein f is independently an integer of 2 to 8, a and b are independently an integer of 1 to 4.

In formula (1), Z is independently a di- to hexavalent linear organo(poly)siloxane residue of 2 to 10 silicon atoms, preferably 2 to 5 silicon atoms or a di- to hexavalent branched or cyclic organo(poly)siloxane residue of 3 to 10 silicon atoms, preferably 3 to 5 silicon atoms. Examples thereof are shown by the following formulae.

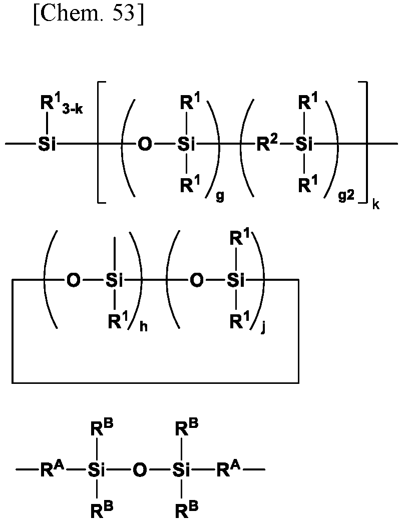

Herein R¹ which may be the same or different is a C₁-C₄ alkyl group such as methyl, ethyl, propyl or butyl, or C₆-C₁₀ aryl group such as phenyl. R² is a C₁-C₄ alkylene group such as methylene, ethylene, propylene or butylene, or C₆-C₁₀ arylene group such as phenylene. R^{A} is a single bond or a group having the general formula (X): 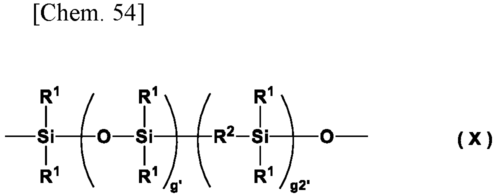
wherein R¹ and R² are as defined above, g' is an integer of 0 to 6, preferably 0 or 1, g2' is an integer of 0 to 6, preferably 0 or 1, individual repeating units within the parentheses may be randomly bonded, and the valence bond on the right side is attached to Si. R^{B} is R¹ or a group having the general formula (Y): 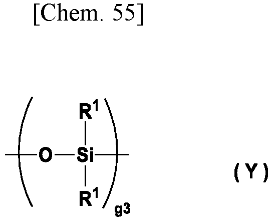
wherein R¹ is as defined above, g3 is an integer of 1 to 6, and the valence bond on the left side is attached to Si, at least one R^{B} being a group of formula (Y), g is an integer of 1 to 9, preferably 1 to 4, g2 is an integer of 0 to 9, preferably 0 to 3, h is an integer of 2 to 6, preferably 3 to 5, j is an integer of 0 to 8, preferably 0 or 1, h+j is an integer of 3 to 10, preferably 3 to 5, k is an integer of 1 to 3, individual repeating units within the parentheses may be randomly bonded. In each formula, the number of silicon atoms is 10 at maximum.

Exemplary of Z are groups of the following formulae. Preferably the valence bond on the left side is attached to U and other valence bonds are attached to Y.

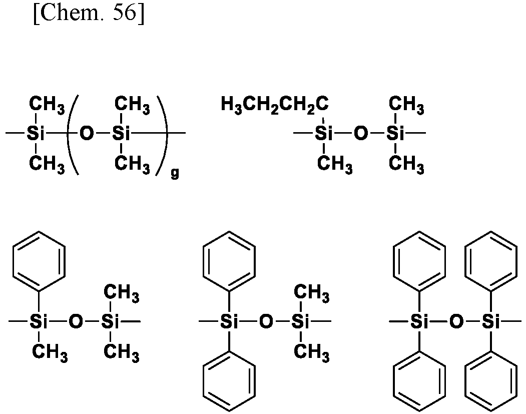

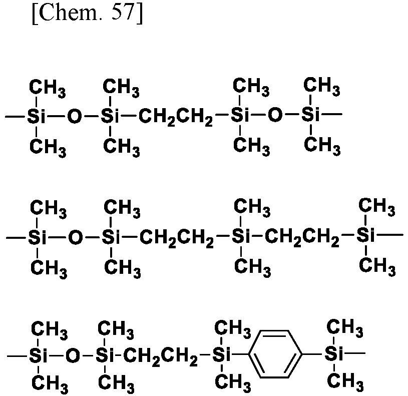

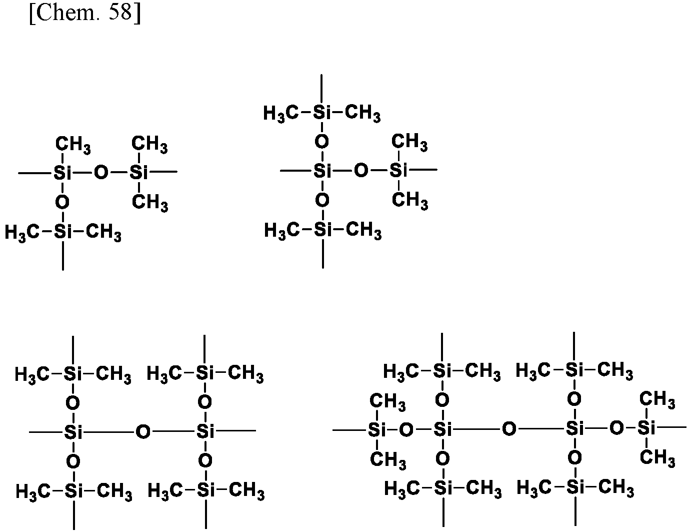

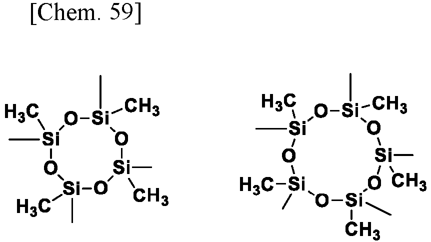

Herein g is as defined above.

In formula (1), Y is independently a divalent organic group, preferably C₁-C₂₀ alkylene group, which may contain one or more atoms or groups selected from oxygen, sulfur and C₆-C₈ arylene groups.

Exemplary of Y are groups of the following formulae. Preferably the valence bond on the left side is attached to Z and the valence bond on the right side is attached to silicon.

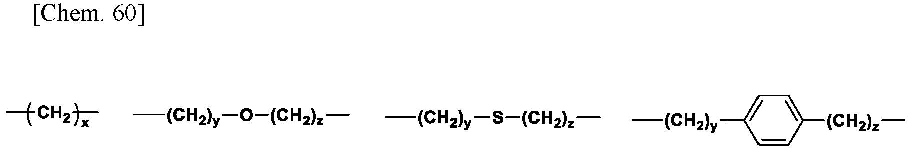

Herein x is an integer of 1 to 20, preferably 2 to 10, y and z each are an integer of 1 to 10, preferably 1 to 5, y+z is an integer of 2 to 20, preferably 2 to 10.

In formula (1), X is independently a hydroxy group, or a hydrolyzable group selected from the group consisting of C₁-C₁₀ alkoxy groups such as methoxy, ethoxy, propoxy, isopropoxy, butoxy, isobutoxy, sec-butoxy and tert-butoxy, C₂-C₁₀ alkoxyalkoxy groups such as methoxymethoxy, methoxyethoxy, ethoxymethoxy, and ethoxyethoxy, C₂-C₁₀ acyloxy groups such as acetoxy and propionoxy, C₂-C₁₀ alkenyloxy groups such as vinyloxy, allyloxy, propenoxy, and isopropenoxy, and halogen atoms such as chloro, bromo and iodo.

In formula (1), R is independently a C₁-C₄ alkyl group such as methyl, ethyl, propyl or butyl, or a phenyl group.

In formula (1), n is independently for each attachment silicon an integer of 1 to 3, preferably 2 or 3, m is independently an integer of 1 to 3, and l is independently an integer of 1 to 5, preferably 1 to 3.

It is noted that the fluoropolyether-containing polymer preferably contains 2 to 48, especially 2 to 6 silanol groups or hydrolyzable silyl groups per molecule.

The fluoropolyether-containing polymer containing silanol groups or hydrolyzable silyl groups, represented by formula (1), may be prepared, for example, by the following method.

One exemplary method involves dissolving a fluoropolyether-containing polymer having olefin sites (alkenyl groups) at both ends of the molecular chain in a solvent such as fluorochemical solvent (e.g., 1,3-bis(trifluoromethyl)benzene), mixing an organosilicon compound containing a di- to hexavalent linear organo(poly)siloxane residue of 2 to 10 silicon atoms or branched or cyclic organo(poly)siloxane residue of 3 to 10 silicon atoms in the molecule and having a SiH group and a silanol or hydrolyzable silyl group (e.g., halogenated silyl or alkoxysilyl group), and aging the mixture in the presence of a toluene solution of a hydrosilation reaction catalyst such as chloroplatinic acid/vinylsiloxane complex, at a temperature of 40 to 120°C, preferably 60 to 100°C, more preferably about 80°C, for 1 to 72 hours, preferably 20 to 36 hours, more preferably about 24 hours. It is noted that when an organosilicon compound having halogen as the hydrolyzable silyl group is used as the organosilicon compound containing a di- to hexavalent linear organo(poly)siloxane residue of 2 to 10 silicon atoms or branched or cyclic organo(poly)siloxane residue of 3 to 10 silicon atoms and having a SiH group and a silanol or hydrolyzable silyl group, the substituent (i.e., halogen) on the silyl group may be subsequently converted to another hydrolyzable group, for example, alkoxy group (e.g., methoxy).

**In** the preparation of the fluoropolyether-containing polymer containing silanol groups or hydrolyzable silyl groups, represented by formula (1), the fluoropolyether-containing polymer having olefin sites (alkenyl groups) at both ends of the molecular chain is exemplified by a fluoropolyether-containing polymer having the general formula (4): 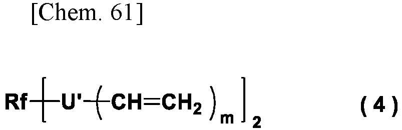 wherein Rf and m are as defined above, and U' is independently a single bond or a di- to tetravalent organic group.

In formula (4), U' is independently a single bond or a di- to tetravalent organic group. The preferred di- to tetravalent organic groups include C₁-C₁₈ di- or tetravalent aliphatic saturated hydrocarbon groups which may contain at least one atom or group selected from among C₆-C₈ arylene groups, oxygen, sulfur, hydroxy, diorganosilylene (e.g., dimethylsilylene), secondary amino, tertiary amino, carbonyl, amide, ester, isocyanurate, triazine ring-containing groups, and tetravalent groups having silicon or carbon as the center atom.

Preferred examples of U' are shown below. Preferably the valence bond on the left side is attached to Rf and other valence bonds are attached to alkenyl groups.

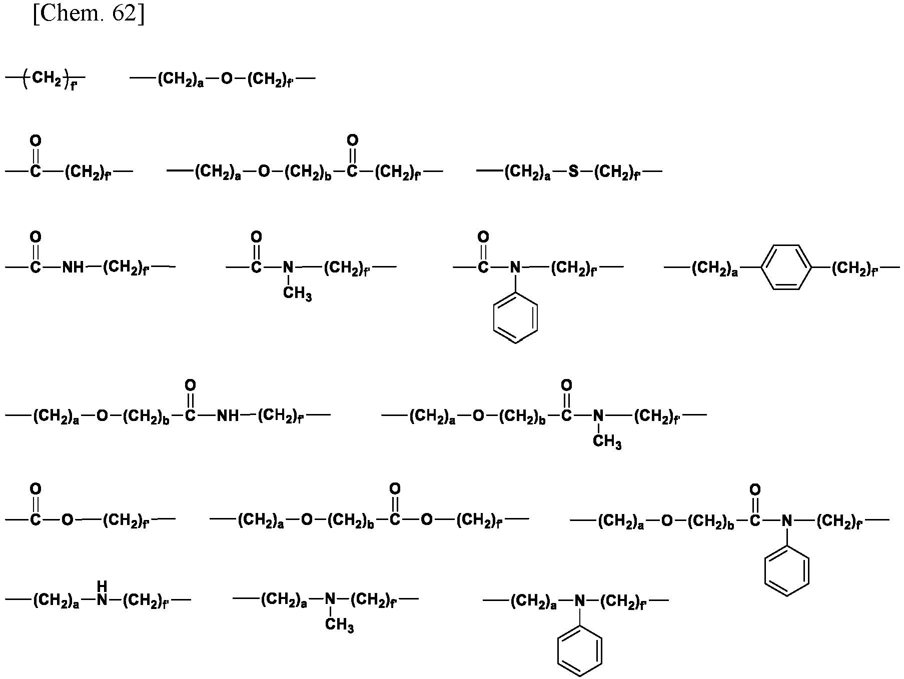

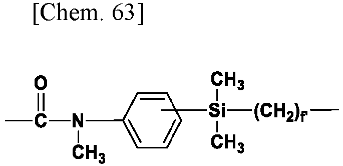

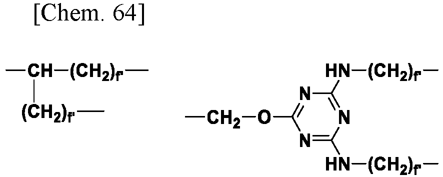

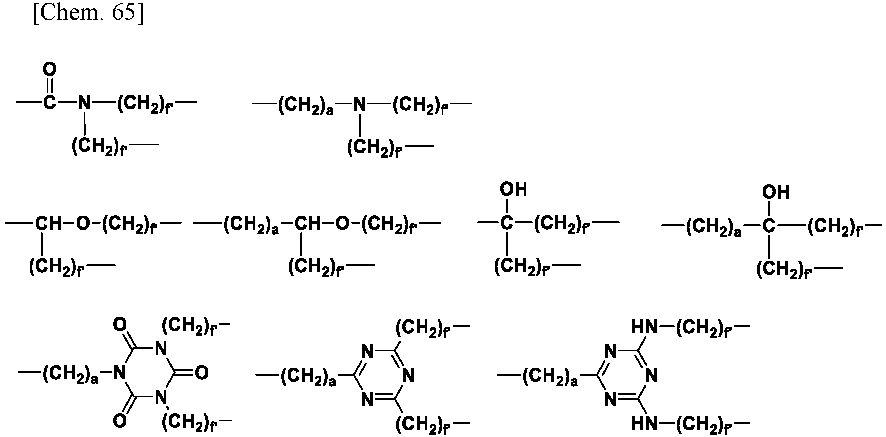

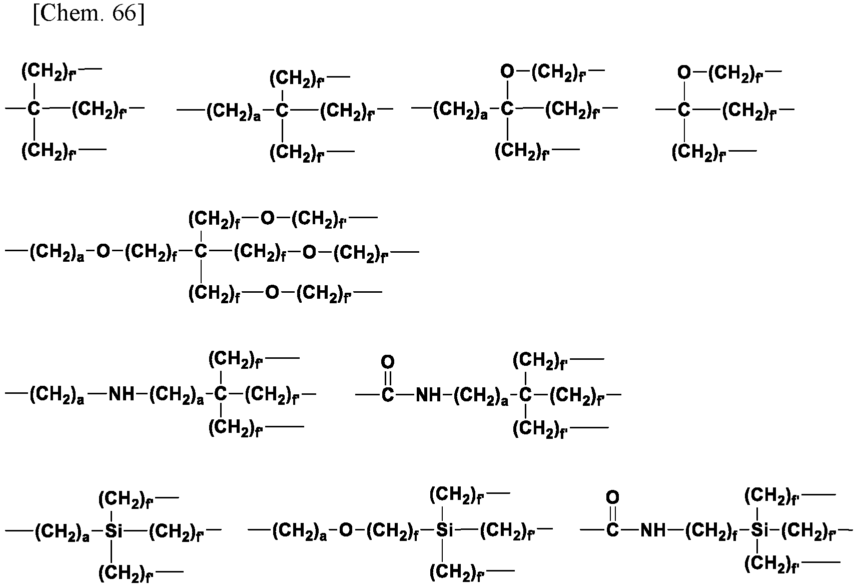

Herein f is independently an integer of 2 to 8, f' is independently an integer of 0 to 6, and a and b are each independently an integer of 1 to 4.

Examples of the fluoropolyether-containing polymer having olefin sites (alkenyl groups) at both ends of the molecular chain, represented by formula (4), are shown below.

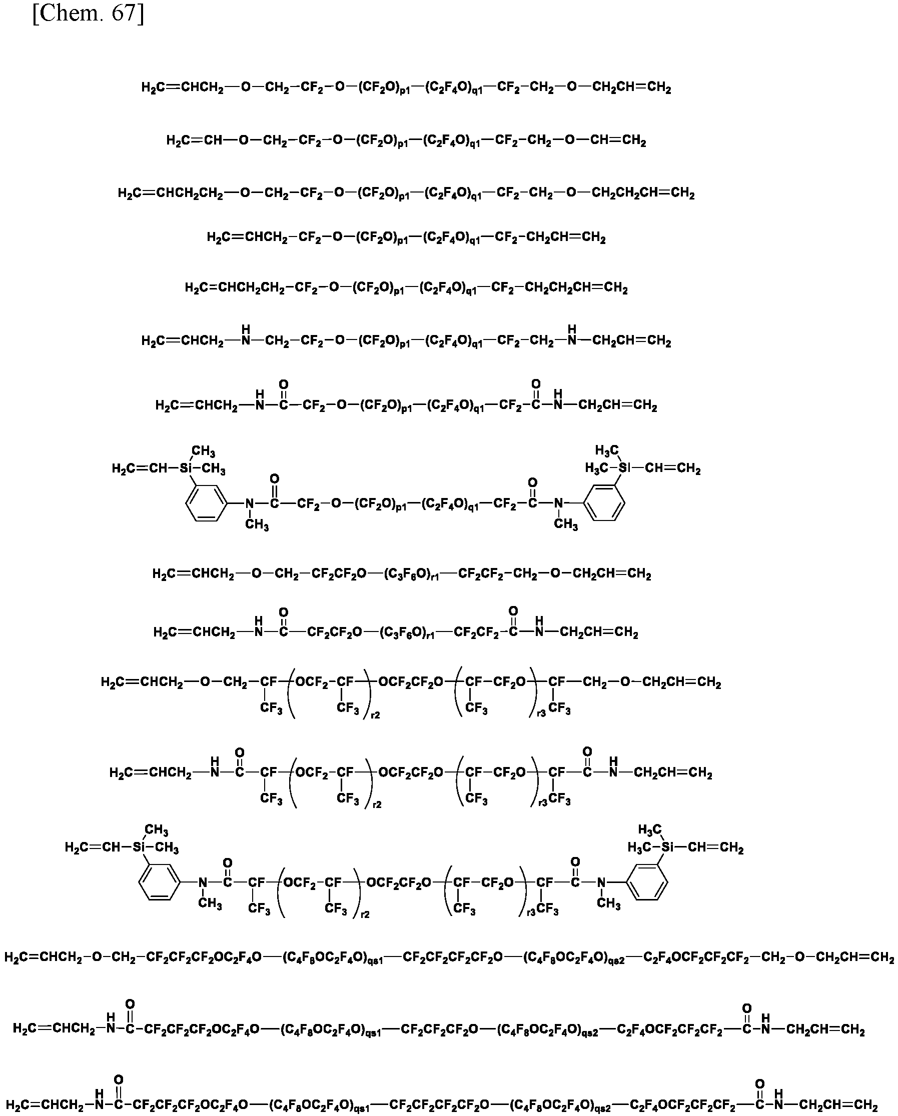

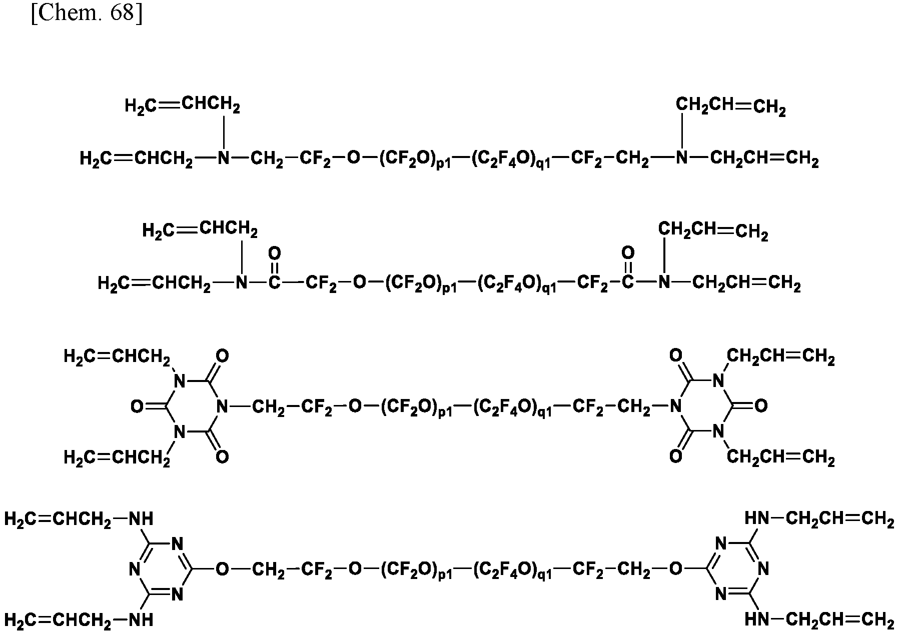

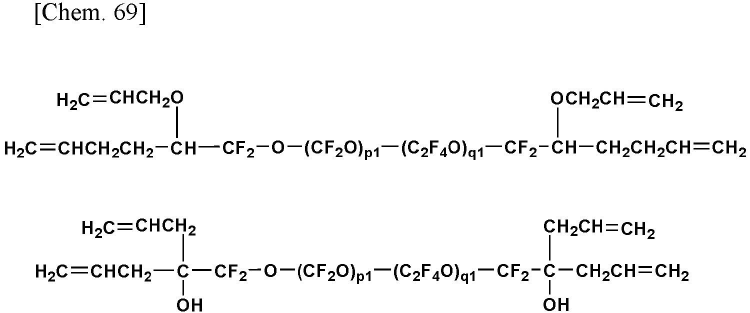

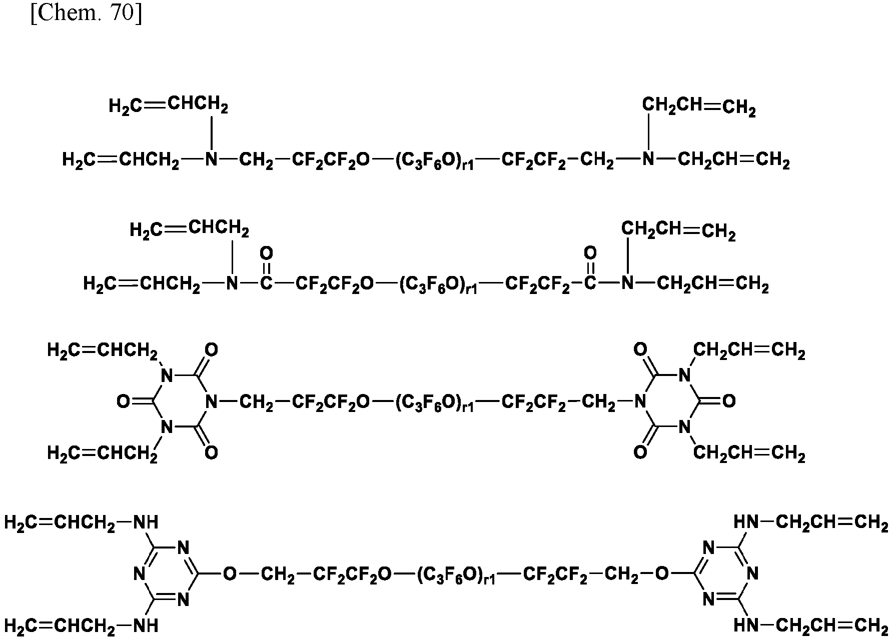

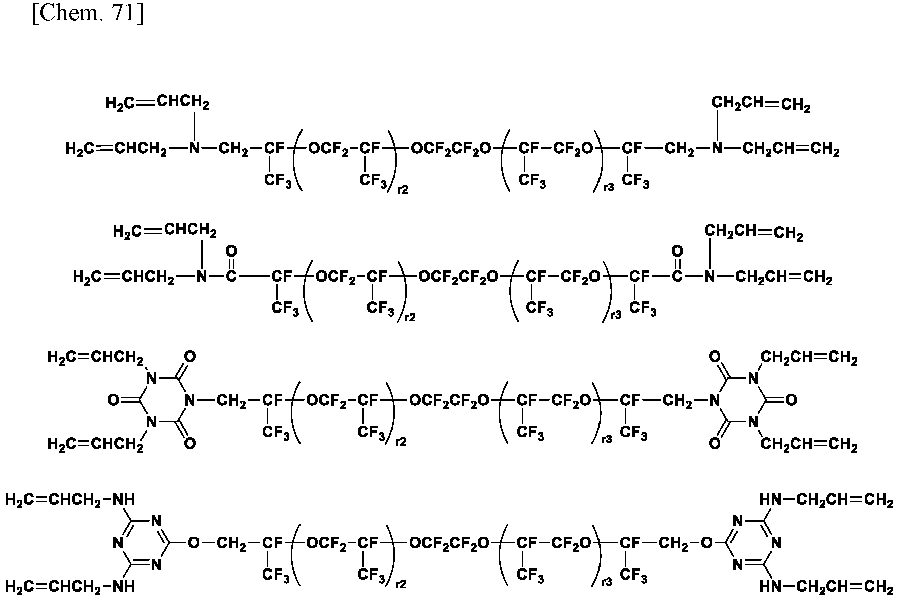

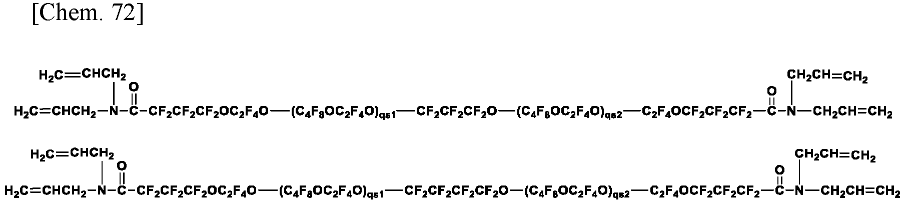

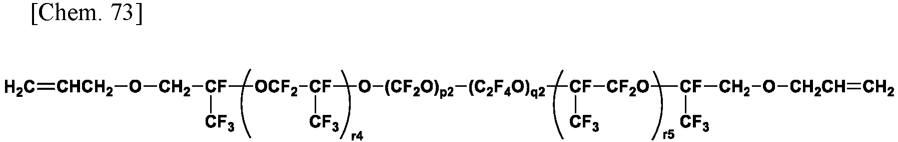

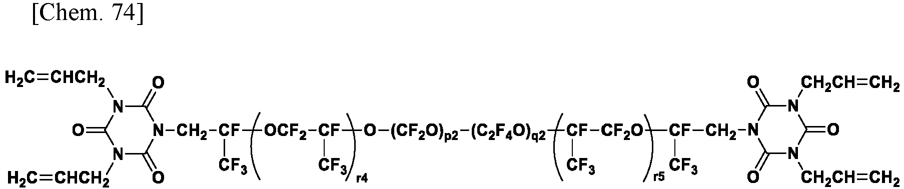

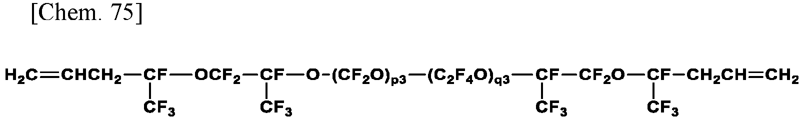

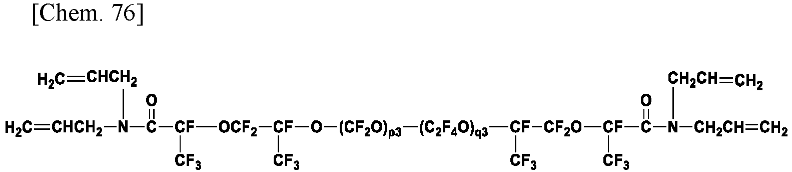

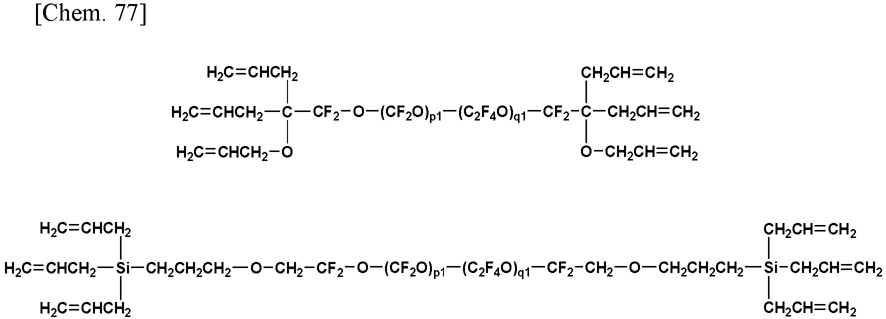

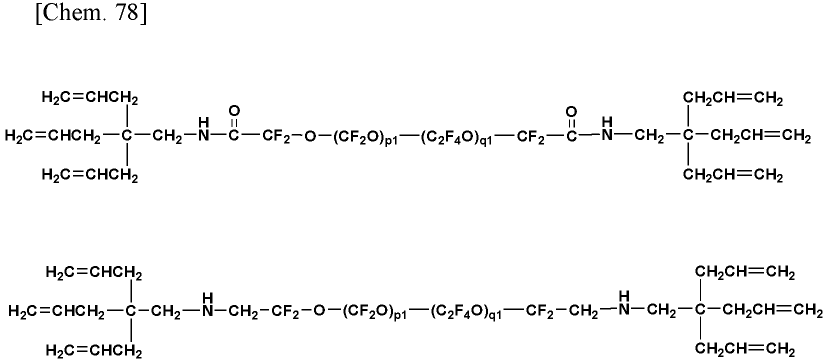

Herein p1 is an integer of 5 to 440, q1 is an integer of 5 to 250, p1+q1 is an integer of 50 to 450; r1 is an integer of 35 to 180, r2 is an integer of 1 to 100, r3 is an integer of 1 to 100, r2+r3 is an integer of 35 to 180; p2 is an integer of 1 to 400, q2 is an integer of 1 to 250, r4 is an integer of 1 to 100, r5 is an integer of 1 to 100, p2+q2+r4+r5 is an integer of 40 to 403; qs1 is an integer of 1 to 85, qs2 is an integer of 1 to 85, qs1+qs2 is an integer of 16 to 86; p3 is an integer of 5 to 440, q3 is an integer of 5 to 250, p3+q3 is an integer of 50 to 445. Individual repeating units within the parentheses with p1 and q1, p2 and q2, and p3 and q3 may be randomly bonded. The fluorooxyalkylene-containing polymer residue has a Mn of 6,000 to 30,000.

In the preparation of the fluoropolyether-containing polymer containing silanol groups or hydrolyzable silyl groups, represented by formula (1), the organosilicon compound containing a di- to hexavalent linear organo(poly)siloxane residue of 2 to 10 silicon atoms or branched or cyclic organo(poly)siloxane residue of 3 to 10 silicon atoms in the molecule and having a SiH group and a silanol or hydrolyzable silyl group is preferably selected from compounds having the general formulae (5), (6), and (Z).

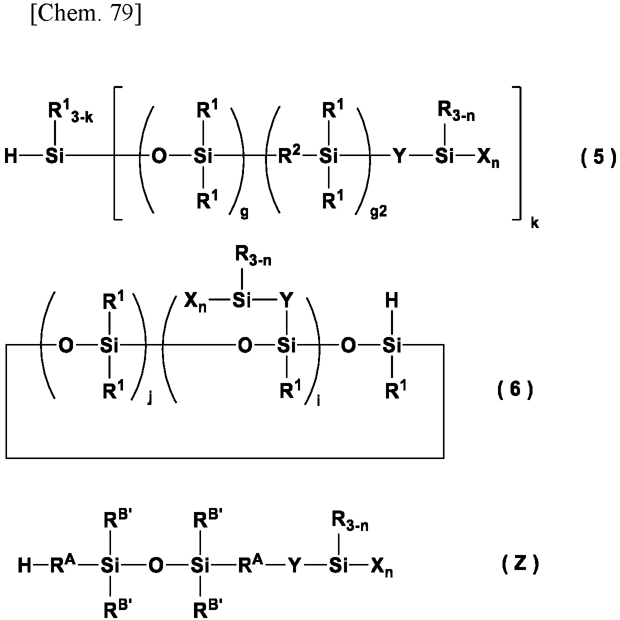

Herein Y, R, X, n, R¹, R², R^{A}, g, g2, j, and k are as defined above, R^{B}' is R¹ or a group having the general formula (W): 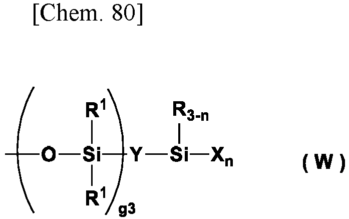 wherein Y, R, X, n, R¹, and g3 are as defined above, at least one R^{B}' is a group having formula (W), i is an integer of 1 to 5, preferably 2 to 4, and i+j is an integer of 2 to 9, preferably 2 to 4.

Examples of the organosilicon compound containing a di- to hexavalent linear organo(poly)siloxane residue of 2 to 10 silicon atoms or branched or cyclic organo(poly)siloxane residue of 3 to 10 silicon atoms in the molecule and having a SiH group and a silanol or hydrolyzable silyl group are shown below.

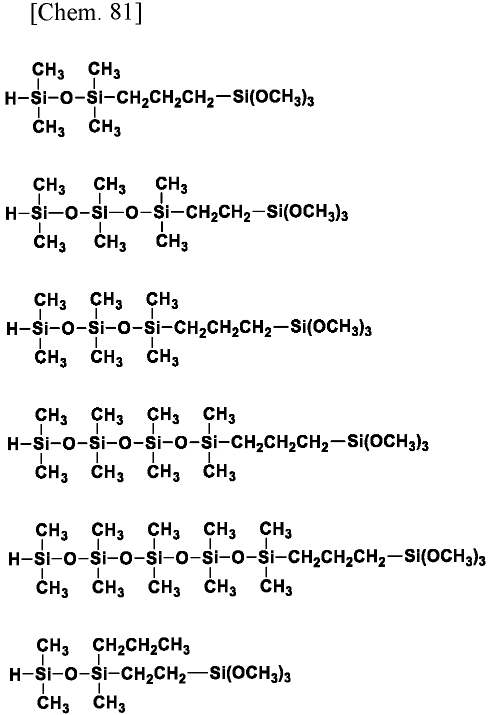

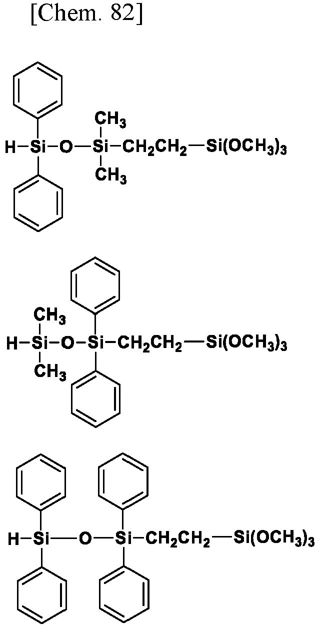

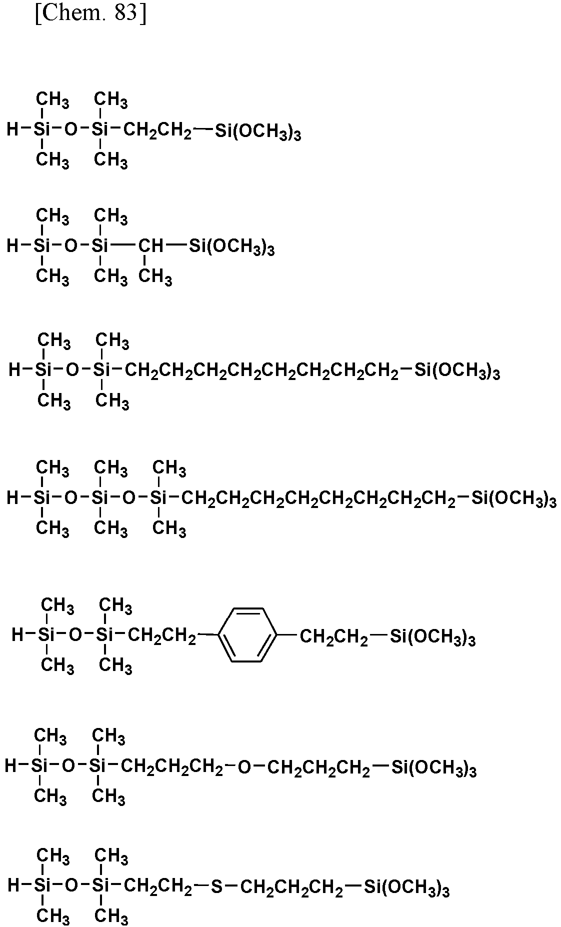

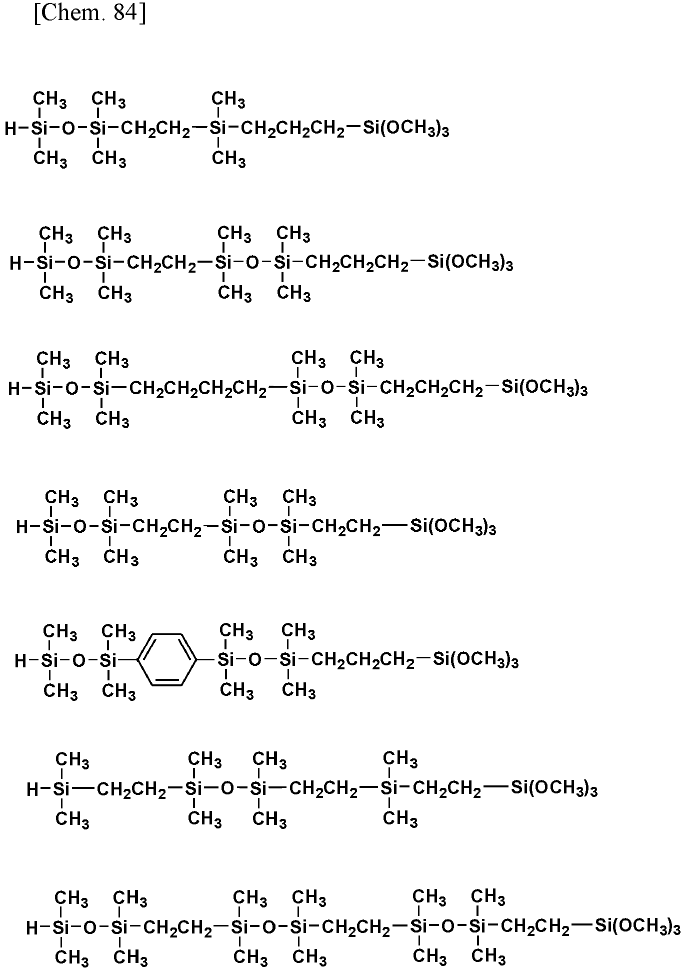

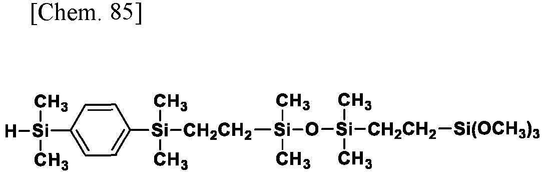

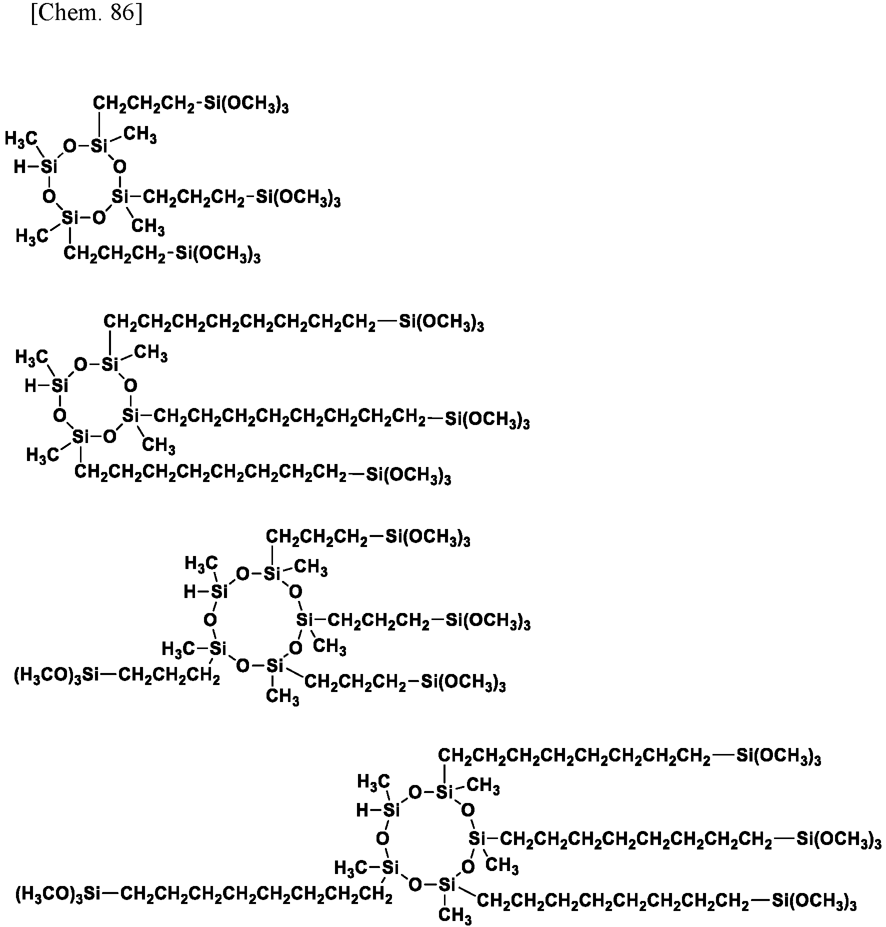

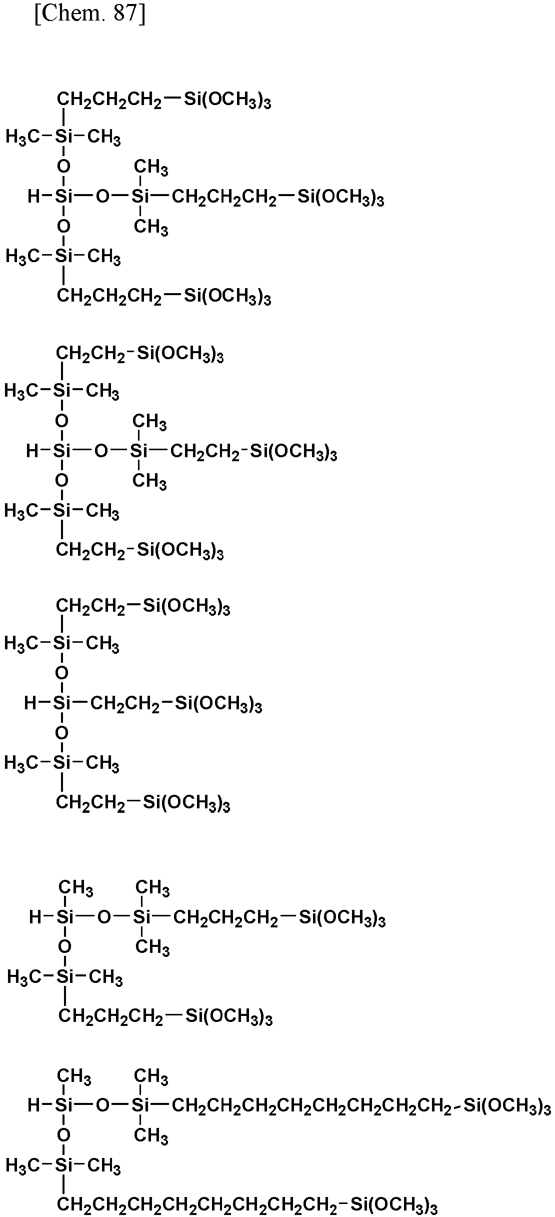

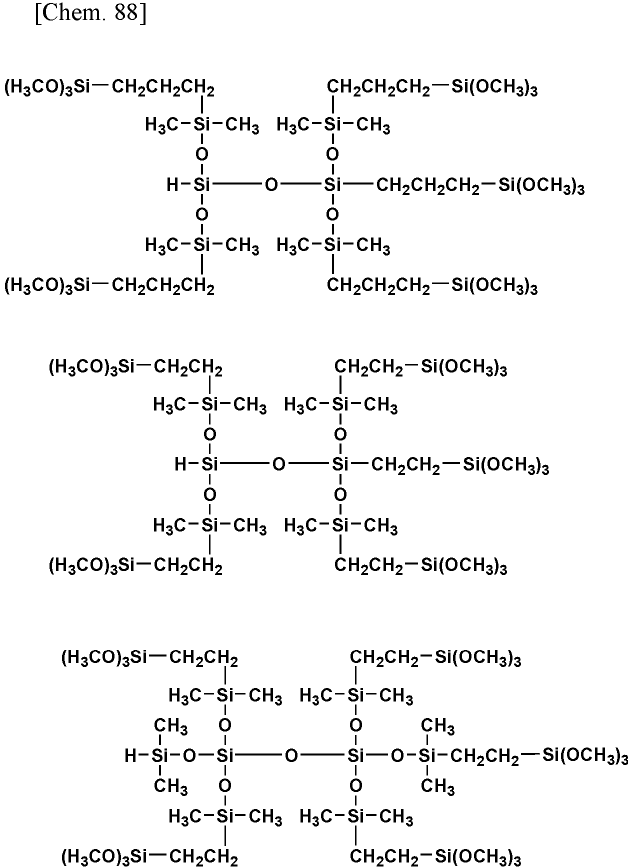

In the method of preparing the fluoropolyether-containing polymer containing silanol groups or hydrolyzable silyl groups, represented by formula (1), including the step of reacting the fluoropolyether-containing polymer having olefin sites (alkenyl groups) at both ends of the molecular chain with the organosilicon compound containing a di- to hexavalent linear organo(poly)siloxane residue of 2 to 10 silicon atoms or branched or cyclic organo(poly)siloxane residue of 3 to 10 silicon atoms and having a SiH group and a silanol or hydrolyzable silyl group, the organosilicon compound is preferably used in such an amount as to provide 1 to 4 equivalents, more preferably 1 to 2.5 equivalents, even more preferably about 1.5 equivalents of SiH groups in the organosilicon compound per equivalent of olefin sites (alkenyl groups) in the fluoropolyether-containing polymer.

When an organosilicon compound having halogen as the hydrolyzable silyl group is used as the organosilicon compound containing a di- to hexavalent linear organo(poly)siloxane residue of 2 to 10 silicon atoms or branched or cyclic organo(poly)siloxane residue of 3 to 10 silicon atoms in the molecule and having a SiH group and a silanol or hydrolyzable silyl group, the substituent (halogen) on the silyl group may be subsequently converted to another hydrolyzable group such as alkoxy group (e.g., methoxy). Examples of the reagent which can be used in converting the substituent (halogen) on the silyl group to another hydrolyzable group include C₁-C₁₀ alcohols such as methanol, ethanol, propanol, isopropanol and butanol.

The amount of the reagent used is preferably 10 to 200 parts by weight, more preferably 40 to 100 parts by weight, even more preferably about 65 parts by weight per 100 parts by weight of the addition reaction product of the fluoropolyether-containing polymer having olefin sites (alkenyl groups) at both ends of the molecular chain with the organosilicon compound containing a di- to hexavalent linear organo(poly)siloxane residue of 2 to 10 silicon atoms or branched or cyclic organo(poly)siloxane residue of 3 to 10 silicon atoms in the molecule and having a SiH group and a silanol or hydrolyzable silyl group (e.g., halogenated silyl or alkoxysilyl group).

As the solvent used in the preparation of the fluoropolyether-containing polymer containing silanol groups or hydrolyzable silyl groups, represented by formula (1), fluorochemical solvents are exemplary. Suitable fluorochemical solvents include 1,3-bis(trifluoromethyl)benzene, trifluoromethylbenzene, methyl nonafluorobutyl ether, methyl nonafluoroisobutyl ether, ethyl nonafluorobutyl ether, ethyl nonafluoroisobutyl ether, hydrofluoroether (HFE) solvents (tradename Novec series by 3M) such as 1,1,1,2,3,4,4,5,5,5-decafluoro-3-methoxy-2-(trifluoromethyl)pentane, and perfluoro solvents composed of completely fluorinated compounds (tradename Fluorinert series by 3M).

The amount of the solvent used is 10 to 300 parts by weight, preferably 50 to 200 parts by weight, more preferably about 100 parts by weight per 100 parts by weight of the fluoropolyether-containing polymer having olefin sites (alkenyl groups) at both ends of the molecular chain.

Examples of the hydrosilation catalyst used in the preparation of the fluoropolyether-containing polymer containing silanol groups or hydrolyzable silyl groups, represented by formula (1), include platinum group metal based catalysts such as platinum black, chloroplatinic acid, alcohol-modified chloroplatinic acid, complexes of chloroplatinic acid with olefin, aldehyde, vinyl siloxane, and acetylene alcohol, tetrakis(triphenylphosphine)palladium, and chlorotris(triphenylphosphine)rhodium. Inter alia, platinum compounds such as vinyl siloxane coordination compounds are preferred.

The hydrosilation catalyst is preferably used in an amount to provide 0.01 to 100 ppm, more preferably 0.1 to 50 ppm of transition metal based on the weight of the fluoropolyether-containing polymer having olefin sites (alkenyl groups) at both ends of the molecular chain.

As another method for preparing the fluoropolyether-containing polymer containing silanol groups or hydrolyzable silyl groups, represented by formula (1), the following method is exemplary.

The method involves the steps of dissolving a fluoropolyether-containing polymer containing a di- to hexavalent linear organo(poly)siloxane residue of 2 to 10 silicon atoms or branched or cyclic organo(poly)siloxane residue of 3 to 10 silicon atoms in the molecule and having SiH groups at both ends of the molecular chain in a solvent such as fluorochemical solvent (e.g., 1,3-bis(trifluoromethyl)benzene), mixing an organosilicon compound having olefin sites (alkenyl groups) and silanol or hydrolyzable silyl groups (e.g., halogenated silyl or alkoxysilyl groups), and aging the mixture in the presence of a toluene solution of a hydrosilation reaction catalyst such as chloroplatinic acid/vinylsiloxane complex, at a temperature of 40 to 120°C, preferably 60 to 100°C, more preferably about 80°C, for 1 to 72 hours, preferably 20 to 36 hours, more preferably about 24 hours. It is noted that when an organosilicon compound having halogen as the hydrolyzable silyl group is used as the organosilicon compound having olefin sites (alkenyl groups) and silanol or hydrolyzable silyl groups (e.g., halogenated silyl or alkoxysilyl groups), the substituent (i.e., halogen) on the silyl group may be subsequently converted to another hydrolyzable group, for example, alkoxy group (e.g., methoxy).

In the other method for preparing the fluoropolyether-containing polymer containing silanol groups or hydrolyzable silyl groups, represented by formula (1), the fluoropolyether-containing polymer containing a di- to hexavalent linear organo(poly)siloxane residue of 2 to 10 silicon atoms or branched or cyclic organo(poly)siloxane residue of 3 to 10 silicon atoms and having SiH groups at both ends of the molecular chain is exemplified by a fluoropolyether-containing polymer having the general formula (7).

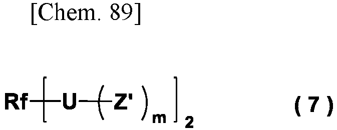

Herein Rf, U and m are as defined above. Z' is independently a monovalent linear organo(poly)siloxane residue of 2 to 10 silicon atoms or branched or cyclic organo(poly)siloxane residue of 3 to 10 silicon atoms, having a SiH group.

In formula (7), Z' is independently a monovalent linear organo(poly)siloxane residue of 2 to 10 silicon atoms or branched or cyclic organo(poly)siloxane residue of 3 to 10 silicon atoms, having a SiH group. Examples of the monovalent organo(poly)siloxane residue include those of the following formulae.

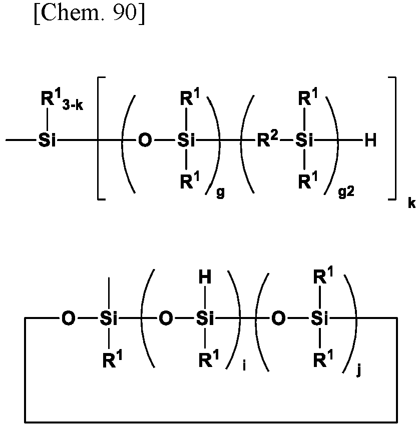

Herein R¹, R², g, g2, k, i, j, and i+j are as defined above, and individual repeating units within the parentheses may be randomly bonded.

Preferred examples of Z' are shown below.

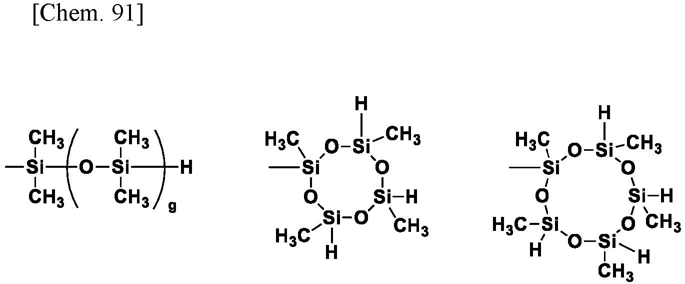

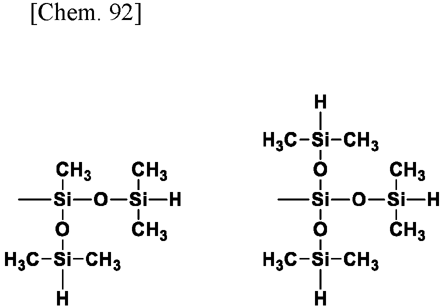

Herein g is as defined above.

Examples of the fluoropolyether-containing polymer containing a di- to hexavalent linear organo(poly)siloxane residue of 2 to 10 silicon atoms or branched or cyclic organo(poly)siloxane residue of 3 to 10 silicon atoms in the molecule and having SiH groups at both ends of the molecular chain, represented by formula (7), include the following.

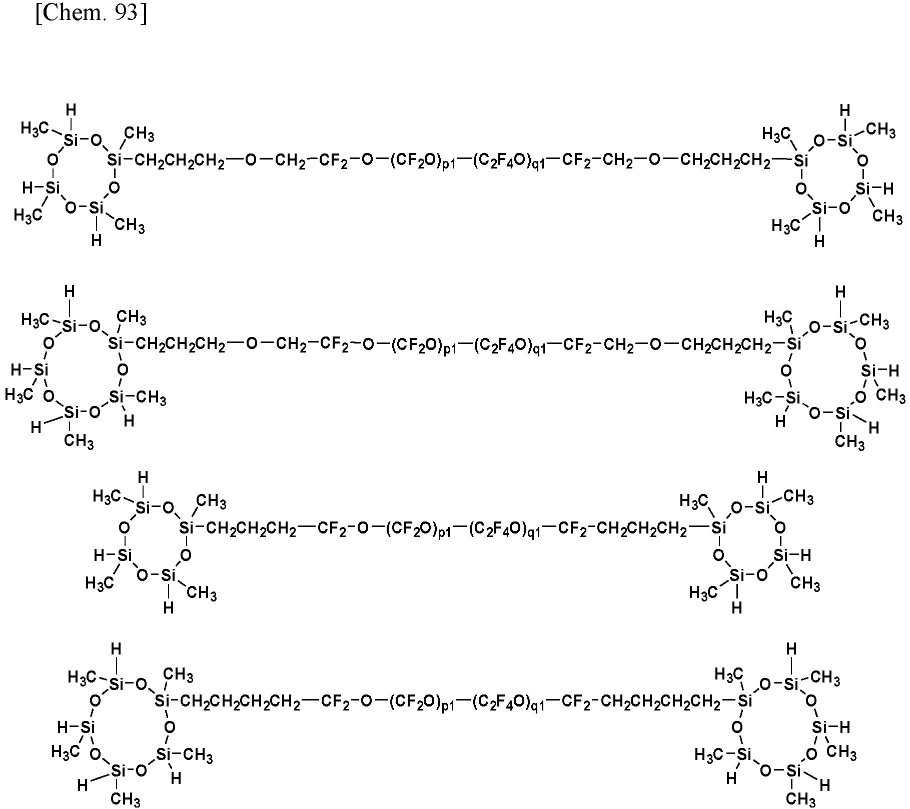

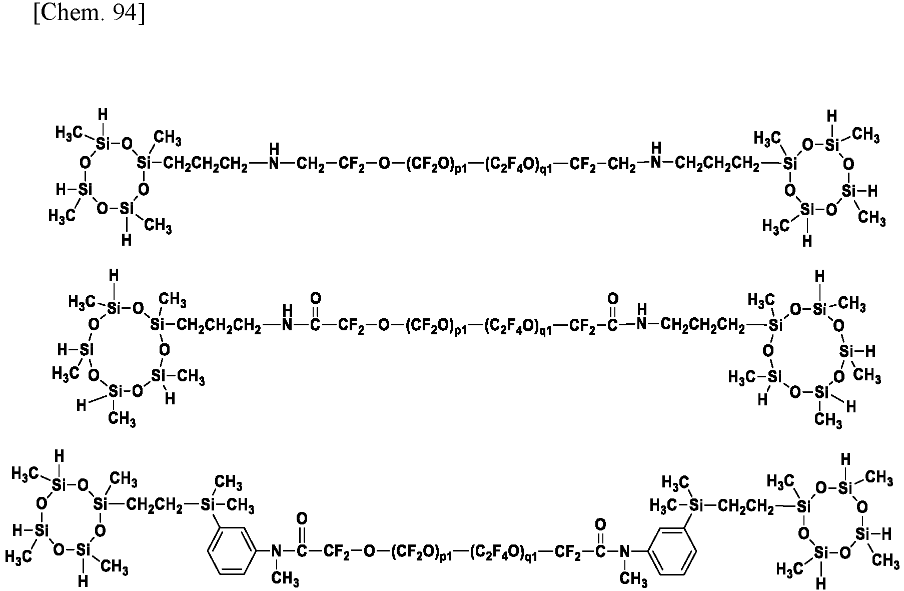

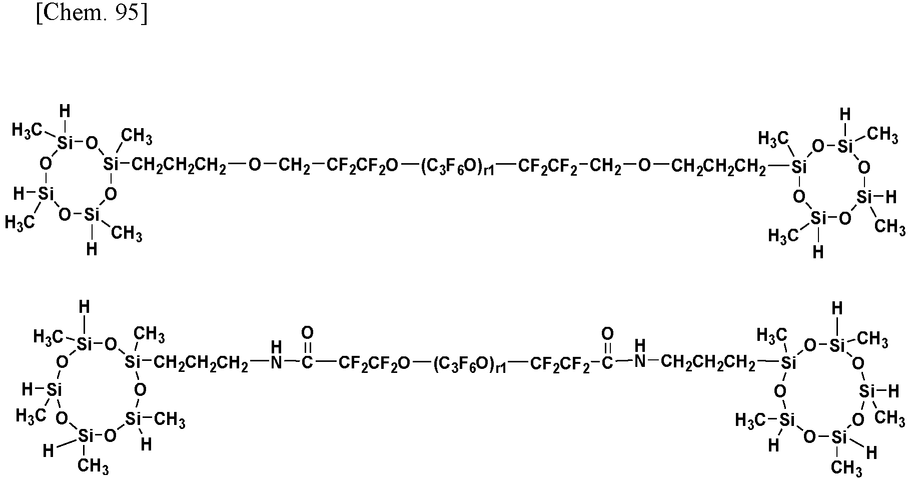

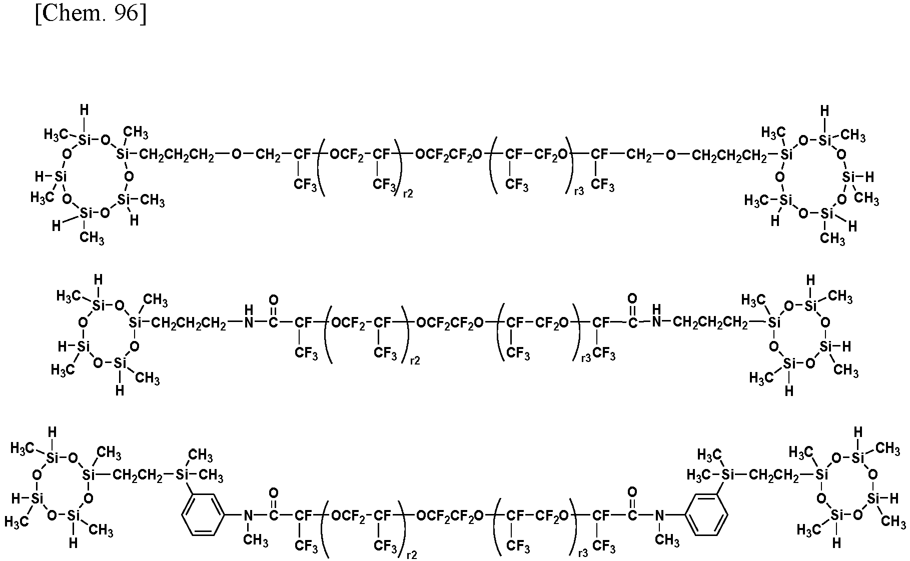

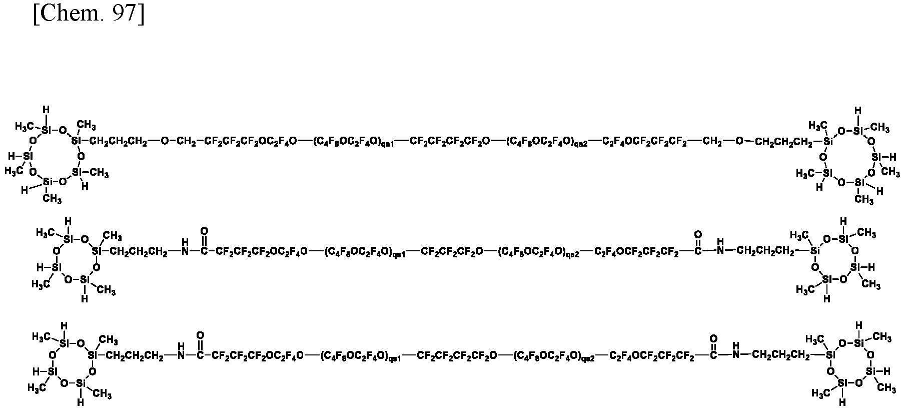

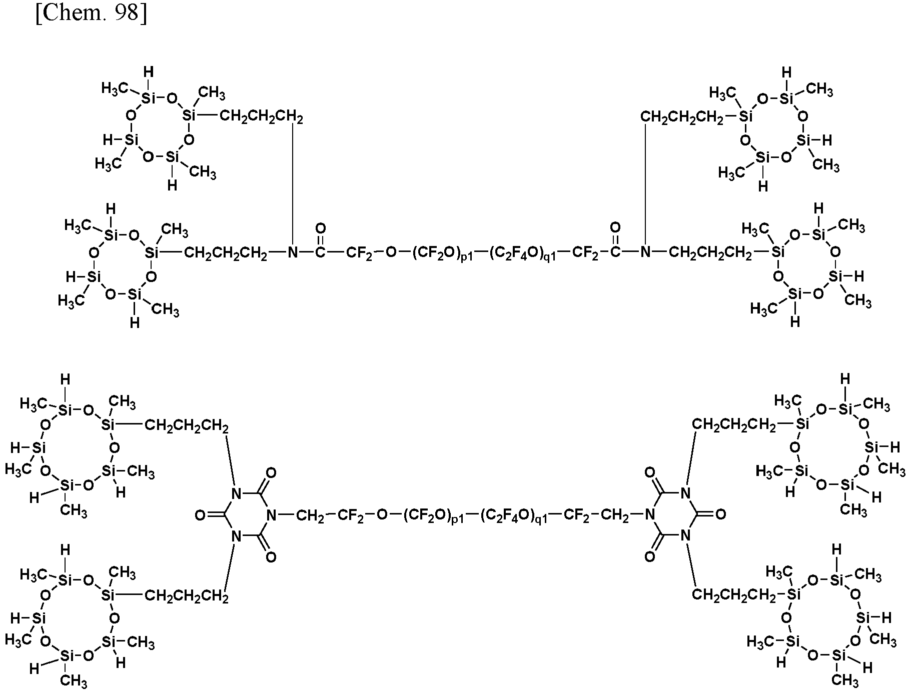

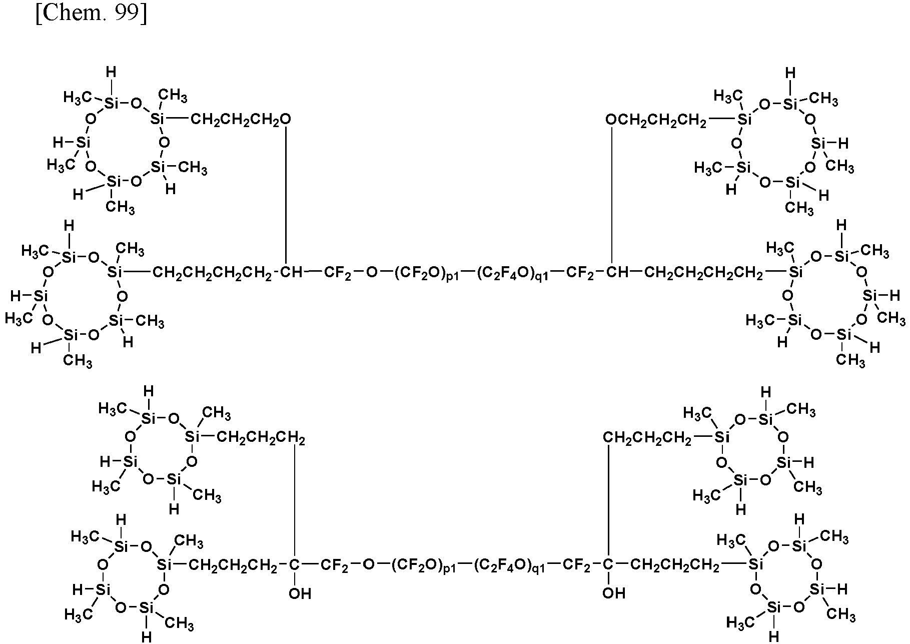

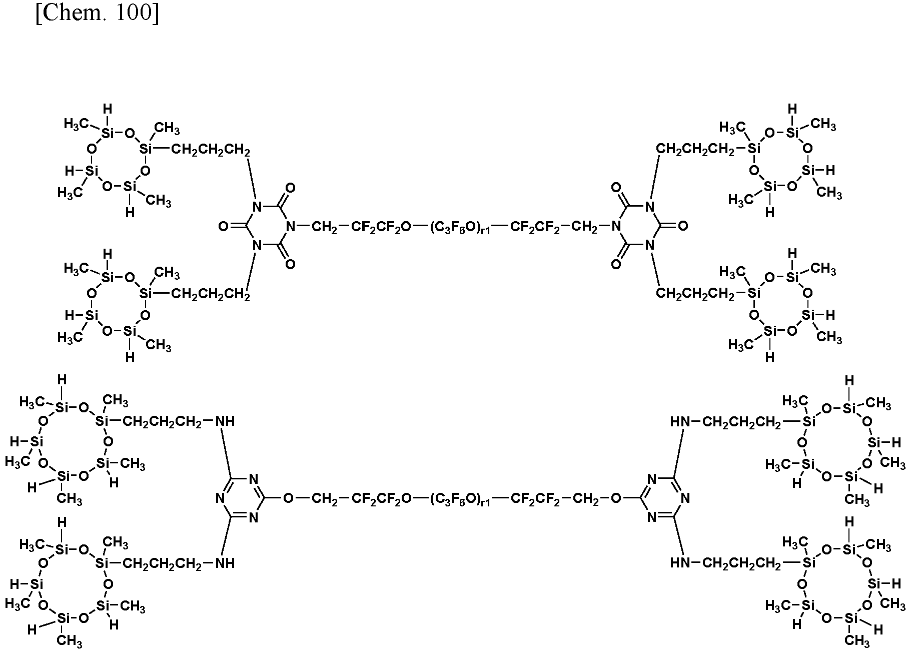

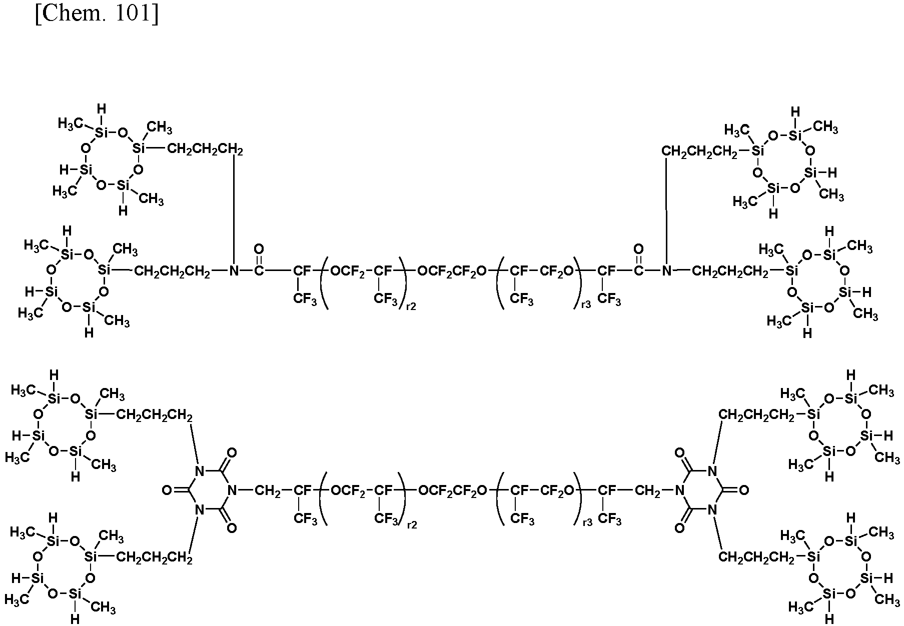

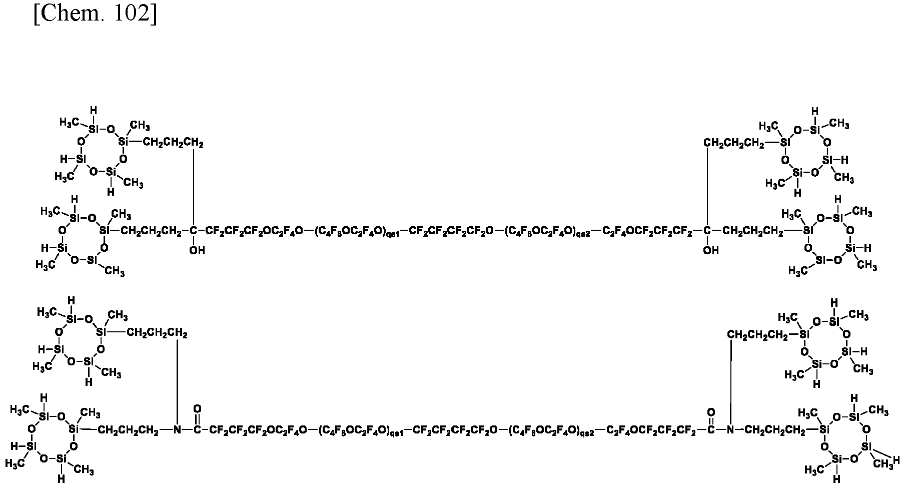

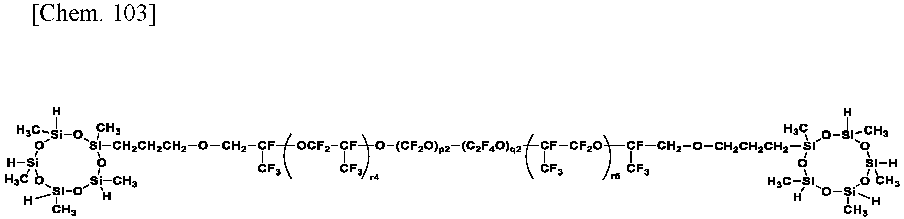

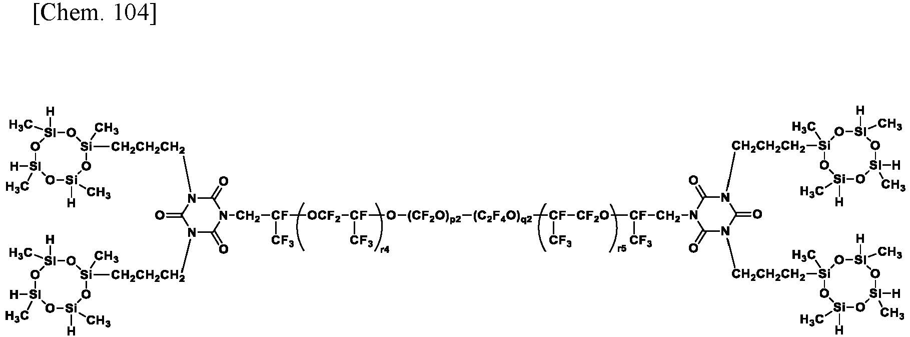

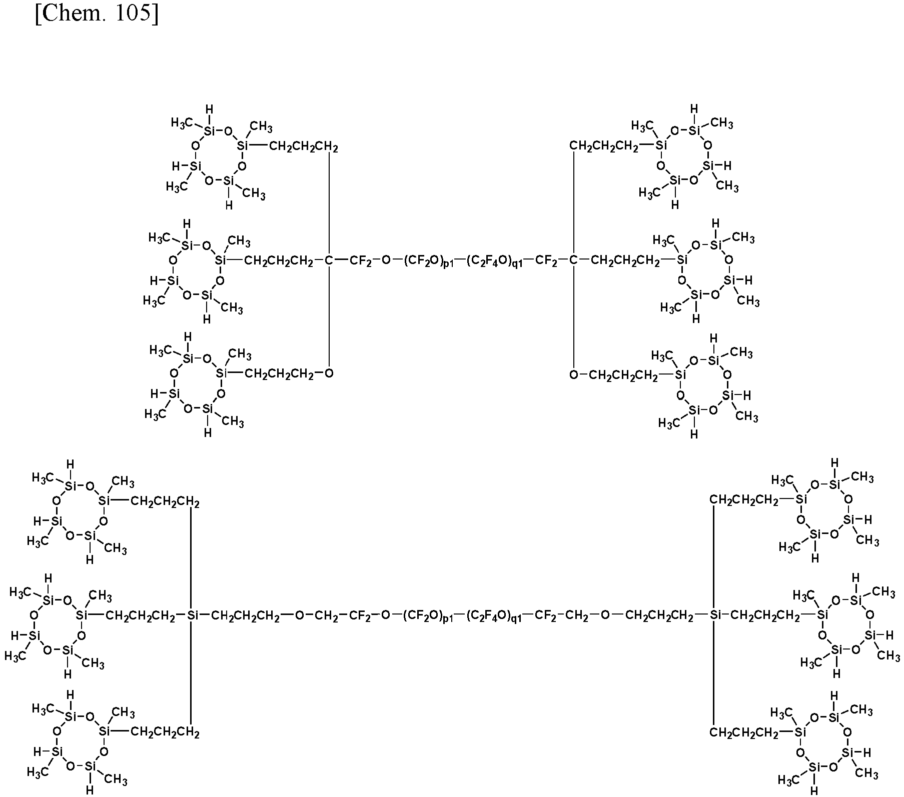

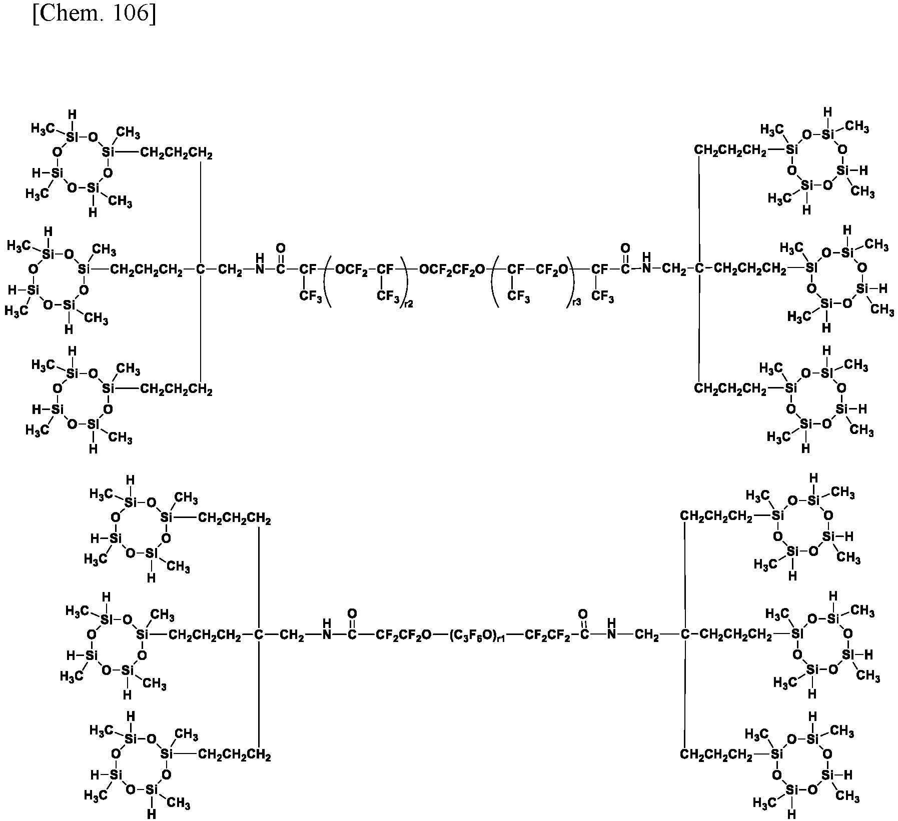

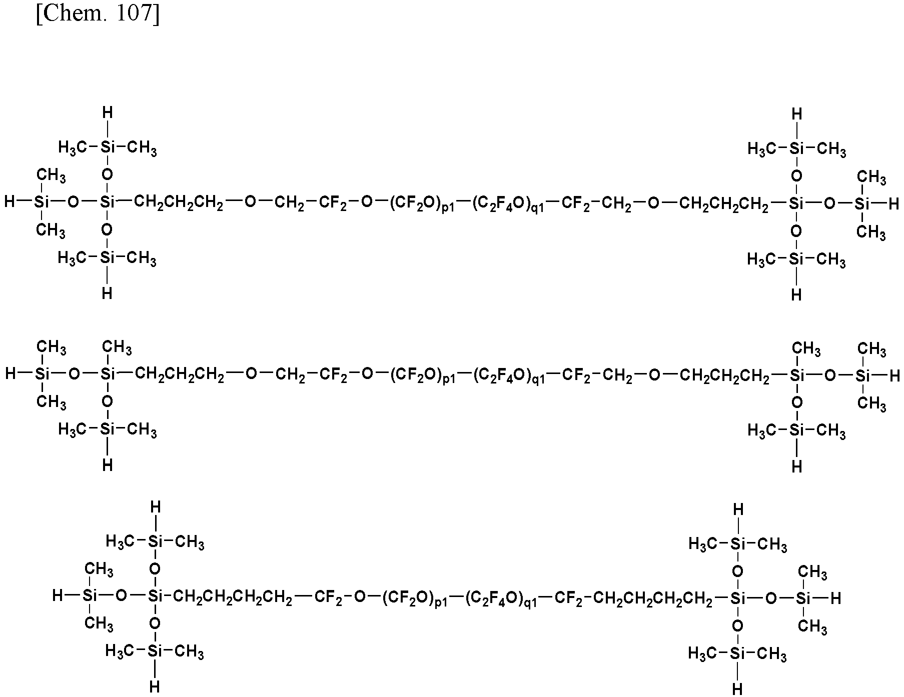

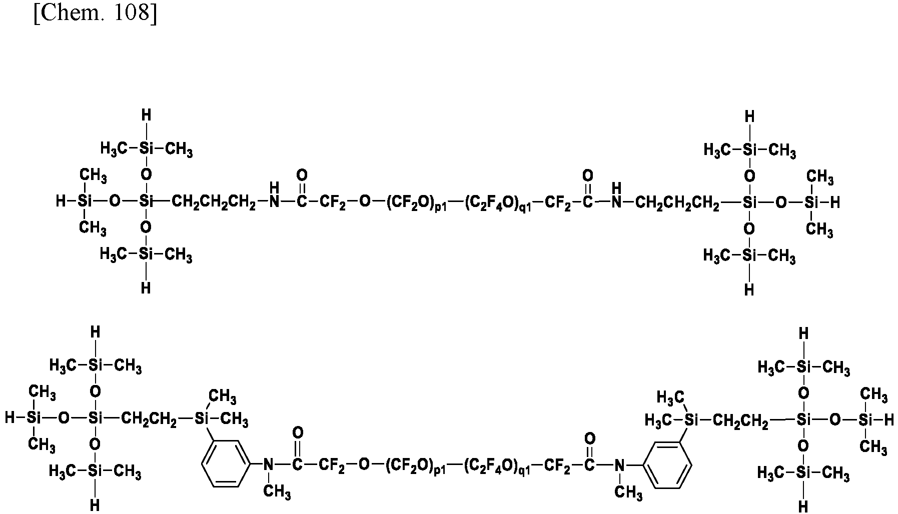

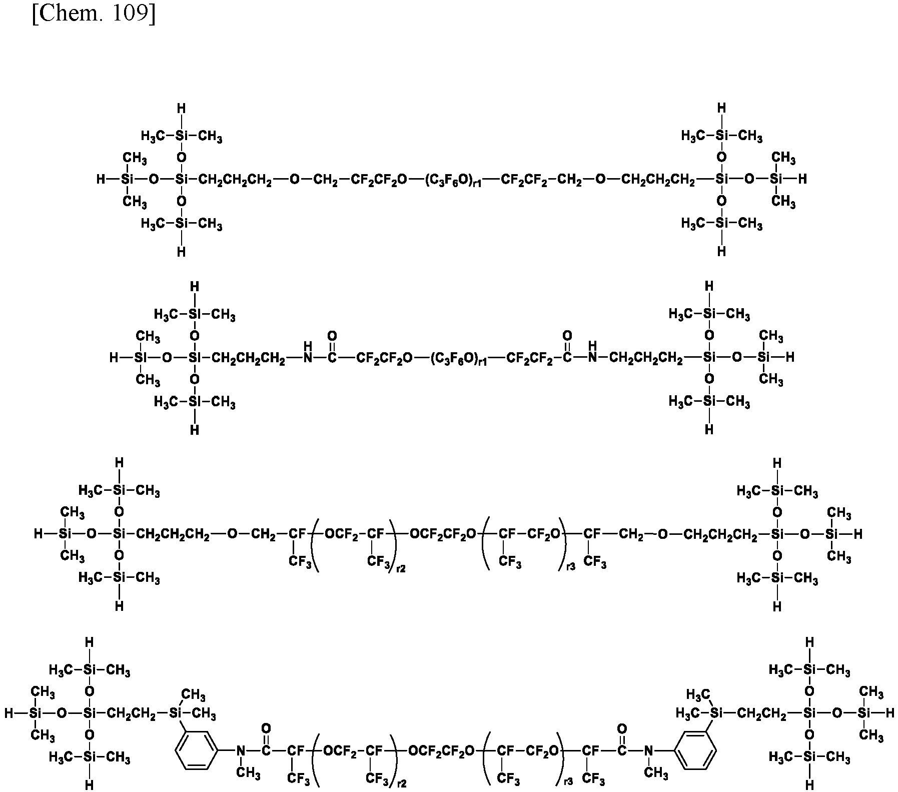

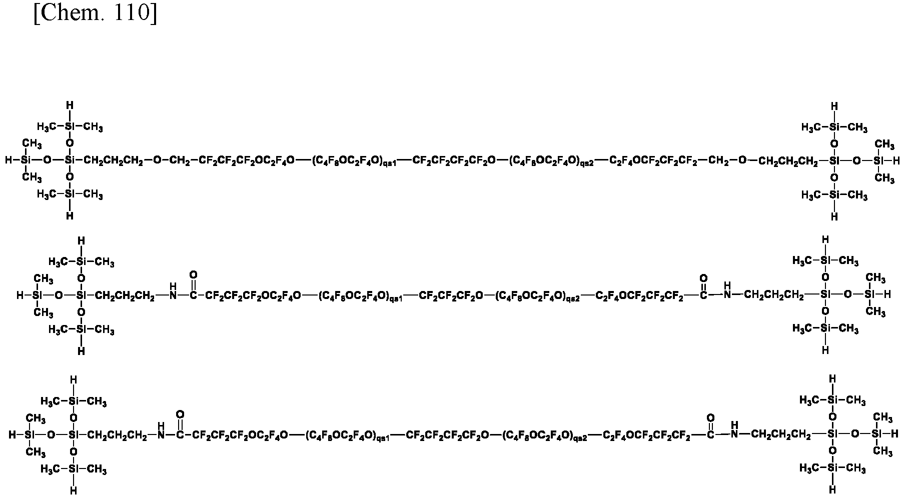

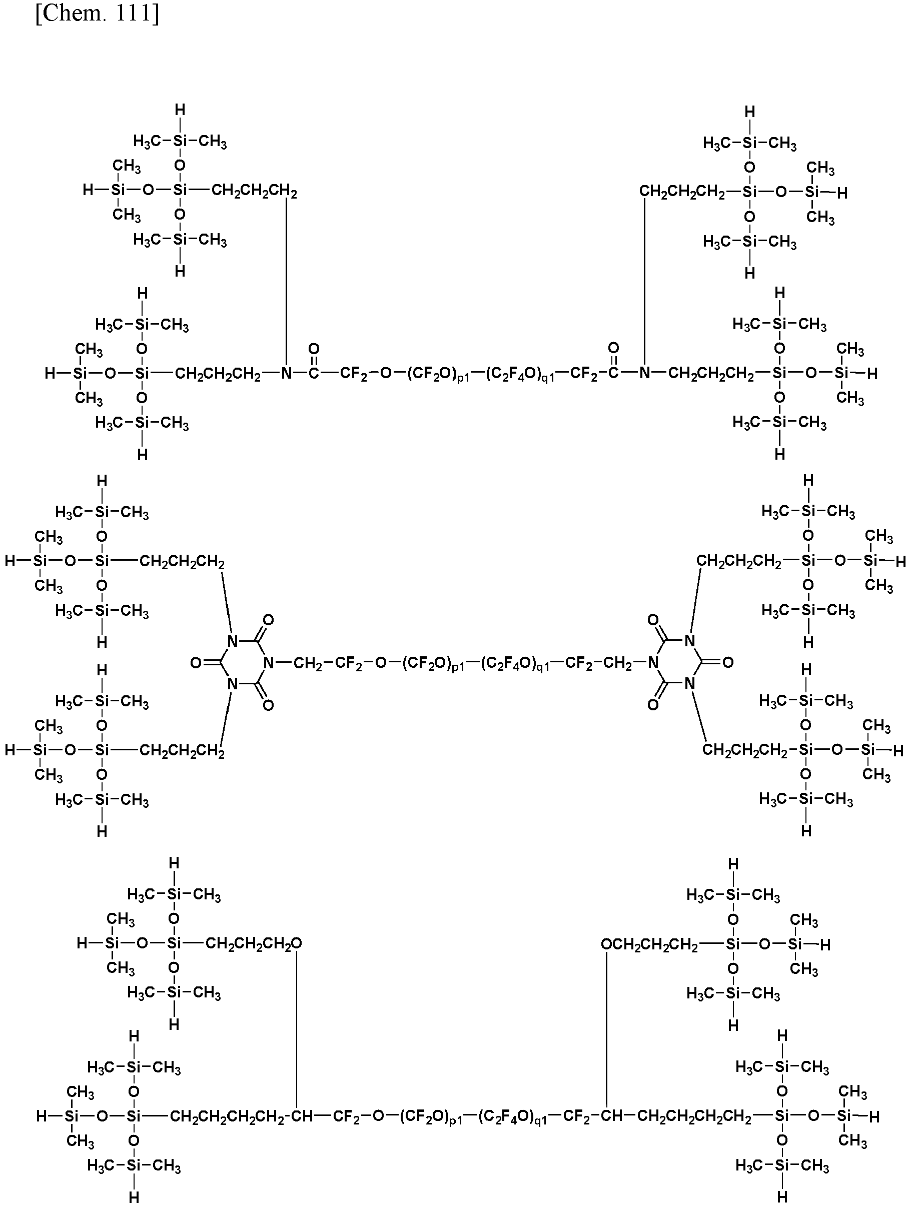

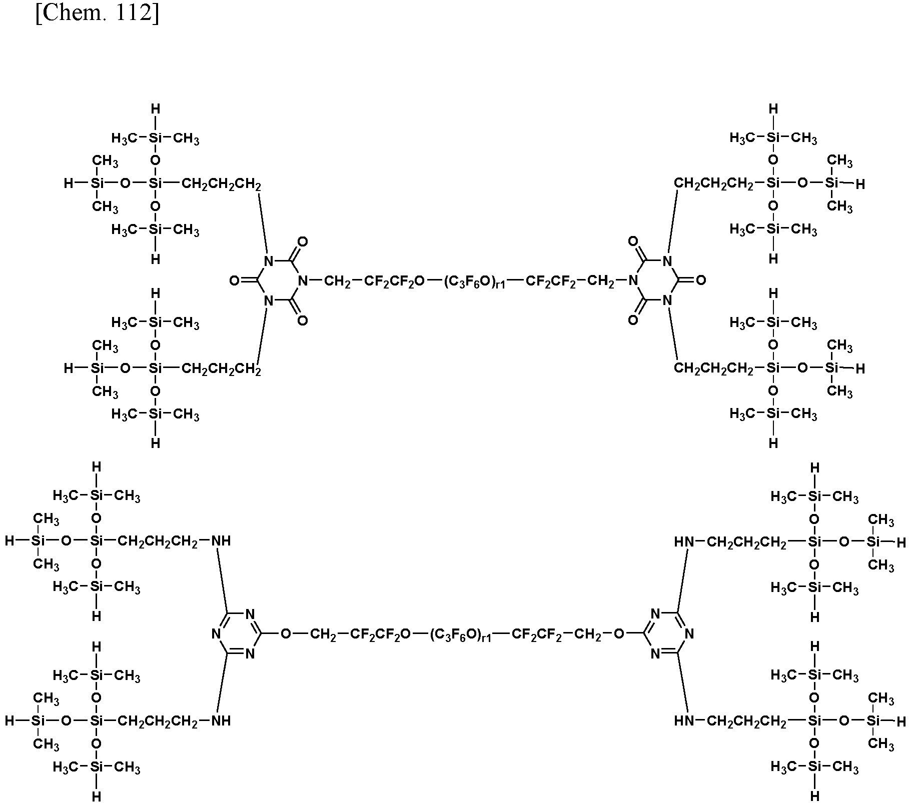

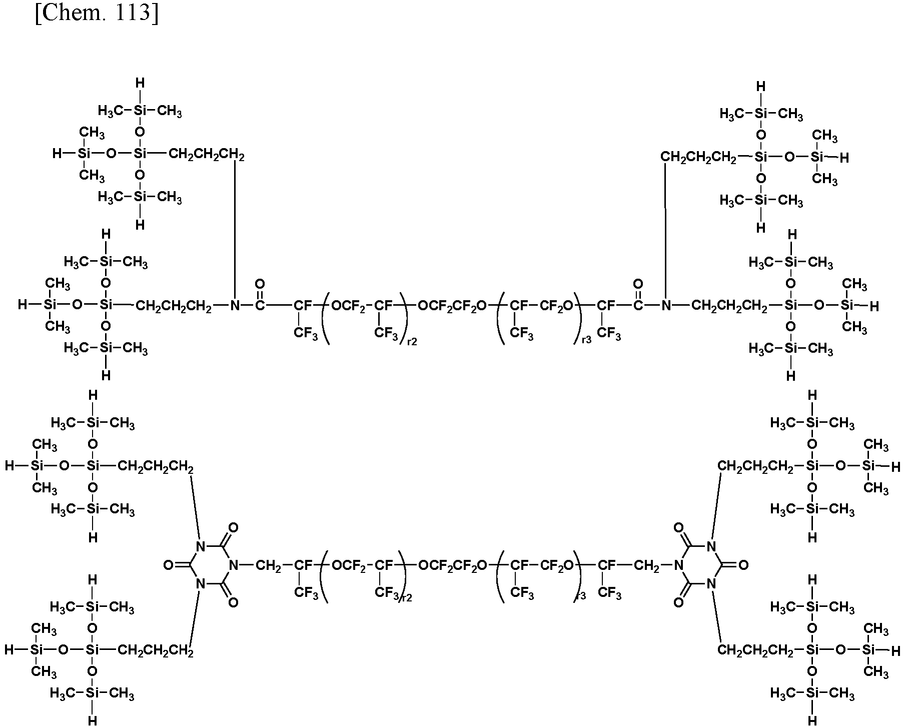

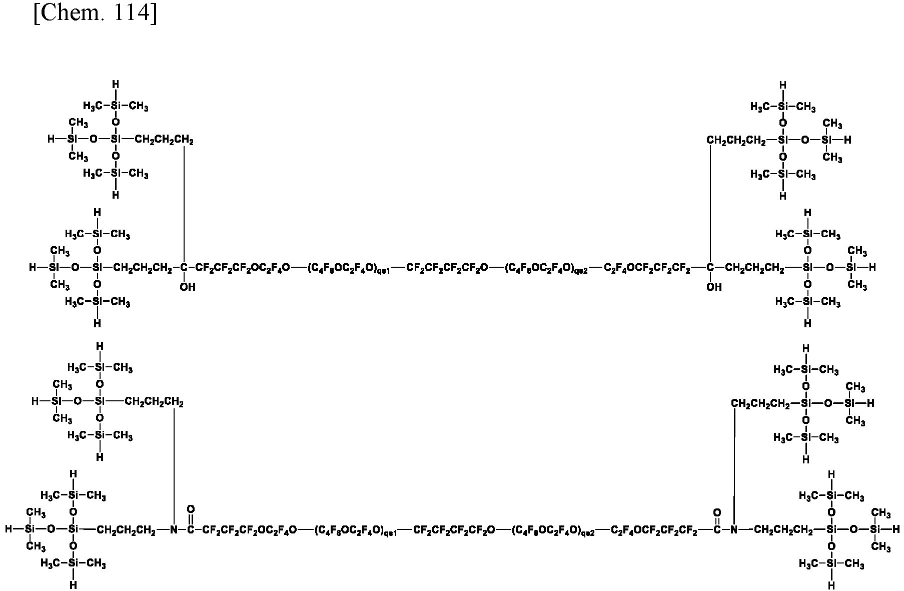

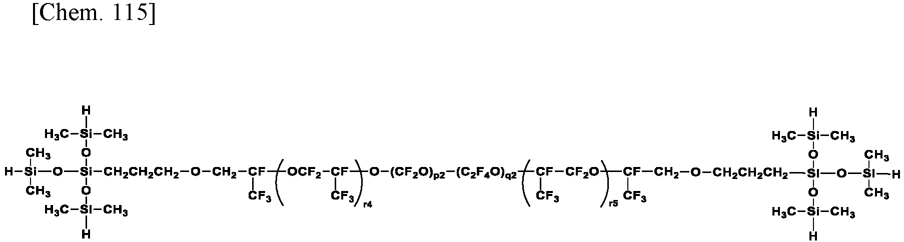

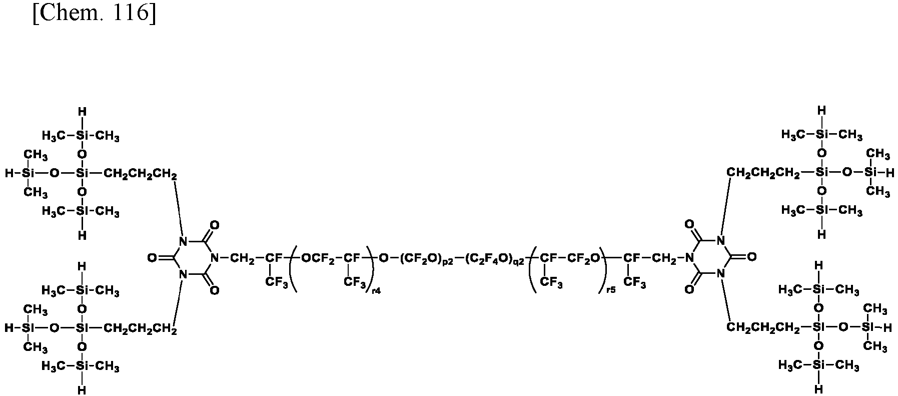

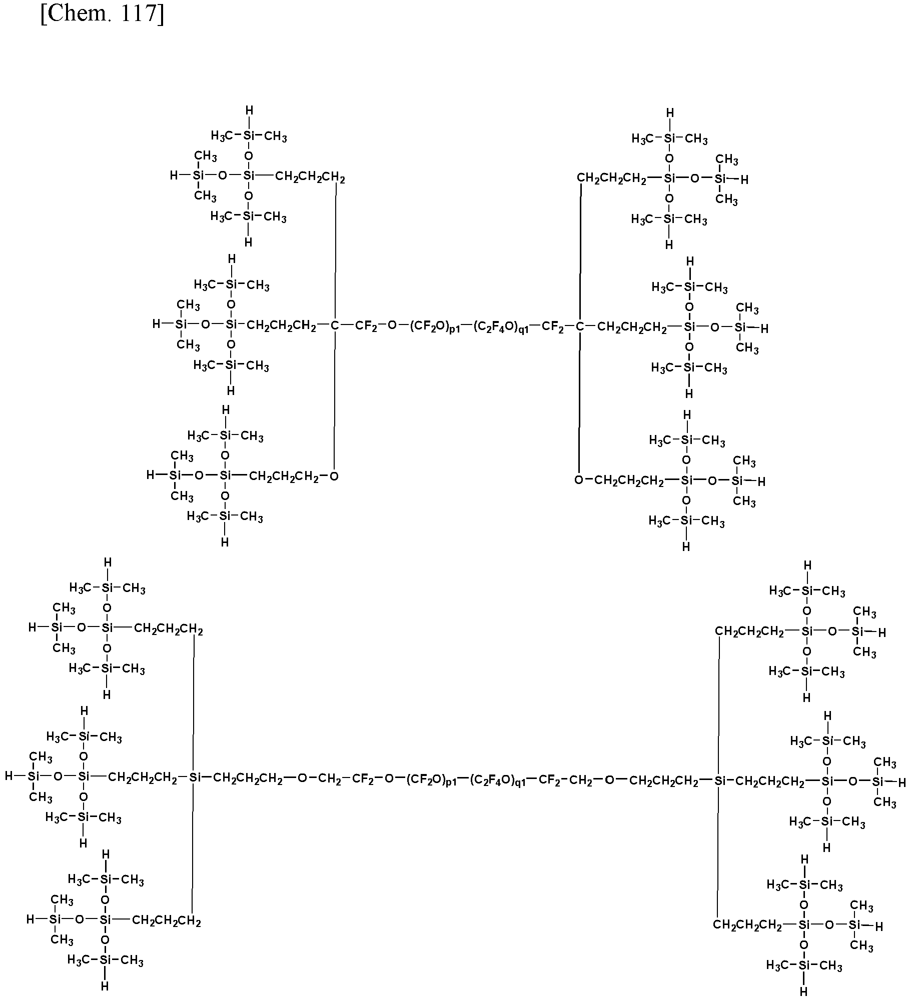

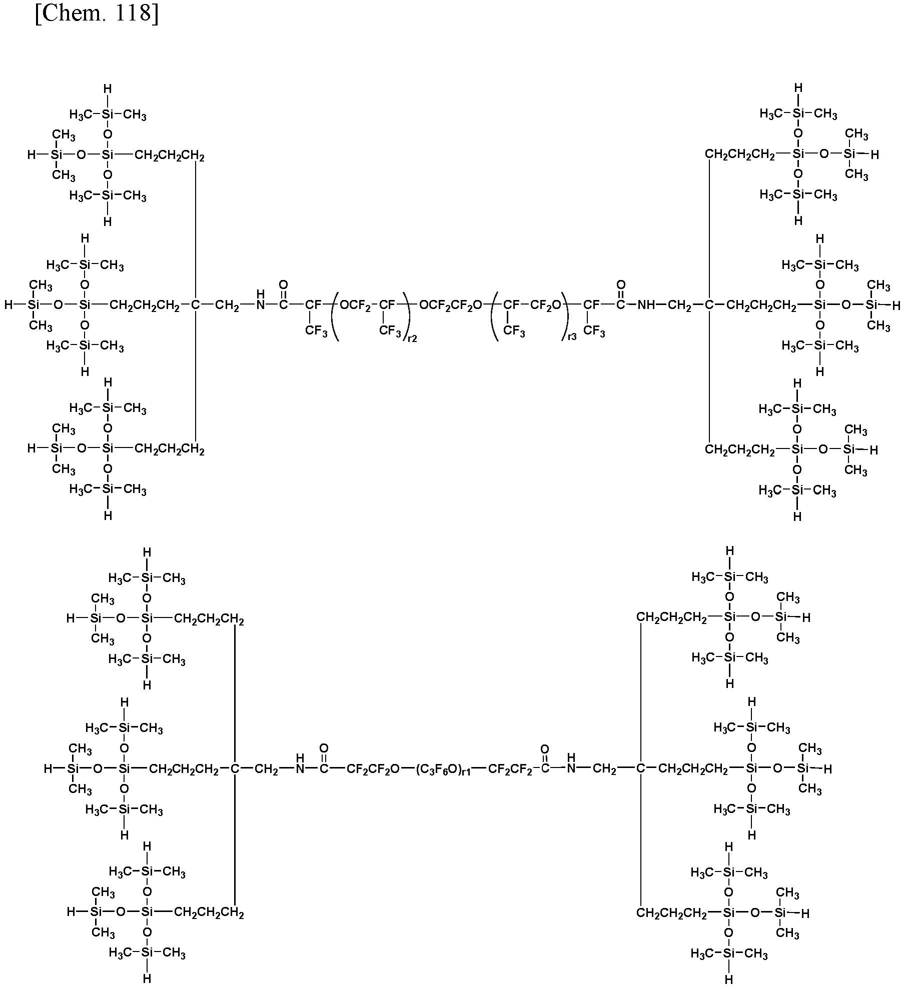

Herein p1 is an integer of 5 to 440, q1 is an integer of 5 to 250, p1+q1 is an integer of 50 to 450, r1 is an integer of 35 to 180, r2 is an integer of 1 to 100, r3 is an integer of 1 to 100, r2+r3 is an integer of 35 to 180, p2 is an integer of 1 to 400, q2 is an integer of 1 to 250, r4 is an integer of 1 to 100, r5 is an integer of 1 to 100, p2+q2+r4+r5 is an integer of 40 to 403, qs1 is an integer of 1 to 85, qs2 is an integer of 1 to 85, qs1+qs2 is an integer of 16 to 86. Individual repeating units within the parentheses with p1 and q1, and p2 and q2 may be randomly bonded. The fluorooxyalkylene-containing polymer residue has a Mn of 6,000 to 30,000.

In the other method for preparing the fluoropolyether-containing polymer containing silanol groups or hydrolyzable silyl groups, represented by formula (1), the organosilicon compound having olefin sites and silanol or hydrolyzable silyl groups is preferably a compound having the general formula (8).

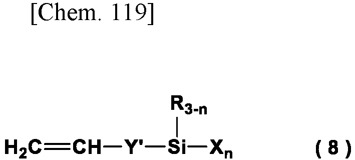

Herein R, X and n are as defined above. Y' is independently a single bond or divalent organic group.

In formula (8), Y' is independently a single bond or divalent organic group. Examples of the divalent organic group include C₁-C₁₈ alkylene groups which may contain one or more atoms or groups selected from oxygen, sulfur and C₆-C₈ arylene groups.

Examples of the divalent organic group Y' include the following groups. Preferably the valence bond on the left is attached to carbon and the valence bond on the right is attached to silicon.

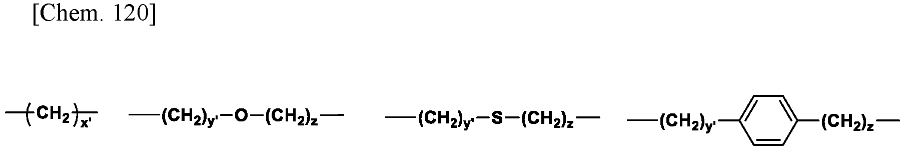

Herein x' is an integer of 1 to 18, preferably 1 to 8, y' is an integer of 0 to 8, preferably 0 to 3, z is an integer of 1 to 10, preferably 1 to 5, and y'+z is an integer of 1 to 18, preferably 1 to 8.

Examples of the organosilicon compound having olefin sites and silanol or hydrolyzable silyl groups include the following.

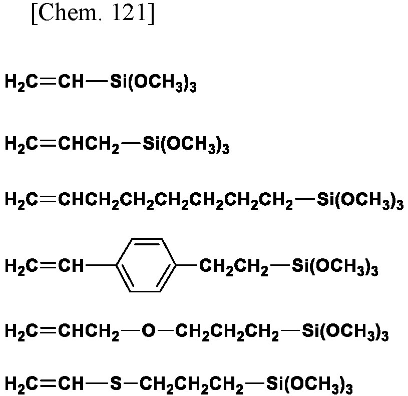

**In** the other method for preparing the fluoropolyether-containing polymer containing silanol groups or hydrolyzable silyl groups, represented by formula (1), including the step of reacting the fluoropolyether-containing polymer containing a di- to hexavalent linear organo(poly)siloxane residue of 2 to 10 silicon atoms or branched or cyclic organo(poly)siloxane residue of 3 to 10 silicon atoms in the molecule and having SiH groups at both ends of the molecular chain with the organosilicon compound having olefin sites and silanol or hydrolyzable silyl groups, the organosilicon compound is preferably used in such an amount as to provide 1 to 4 equivalents, more preferably 1 to 2.5 equivalents, even more preferably about 1.5 equivalents of olefin sites in the organosilicon compound per equivalent of SiH groups in the fluoropolyether-containing polymer.

It is noted that when an organosilicon compound having halogen as the hydrolyzable silyl group is used as the organosilicon compound having olefin sites and silanol or hydrolyzable silyl groups, the substituent (i.e., halogen) on the silyl group may be subsequently converted to another hydrolyzable group, for example, alkoxy group (e.g., methoxy). Examples of the reagent which can be used in converting the substituent (halogen) on the silyl group to another hydrolyzable group include C₁-C₁₀ alcohols such as methanol, ethanol, propanol, isopropanol and butanol.

The amount of the reagent used is preferably 10 to 200 parts by weight, more preferably 40 to 100 parts by weight, even more preferably about 65 parts by weight per 100 parts by weight of the addition reaction product of the fluoropolyether-containing polymer containing a di- to hexavalent linear organo(poly)siloxane residue of 2 to 10 silicon atoms or branched or cyclic organo(poly)siloxane residue of 3 to 10 silicon atoms in the molecule and having SiH groups at both ends of the molecular chain with the organosilicon compound having olefin sites and silanol or hydrolyzable silyl groups.

As the solvent used in the other method for the preparation of the fluoropolyether-containing polymer containing silanol groups or hydrolyzable silyl groups, represented by formula (1), fluorochemical solvents are exemplary. Suitable fluorochemical solvents include 1,3-bis(trifluoromethyl)benzene, trifluoromethylbenzene, methyl nonafluorobutyl ether, methyl nonafluoroisobutyl ether, ethyl nonafluorobutyl ether, ethyl nonafluoroisobutyl ether, hydrofluoroether (HFE) solvents (tradename Novec series by 3M) such as 1,1,1,2,3,4,4,5,5,5-decafluoro-3-methoxy-2-(trifluoromethyl)pentane, and perfluoro solvents composed of completely fluorinated compounds (tradename Fluorinert series by 3M).

The amount of the solvent used is 10 to 300 parts by weight, preferably 50 to 200 parts by weight, more preferably about 100 parts by weight per 100 parts by weight of the fluoropolyether-containing polymer containing a di- to hexavalent linear organo(poly)siloxane residue of 2 to 10 silicon atoms or branched or cyclic organo(poly)siloxane residue of 3 to 10 silicon atoms in the molecule and having SiH groups at both ends of the molecular chain.

Examples of the hydrosilation catalyst used in the preparation of the fluoropolyether-containing polymer containing silanol groups or hydrolyzable silyl groups, represented by formula (1), include platinum group metal based catalysts such as platinum black, chloroplatinic acid, alcohol-modified chloroplatinic acid, complexes of chloroplatinic acid with olefin, aldehyde, vinyl siloxane, and acetylene alcohol, tetrakis(triphenylphosphine)palladium, and chlorotris(triphenylphosphine)rhodium. Inter alia, platinum compounds such as vinyl siloxane coordination compounds are preferred.

The hydrosilation catalyst is preferably used in an amount to provide 0.01 to 100 ppm, more preferably 0.1 to 50 ppm of transition metal based on the weight of the fluoropolyether-containing polymer containing a di- to hexavalent linear organo(poly)siloxane residue of 2 to 10 silicon atoms or branched or cyclic organo(poly)siloxane residue of 3 to 10 silicon atoms in the molecule and having SiH groups at both ends of the molecular chain.

Exemplary of the fluoropolyether-containing polymer containing silanol groups or hydrolyzable silyl groups, represented by formula (1) is a compound having the following formula: 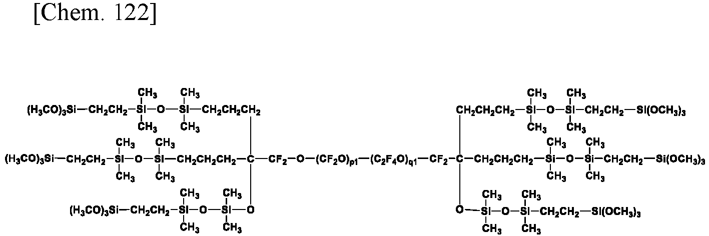
wherein p1 and q1 are as defined below. This compound may be prepared by forming a compound having the following formula: 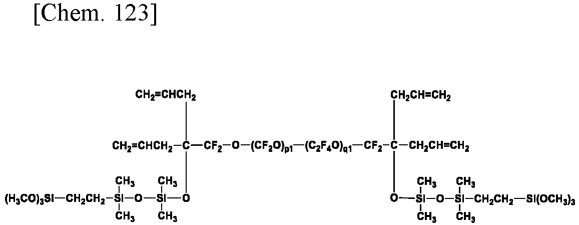
wherein p1 and q1 are as defined above through reaction according to the teaching of JP 6531833, paragraphs [0038]-[0044], and reacting the compound with a compound having the following formula: 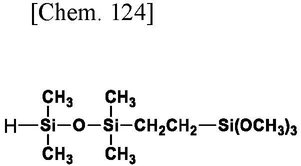
according to a similar procedure.

Examples of the fluoropolyether-containing polymer containing silanol groups or hydrolyzable silyl groups, represented by formula (1) include the structures shown below. A series of fluoropolyether-containing polymers containing hydrolyzable silyl groups are obtained by changing the combination of Rf, U, Z, Y, X, R, n and m in formula (1). It is noted that in the formulae shown below, p1 is an integer of 5 to 440, q1 is an integer of 5 to 250, p1+q1 is an integer of 50 to 450, r1 is an integer of 35 to 180, r2 is an integer of 1 to 100, r3 is an integer of 1 to 100, r2+r3 is an integer of 35 to 180, p2 is an integer of 1 to 400, q2 is an integer of 1 to 250, r4 is an integer of 1 to 100, r5 is an integer of 1 to 100, p2+q2+r4+r5 is an integer of 40 to 403, p3 is an integer of 5 to 440, q3 is an integer of 5 to 250, p3+q3 is an integer of 50 to 445, qs1 is an integer of 1 to 85, qs2 is an integer of 1 to 85, qs1+qs2 is an integer of 16 to 86. Individual repeating units within the parentheses with p1 and q1, p2 and q2, and p3 and q3 may be randomly bonded. The fluorooxyalkylene-containing polymer residue has a Mn of 6,000 to 30,000.

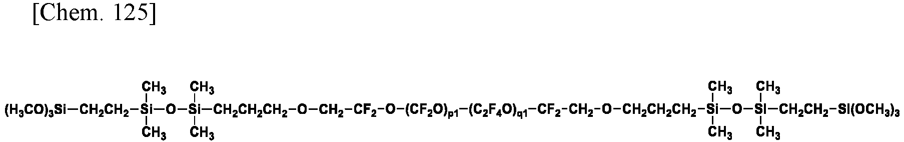

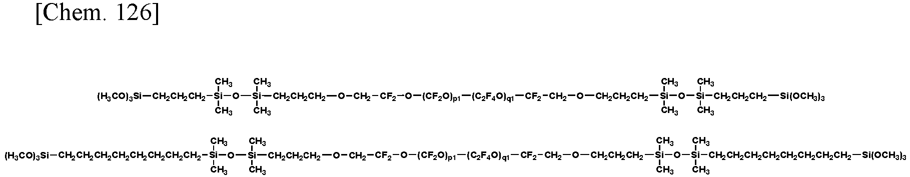

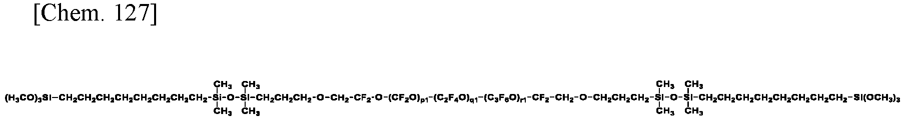

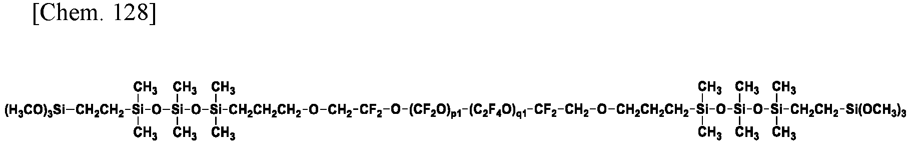

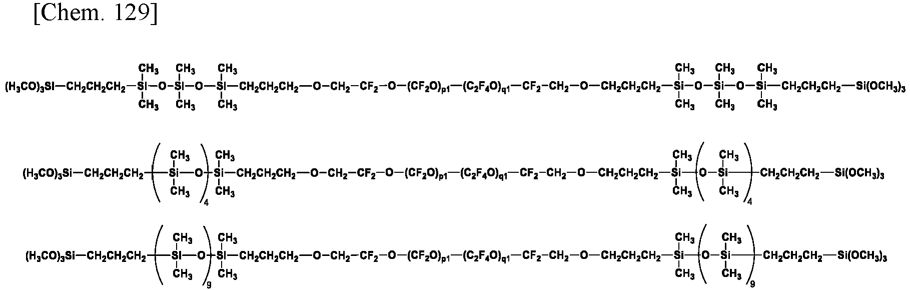

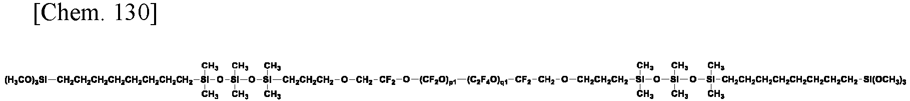

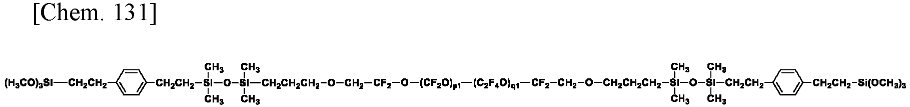

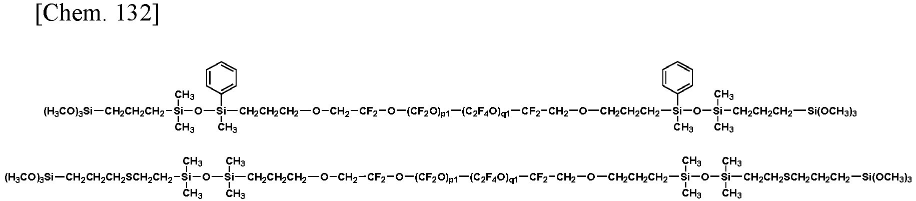

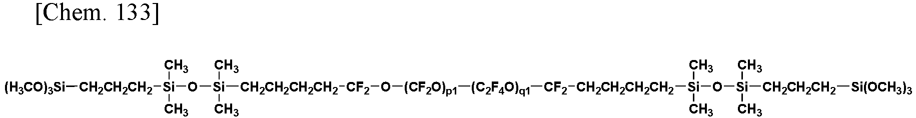

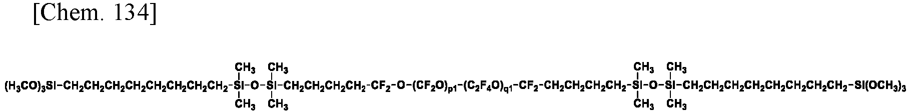

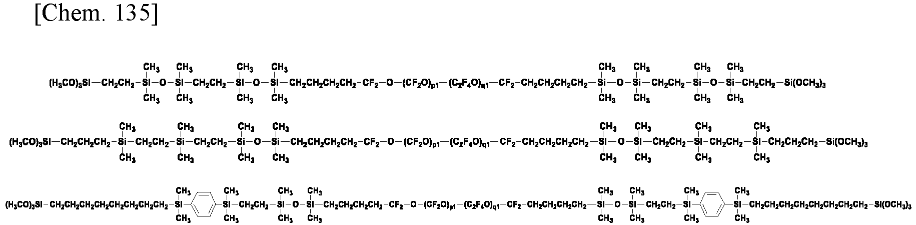

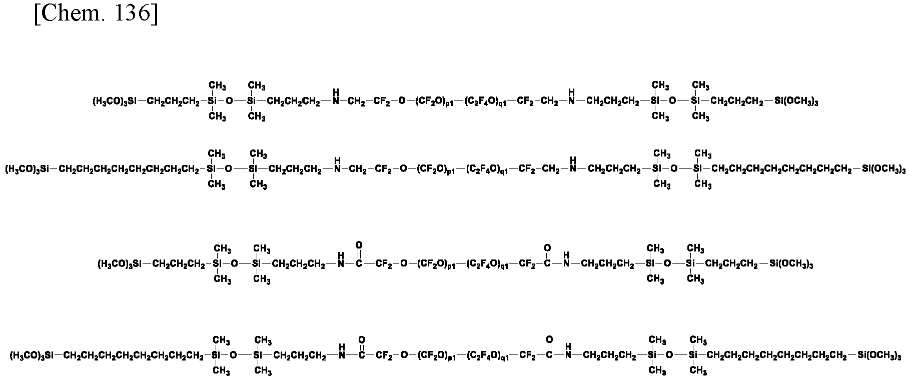

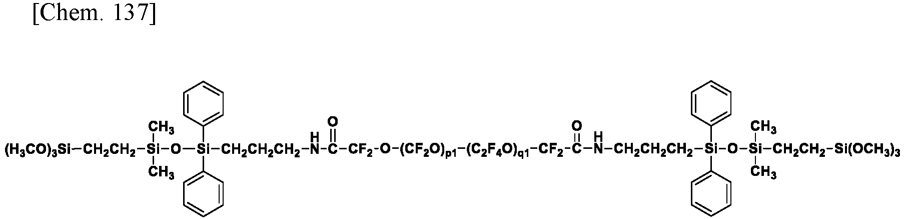

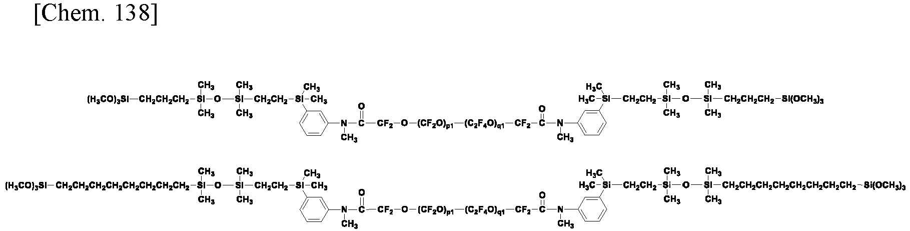

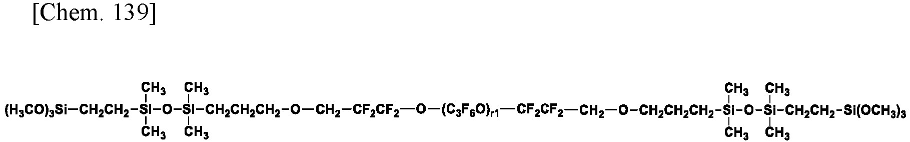

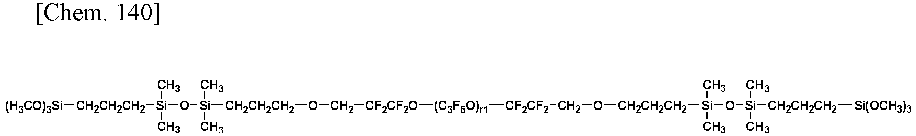

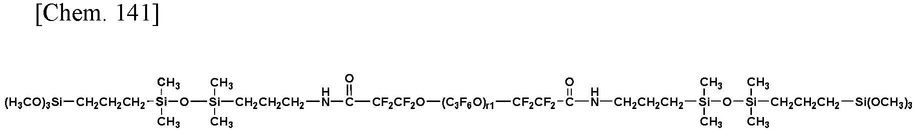

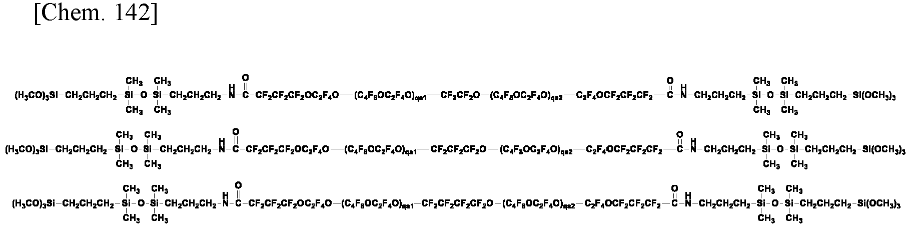

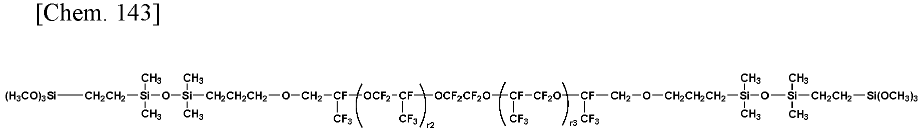

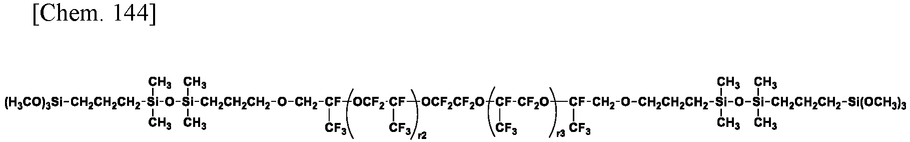

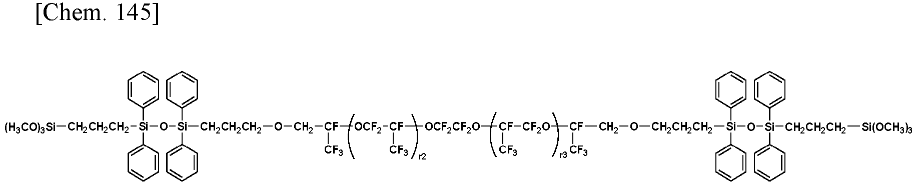

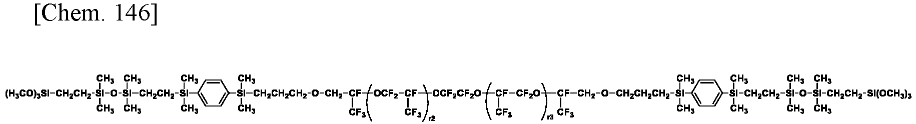

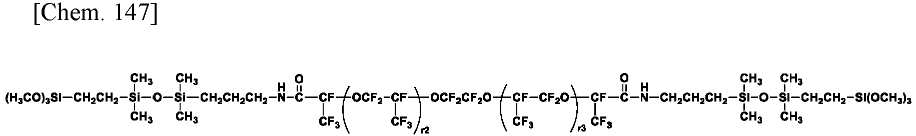

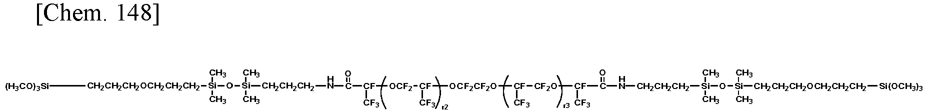

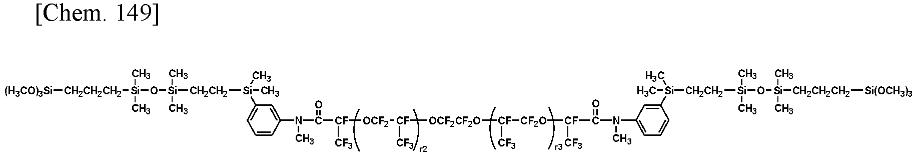

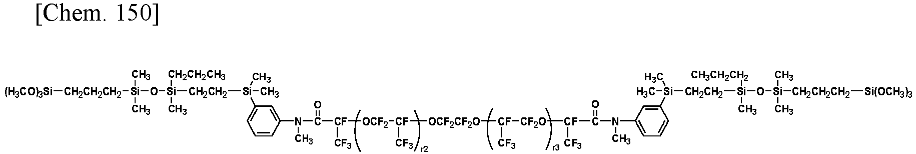

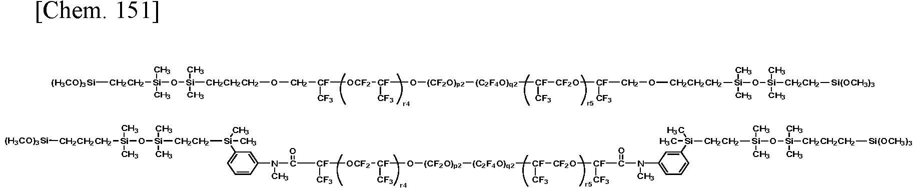

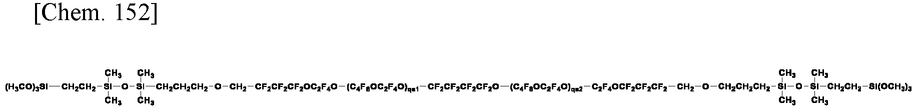

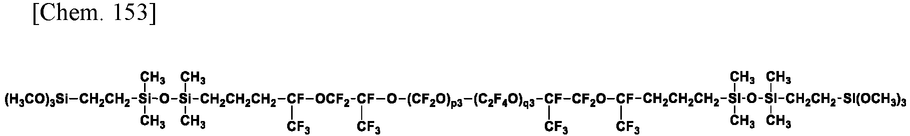

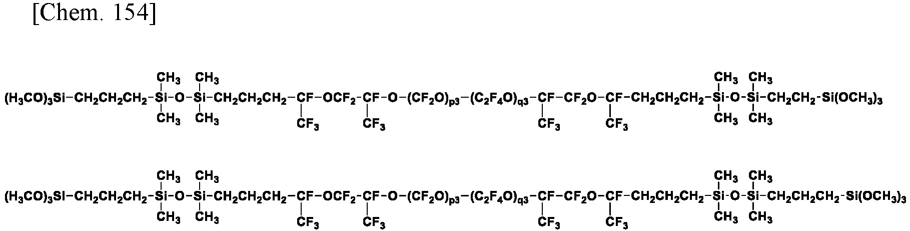

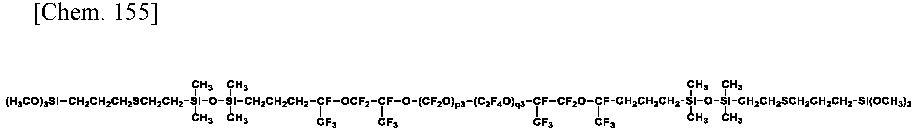

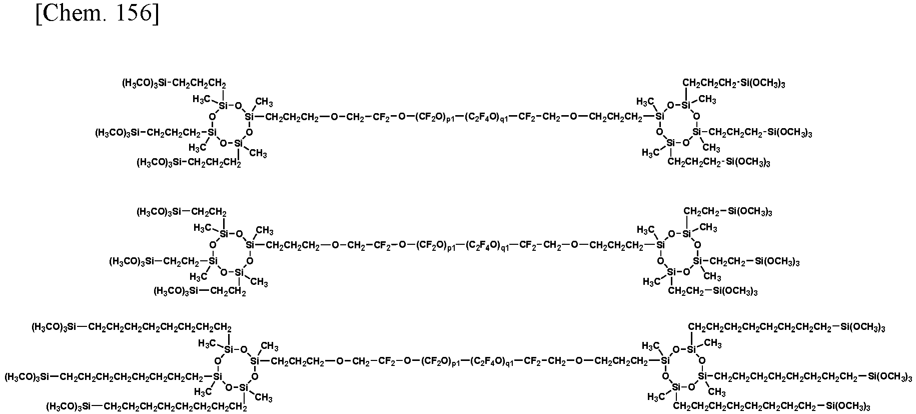

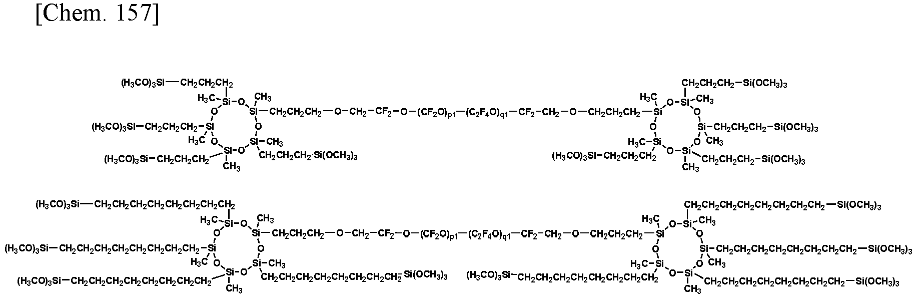

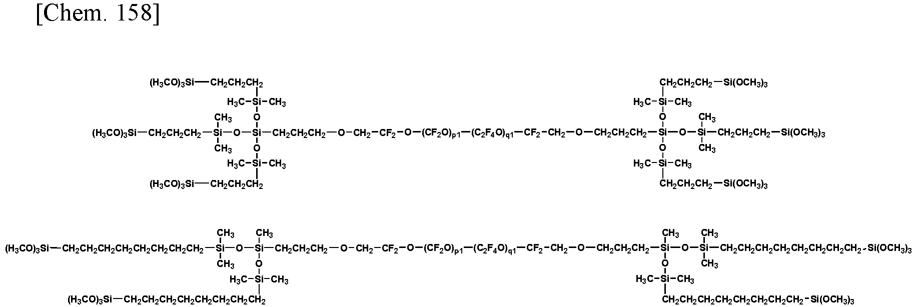

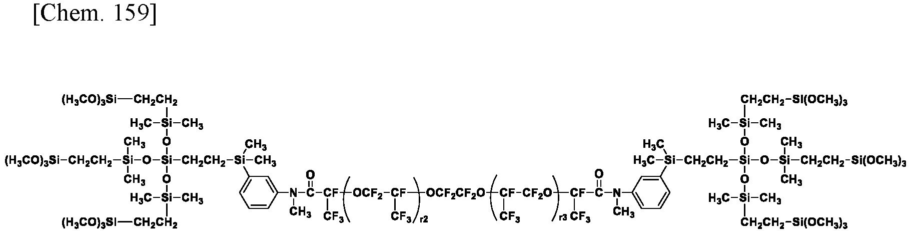

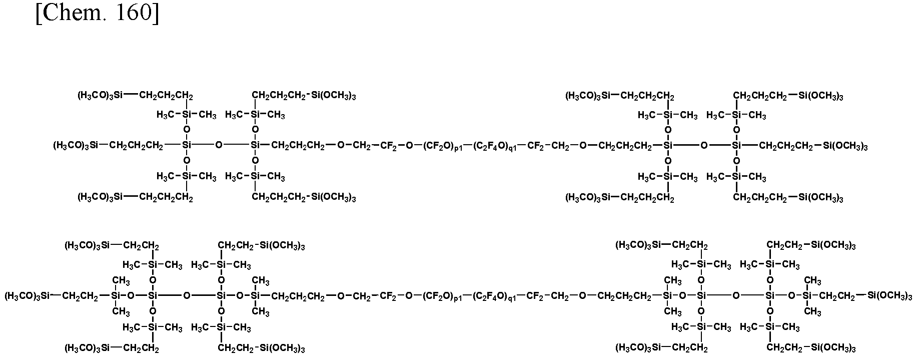

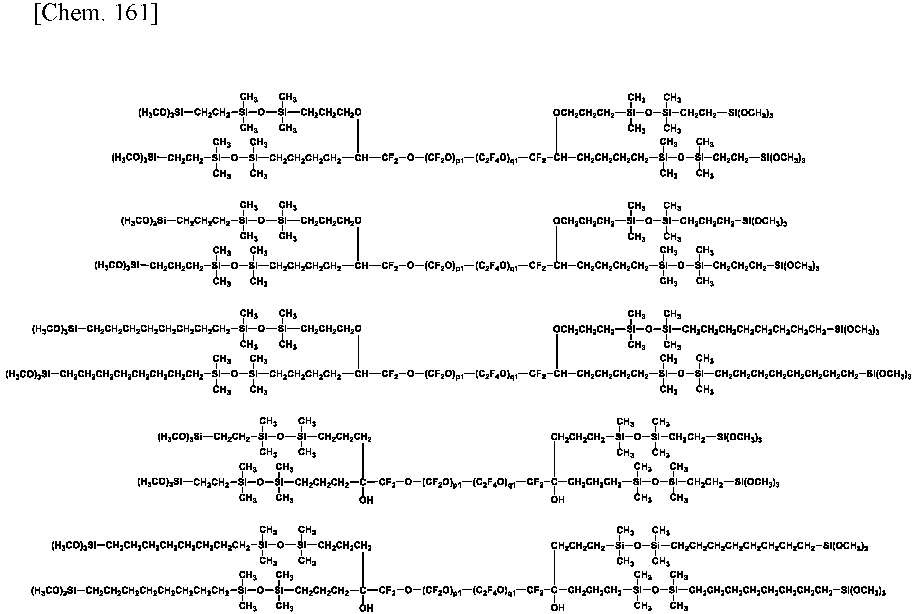

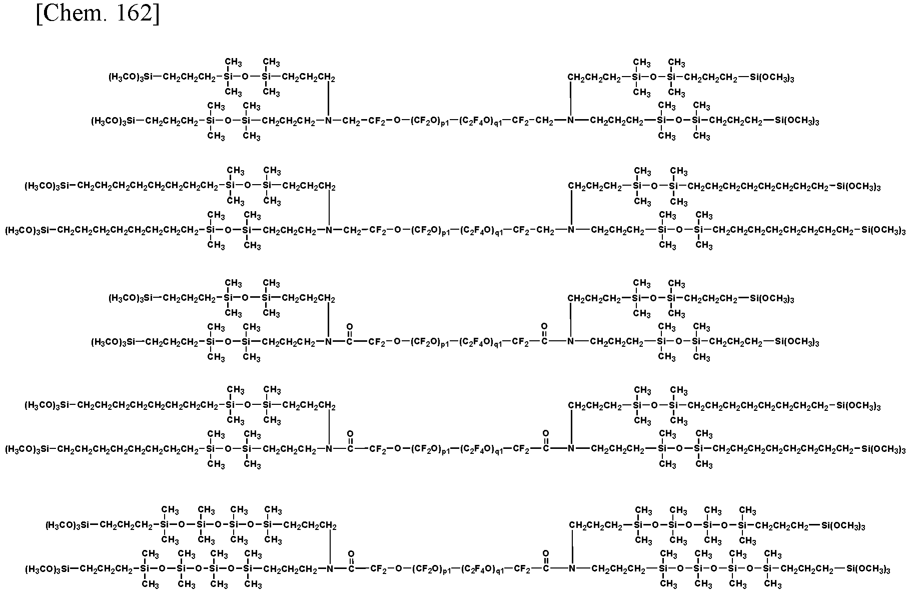

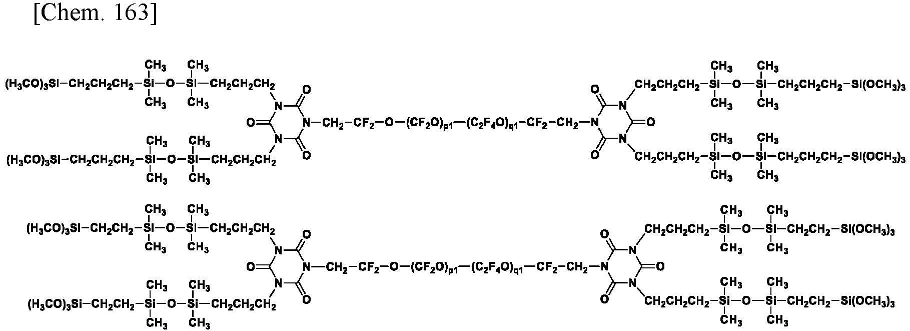

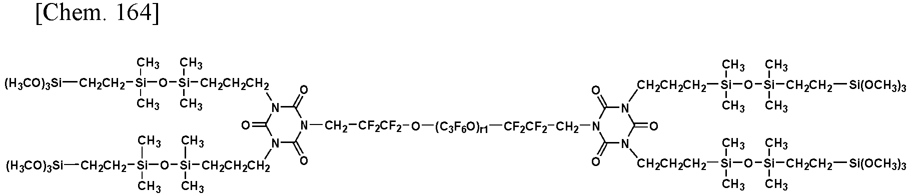

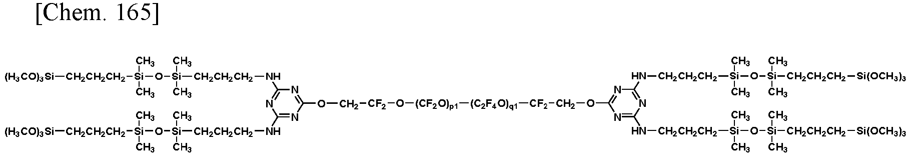

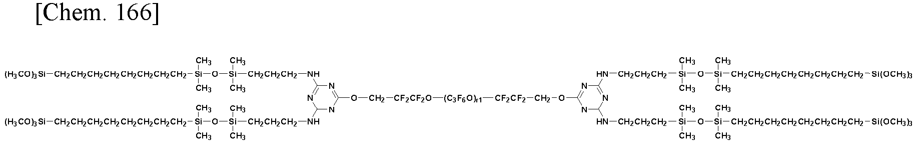

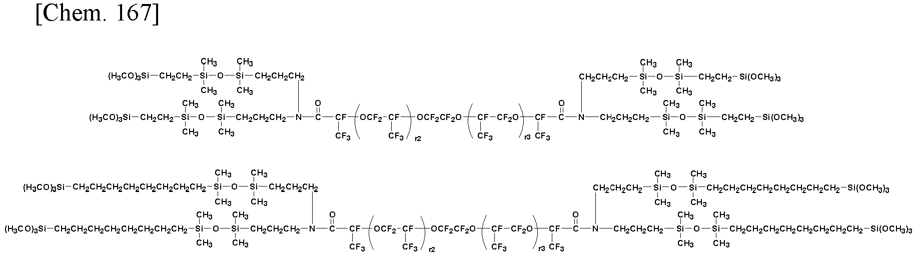

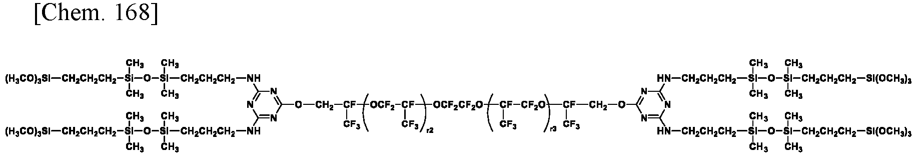

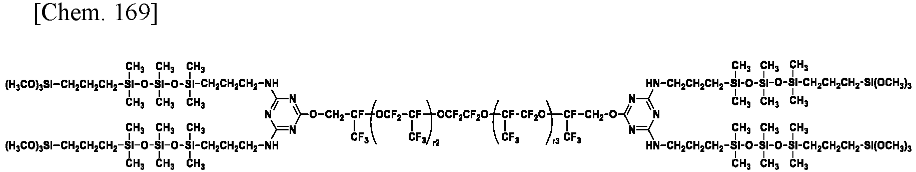

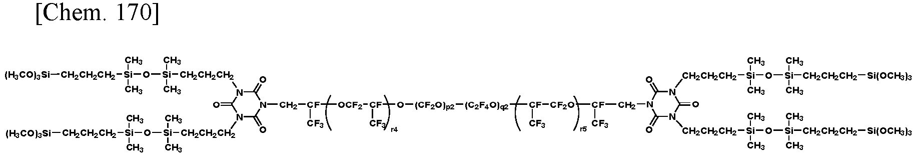

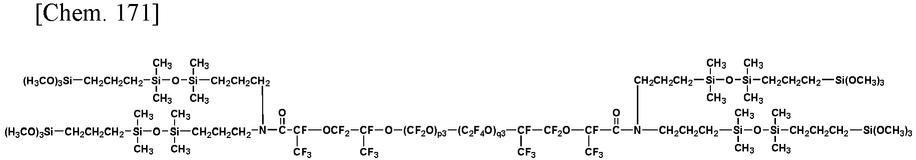

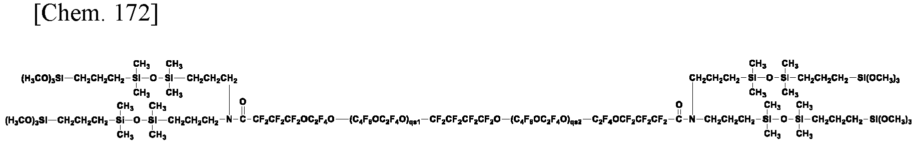

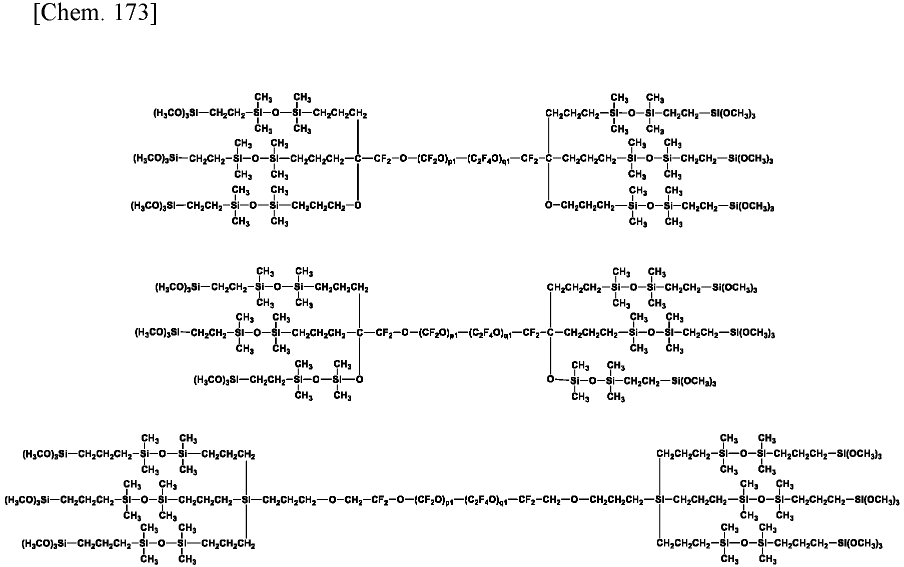

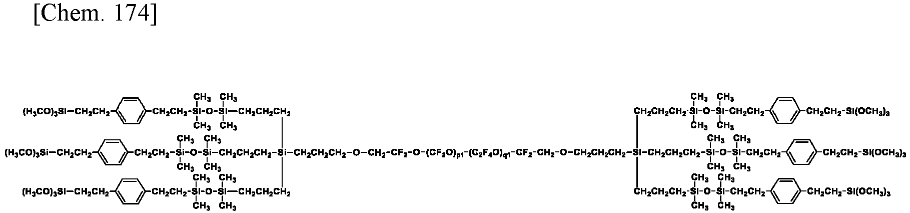

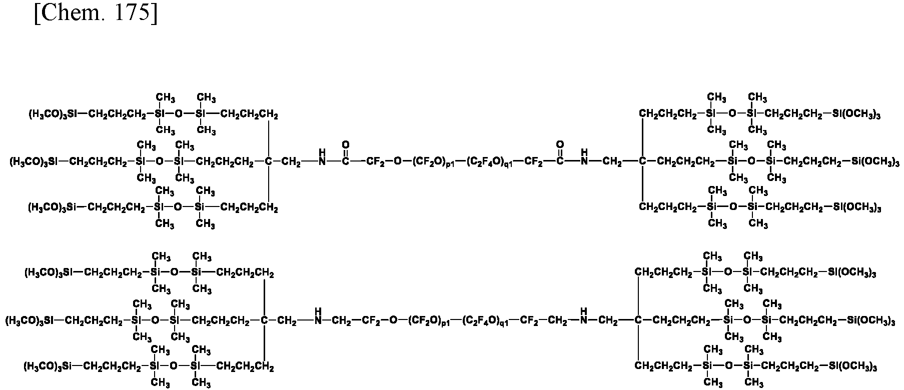

In one embodiment wherein a compound having the following formula: 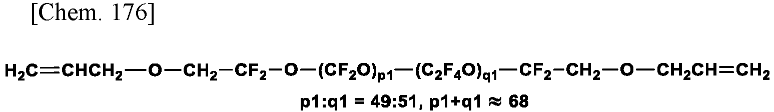
is used as the fluoropolyether-containing polymer having olefin sites (alkenyl groups) at both ends of the molecular chain, and a silane compound having the following formula: 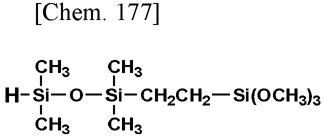
is used as the organosilicon compound containing a di- to hexavalent linear organo(poly)siloxane residue of 2 to 10 silicon atoms or branched or cyclic organo(poly)siloxane residue of 3 to 10 silicon atoms in the molecule and having a SiH group and a silanol or hydrolyzable silyl group, a compound having the following formula: 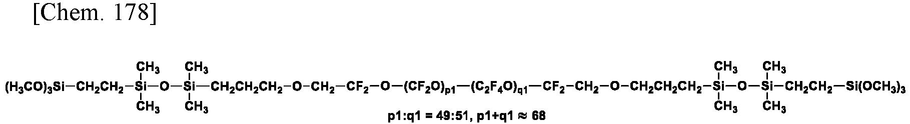
is obtained.

Another embodiment of the invention is a surface treating agent comprising a fluoropolyether-containing polymer having a silanol group or hydrolyzable silyl group, represented by the above formula (1), and/or a partial (hydrolytic) condensate thereof as a main component. The surface treating agent may contain unreacted reactants prior to the introduction of a terminal silanol group or terminal hydrolyzable silyl group into the fluoropolyether-containing polymer having a silanol group or hydrolyzable silyl group, and reaction intermediates. As mentioned above, the surface treating agent may comprise a partial (hydrolytic) condensate which is obtained by condensing the hydroxy group on the fluoropolyether-containing polymer or a hydroxy group resulting from previous partial hydrolysis of the terminal hydrolyzable silyl group on the fluoropolyether-containing polymer by a well-known method.

Notably, the surface treating agent "comprising a fluoropolyether-containing polymer having a silanol group or hydrolyzable silyl group, represented by formula (1), and/or a partial (hydrolytic) condensate thereof as a main component" means that the content of a fluoropolyether-containing polymer having a silanol group or hydrolyzable silyl group, represented by formula (1), and/or a partial (hydrolytic) condensate thereof is at least 50% by weight, preferably at least 70% by weight, more preferably at least 90% by weight based on the total weight of components excluding the solvent.

In addition to the fluoropolyether-containing polymer having a silanol group or hydrolyzable silyl group, represented by formula (1), and/or partial (hydrolytic) condensate thereof as the main component, the surface treating agent may further contain a fluoropolyether-containing polymer having a silanol group or hydrolyzable silyl group, represented by the following formula (3), and/or a partial (hydrolytic) condensate thereof, if necessary.

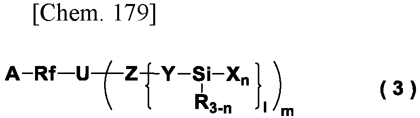

Herein Rf, U, Z, Y, X, R, n, m, and l are as defined in formula (1), A is independently fluorine, hydrogen or a monovalent fluorinated group terminated with -CF₃, -CF₂H or -CH₂F group.

In formula (3), Rf is as exemplified above for Rf in formula (1). Rf may be identical with or different from Rf in formula (1).

In formula (3), A is independently fluorine, hydrogen or a monovalent fluorinated group terminated with -CF₃, -CF₂H or -CH₂F group. Examples of the monovalent fluorinated group terminated with -CF₃, -CF₂H or -CH₂F group include -CF₃, -CF₂CF₃, -CF₂CF₂CF₃, -CH₂CF(CF₃)-OC₃F₇, and -CH₂OCF₂CFH-OC₃F₇. Among others, A is preferably fluorine, -CF₃ or -CF₂CF₃ group.

In formula (3), U, Z, Y, X, R, n, and m are as defined for U, Z, Y, X, R, n, and m in formula (1). U, Z, Y, X, R, n, and m may be identical with or different from U, Z, Y, X, R, n, and m in formula (1).

Examples of the fluoropolyether-containing polymer having a silanol group or hydrolyzable silyl group, represented by formula (3), and/or partial (hydrolytic) condensate thereof are shown below.

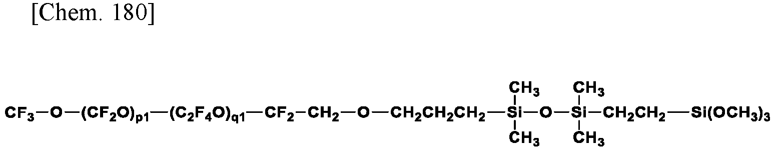

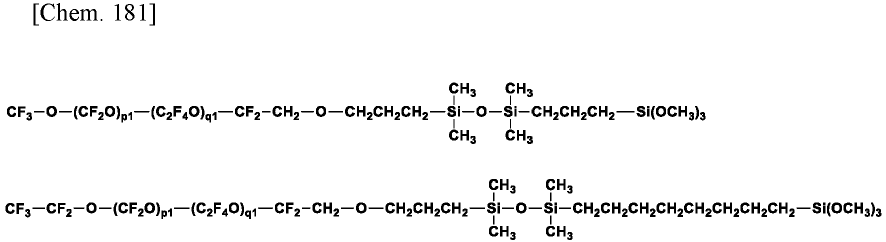

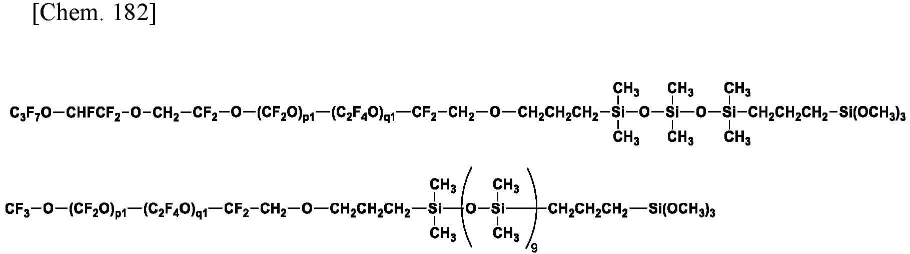

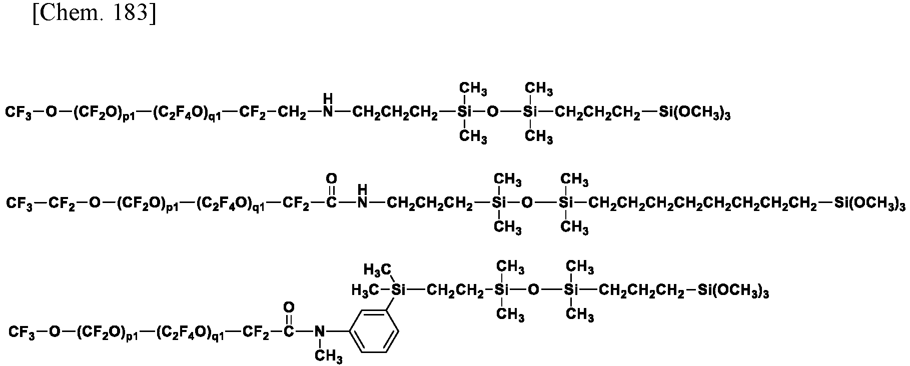

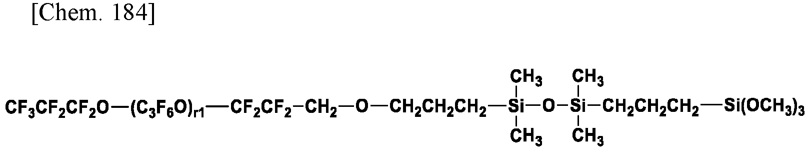

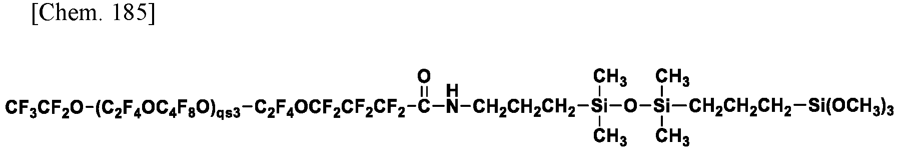

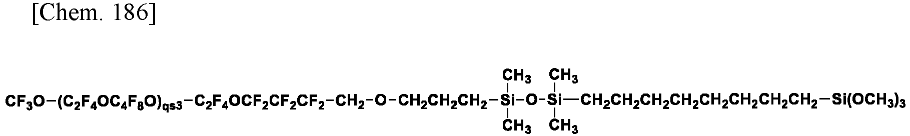

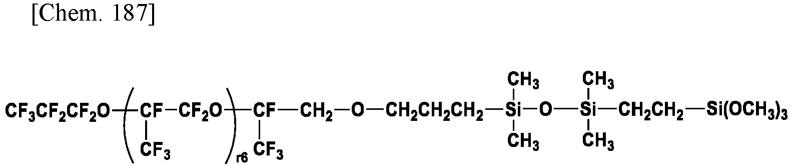

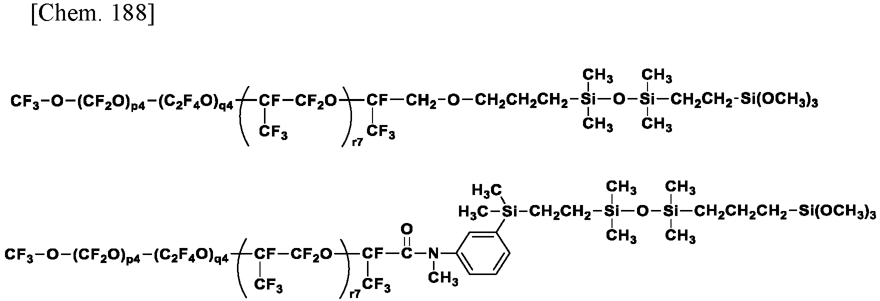

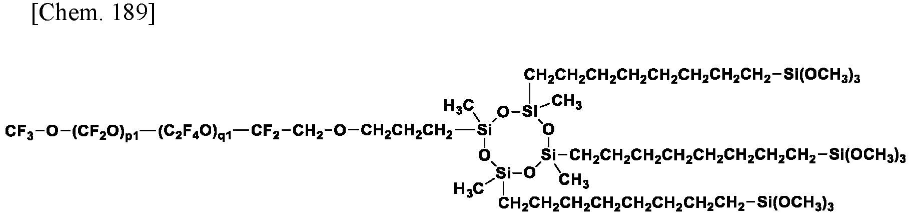

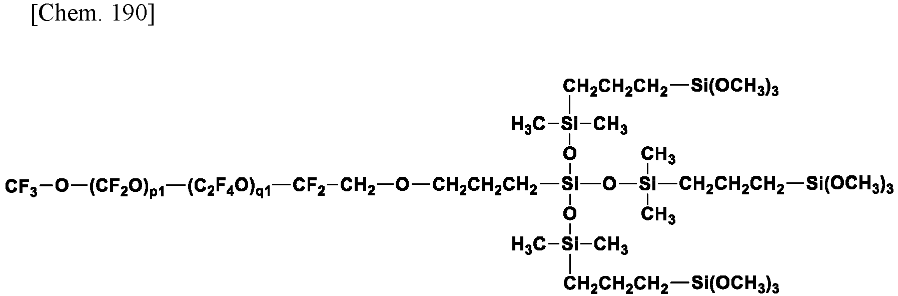

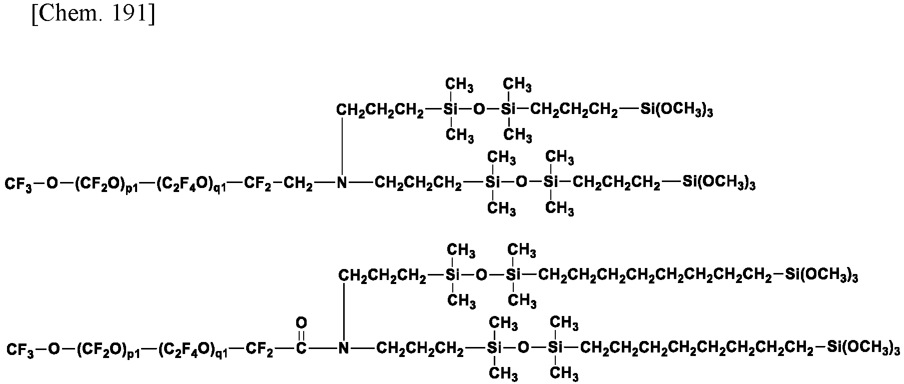

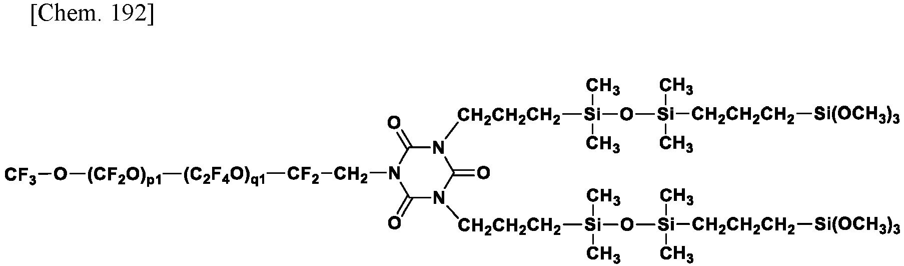

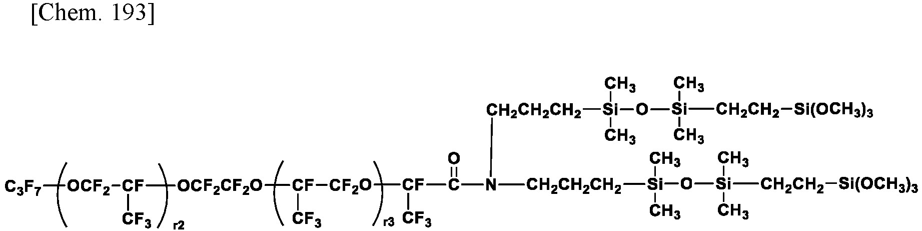

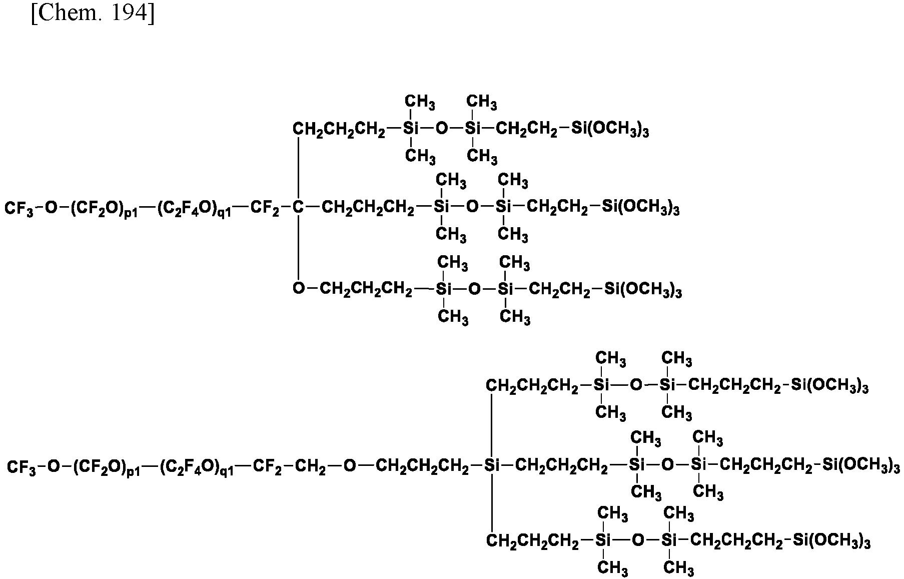

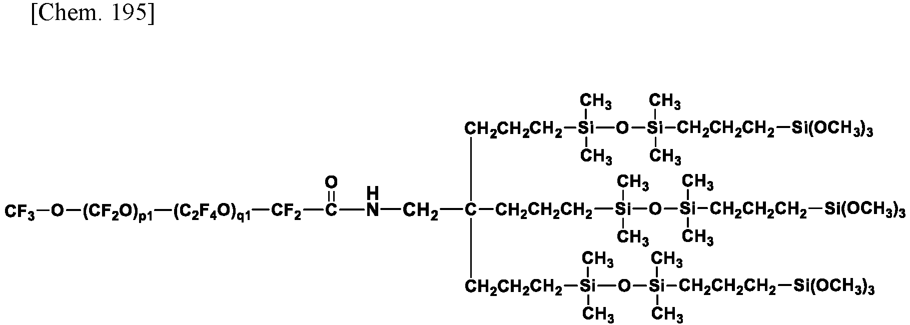

Herein p1, q1, p1+q1, r1, r2, r3, and r2+r3 are as defined above, qs3 is an integer of 16 to 86, r6 is an integer of 33 to 180, p4 is an integer of 5 to 440, q4 is an integer of 5 to 250, r7 is an integer of 1 to 175, p4+q4+r7 is an integer of 30 to 443. Individual repeating units within the parentheses with p1 and q1, and p4, q4 and r7 may be randomly bonded. The fluorooxyalkylene-containing polymer residue has a Mn of 6,000 to 30,000.

The content of the fluoropolyether-containing polymer having a silanol group or hydrolyzable silyl group, represented by formula (3), and/or partial (hydrolytic) condensate thereof may be 0 to 100 parts by weight, preferably 0 to 60 parts by weight, more preferably 0 to 40 parts by weight per 100 parts by weight of the fluoropolyether-containing polymer having a silanol group or hydrolyzable silyl group, represented by formula (1), and/or partial (hydrolytic) condensate thereof as the main component. Notably, when the fluoropolyether-containing polymer having a silanol group or hydrolyzable silyl group, represented by formula (3), and/or partial (hydrolytic) condensate thereof is blended, its amount is preferably at least 1 part by weight, more preferably at least 5 parts by weight per 100 parts by weight of the fluoropolyether-containing polymer having a silanol group or hydrolyzable silyl group, represented by formula (1), and/or partial (hydrolytic) condensate thereof.

Besides the fluoropolyether-containing polymer having a silanol group or hydrolyzable silyl group, represented by formula (1), and/or partial (hydrolytic) condensate thereof as the main component and the fluoropolyether-containing polymer having a silanol group or hydrolyzable silyl group, represented by formula (3), and/or partial (hydrolytic) condensate thereof, the surface treating agent may contain a fluorinated compound (non-functional fluoropolyether polymer) having the formula (9):

A-Rf-A (9)

wherein Rf is as defined above, and A is independently fluorine, hydrogen or a monovalent fluorinated group terminated with -CF₃, -CF₂H or -CH₂F group, if necessary.

In formula (9), Rf is as exemplified above for Rf in formula (1). Rf may be identical with or different from Rf in formula (1).

In formula (9), A is independently fluorine, hydrogen or a monovalent fluorinated group terminated with -CF₃, -CF₂H or -CH₂F group. Examples of the monovalent fluorinated group terminated with -CF₃, -CF₂H or -CH₂F group include -CF₃, -CF₂CF₃, -CF₂CF₂CF₃, -CH₂CF(CF₃)-OC₃F₇, and -CH₂OCF₂CFH-OC₃F₇. Among others, A is preferably fluorine, -CF₃ or -CF₂CF₃ group.

Examples of the fluorinated compound (non-functional fluoropolyether polymer) having formula (9) are shown below.

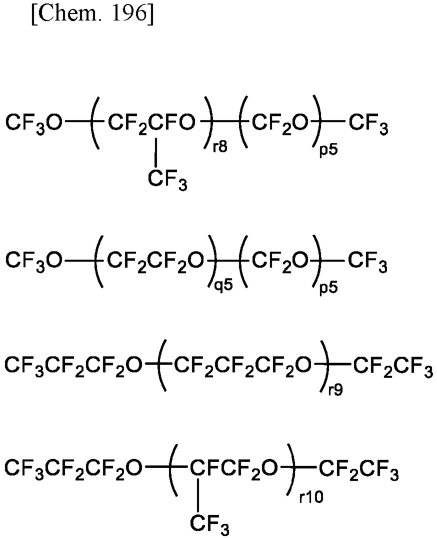

Herein p5, q5 and r8 are each independently an integer of 0 to 450, the sum of p5, q5, and r8 is 20 to 450, r9 and r10 each are an integer of 20 to 450. Individual repeating units within the parentheses with p5, q5, and r8 may be randomly bonded. The fluorooxyalkylene-containing polymer residue has a Mn of 6,000 to 30,000.

The content of the fluorinated compound (non-functional fluoropolyether polymer) having formula (9) may be 0 to 100 parts by weight, preferably 0 to 60 parts by weight, more preferably 0 to 40 parts by weight per 100 parts by weight of the fluoropolyether-containing polymer having a silanol group or hydrolyzable silyl group, represented by formula (1), and/or partial (hydrolytic) condensate thereof as the main component.

To the surface treating agent, a hydrolytic condensation catalyst may be added if necessary. Suitable hydrolytic condensation catalysts include organotin compounds such as dibutyltin dimethoxide and dibutyltin dilaurate, organotitanium compounds such as tetra-n-butyl titanate, organozirconium compounds such as tetra-n-butyl zirconate, organic acids such as acetic acid, methanesulfonic acid, and fluorine-modified carboxylic acids, and inorganic acids such as hydrochloric acid and sulfuric acid. Of these, acetic acid, tetra-n-butyl titanate, dibutyltin dilaurate, and fluorine-modified carboxylic acids are desirable.

When used, the hydrolytic condensation catalyst may be added in a catalytic amount, typically 0.01 to 5 parts, more preferably 0.1 to 1 part by weight per 100 parts by weight of the fluoropolyether-containing polymers having a silanol group or hydrolyzable silyl group, represented by formulae (1) and (3), and/or partial (hydrolytic) condensates thereof combined.

The surface treating agent may further comprise a solvent. Suitable solvents include fluorine-modified aliphatic hydrocarbon solvents such as perfluorohexane, perfluoroheptane, perfluorooctane and tridecafluorooctane; fluorine-modified aromatic hydrocarbon solvents such as 1,3-bis(trifluoromethyl)benzene; fluorine-modified ether solvents such as methyl perfluorobutyl ether, ethyl perfluorobutyl ether, perfluoro(2-butyltetrahydrofuran), and methyl perfluoroheptenyl ether; fluorine-modified alkylamine solvents such as perfluorotributylamine and perfluorotripentylamine; hydrocarbon solvents such as petroleum benzine, toluene, and xylene; ketone solvents such as acetone, methyl ethyl ketone, and methyl isobutyl ketone. Of these, fluorine-modified solvents are desirable for solubility and wettability, with 1,3-bis(trifluoromethyl)benzene, perfluoro(2-butyltetrahydrofuran), perfluorotributylamine, ethyl perfluorobutyl ether, and tridecafluorooctane being more desirable.

The solvents may be used in admixture of two or more while it is preferred that the fluoropolyether-containing polymer and its partial (hydrolytic) condensate (including a fluoropolyether-containing polymer having a silanol group or hydrolyzable silyl group represented by formula (1) and a partial (hydrolytic) condensate thereof, a fluoropolyether-containing polymer having a silanol group or hydrolyzable silyl group represented by formula (3) and a partial (hydrolytic) condensate thereof, and a fluorinated compound (non-functional fluoropolyether polymer) represented by formula (9), the same holds true, hereinafter) be uniformly dissolved in the solvent. An optimum concentration of the fluoropolyether-containing polymer and its partial (hydrolytic) condensate in the solvent varies with a particular treating mode. The amount which is easy to weigh may be chosen. In the case of direct coating, the concentration is preferably 0.01 to 10 parts by weight, more preferably 0.05 to 5 parts by weight per 100 parts by weight of the solvent and the fluoropolyether-containing polymer and its partial (hydrolytic) condensate in total. In the case of evaporation treatment, the concentration is preferably 1 to 100 parts by weight, more preferably 3 to 50 parts by weight per 100 parts by weight of the solvent and the fluoropolyether-containing polymer and its partial (hydrolytic) condensate in total.

The surface treating agent may be applied to a substrate by any well-known techniques such as brush coating, dipping, spraying and evaporation. In the case of evaporation, the heating mode may be either resistance heating or EB heating and is not particularly limited. The curing temperature varies with a particular curing technique. For example, in the case of direct coating (brush coating, dipping or spraying), suitable curing conditions include a temperature of 25 to 200°C, especially 25 to 150°C for 30 minutes to 36 hours, especially 1 to 18 hours. When the agent is applied by evaporation, the curing temperature is desirably in a range of 20 to 200°C. Humid curing conditions are also useful. The cured coating typically has a thickness of 0.1 to 100 nm, desirably 1 to 20 nm although the thickness depends on the type of substrate. Also, in the case of spray coating, for example, a procedure involving diluting the agent with a fluorochemical solvent having water previously added thereto, for thereby effecting hydrolysis to generate Si-OH, and thereafter, spraying the dilution is recommended because the coating rapidly cures.

It is noted that the film thickness may be measured by suitable means, for example, spectroscopic reflectometry, X-ray reflectometry, spectroscopic ellipsometry, and X-ray fluorescence film thickness measurement.

The substrate to be treated with the surface treating agent is not particularly limited, and may be made of any desired materials including paper, fabric, metals, metal oxides, glass, plastics, ceramics, and quartz. The surface treating agent is effective for endowing the substrate with water/oil repellency. In particular, the surface treating agent is advantageously used for the treatment of SiO₂-deposited glass and film.

Preferred articles which may be treated with the surface treating agent include car navigation systems, mobile phones, smart phones, digital cameras, digital video cameras, PDA, portable audio players, car audio players, game consoles, eyeglass lenses, camera lenses, lens filters, sunglasses, medical instruments (e.g., gastroscopes), copiers, personal computers, LC displays, organic EL displays, plasma displays, touch panel displays, protective film, antireflective film, and other optical articles. Since the surface treating agent of the invention is effective for preventing fingerprints and sebum from adhering to the articles and also for imparting scratch resistance, it is particularly useful as a water/oil repellent layer on lenses, touch panel displays, and antireflective films.

The surface treating agent is also used for anti-staining coatings on sanitary ware such as bathtubs and washbowls; anti-staining coatings on glazing or strengthened glass in transport vehicles such as automobiles, trains and aircraft and head lamp covers; water/oil repellent coatings on building exteriors; coatings for preventing oil contamination on kitchen ware; anti-staining, anti-sticking, anti-graffiti coatings in telephone booths; anti-fingerprint coatings on artistic objects; anti-fingerprint coatings on compact discs and DVD's; mold parting agents; paint additives; and resin modifiers. The agent is also effective for modifying the flow and dispersion of inorganic fillers and as a lubricity-improving agent for tape and film.

In particular, the surface treating agent is able to form on a lens substrate a cured film having water/oil repellency, abrasion resistance and chucking properties.

As used herein, chucking properties refer to, in the step of machining a substrate which is fixedly secured by an adhesive tape, the degree of securement of the substrate. In a lens edging system in which a lens is secured by a lens blocking tape, for example, the degree of securement is judged in terms of the strength of adhesion (tensile shear bond strength) between the lens blocking tape and the lens. Chucking properties are regarded satisfactory when the adhesion between the adhesive tape and the substrate ensures to secure the substrate so firmly that the substrate is machined at an acceptable accuracy.

### EXAMPLES

Synthesis Examples, Examples and Comparative Examples are given below for illustrating the invention, but the invention is not limited by Examples. The number of repetition of fluorooxyalkylene units in fluorooxyalkylene-containing polymer residue is a number average value computed from ¹⁹F-NMR spectroscopy. In the formulae below, individual repeating units within the parentheses with p1 and q1, p1, q1 and r1, p2 and q2, and p3 and q3 are randomly bonded. The film thickness is measured by spectroscopic ellipsometry using a spectral ellipsometer.

### [Synthesis Example 1]

A reactor was charged with 100 g (1.55 × 10⁻² mol) of a compound having the formula (1A): 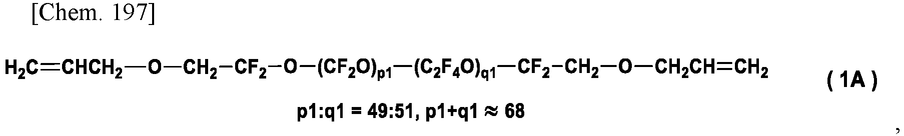
100 g of 1,3-bis(trifluoromethyl)benzene, 13.1 g (4.64×10⁻² mol) of an organosilicon compound having the formula (1B): 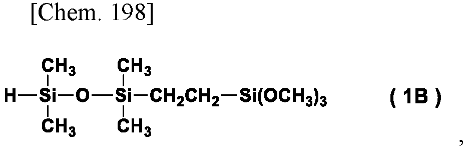
and 5.92×10⁻² g (containing 1.83 × 10⁻⁷ mol of Pt element) of a toluene solution of chloroplatinic acid/vinylsiloxane complex. The mixture was aged at 80°C for 24 hours. The solvent and unreacted reactants were distilled off under reduced pressure. After washing, 100 g of a liquid product was obtained.

On ¹H-NMR analysis, the compound was identified to have the structure represented by the formula (1C).

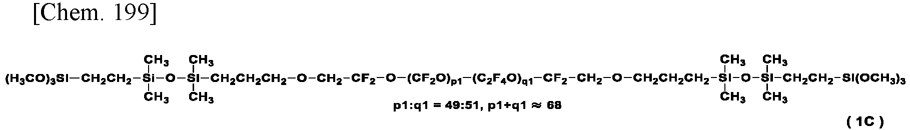

### [Synthesis Example 2]

A reactor was charged with 100 g (1.55 × 10⁻² mol) of a compound having the formula (2A): 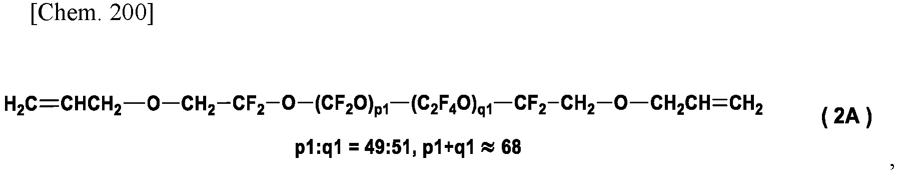
100 g of 1,3-bis(trifluoromethyl)benzene, 16.5 g (4.64×10⁻² mol) of an organosilicon compound having the formula (2B): 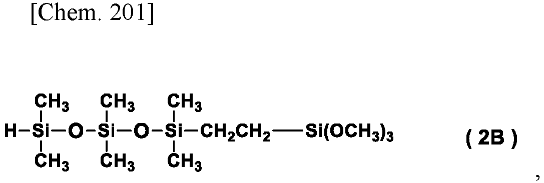
and 5.92×10⁻² g (containing 1.83 × 10⁻⁷ mol of Pt element) of a toluene solution of chloroplatinic acid/vinylsiloxane complex. The mixture was aged at 80°C for 24 hours. The solvent and unreacted reactants were distilled off under reduced pressure. After washing, 96 g of a liquid product was obtained.

On ¹H-NMR analysis, the compound was identified to have the structure represented by the formula (2C).

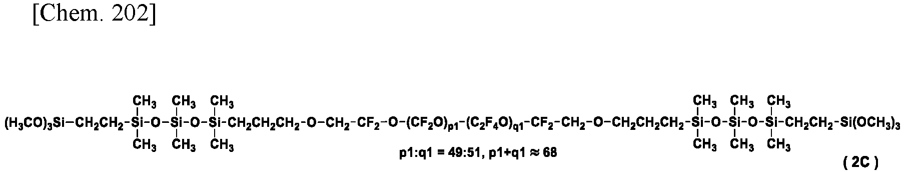

### [Synthesis Example 3]

A reactor was charged with 50 g (6.15 × 10⁻³ mol) of a compound having the formula (3A): 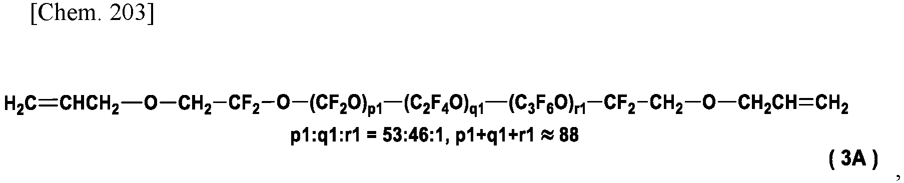
50 g of 1,3-bis(trifluoromethyl)benzene, 6.74 g (1.84×10⁻² mol) of an organosilicon compound having the formula (3B): 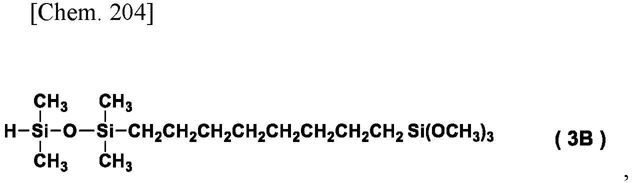
and 2.3 5 × 10⁻² g (containing 7.26 × 10⁻⁸ mol of Pt element) of a toluene solution of chloroplatinic acid/vinylsiloxane complex. The mixture was aged at 80°C for 24 hours. The solvent and unreacted reactants were distilled off under reduced pressure. After washing, 49.7 g of a liquid product was obtained.

On ¹H-NMR analysis, the compound was identified to have the structure represented by the formula (3C).

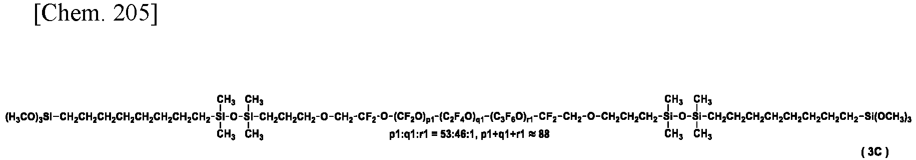

### [Synthesis Example 4]

A reactor was charged with 50 g (3.61 × 10⁻³ mol) of a compound having the formula (4A): 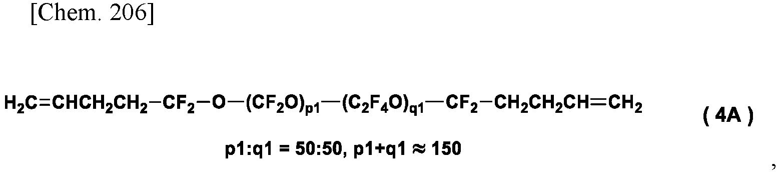 50 g of 1,3-bis(trifluoromethyl)benzene, 3.19 g (1.08×10⁻² mol) of an organosilicon compound having the formula (4B): 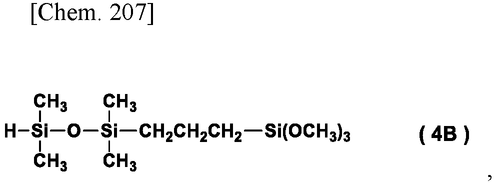 and 1.21×10⁻² g (containing 3.73×10⁻⁸ mol of Pt element) of a toluene solution of chloroplatinic acid/vinylsiloxane complex. The mixture was aged at 80°C for 24 hours. The solvent and unreacted reactants were distilled off under reduced pressure. After washing, 51.0 g of a liquid product was obtained.

On ¹H-NMR analysis, the compound was identified to have the structure represented by the formula (4C).

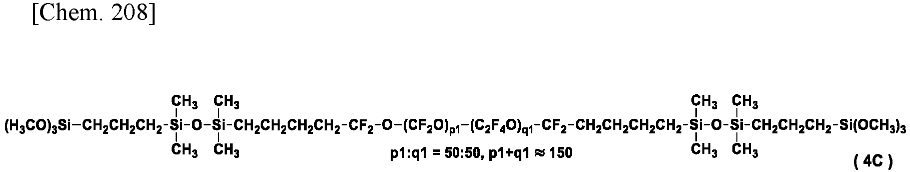

### [Synthesis Example 5]

A reactor was charged with 100 g (1.10×10⁻² mol) of a compound having the formula (5A): 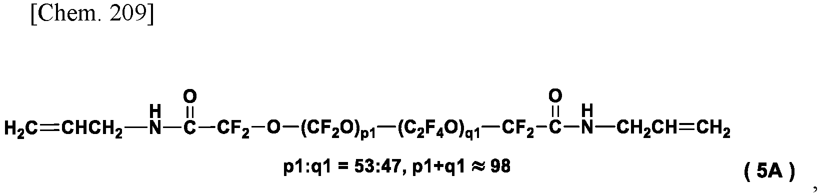
100 g of 1,3-bis(trifluoromethyl)benzene, 13.4 g (3.30×10⁻² mol) of an organosilicon compound having the formula (5B): 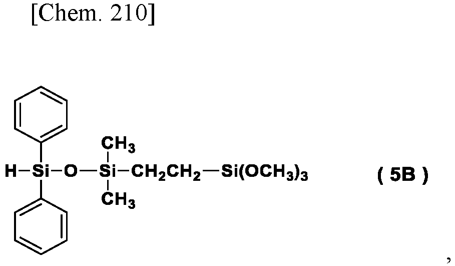
and 4.20×10⁻² g (containing 1.30×10⁻⁷ mol of Pt element) of a toluene solution of chloroplatinic acid/vinylsiloxane complex. The mixture was aged at 80°C for 24 hours. The solvent and unreacted reactants were distilled off under reduced pressure. After washing, 102 g of a liquid product was obtained.

On ¹H-NMR analysis, the compound was identified to have the structure represented by the formula (5C).

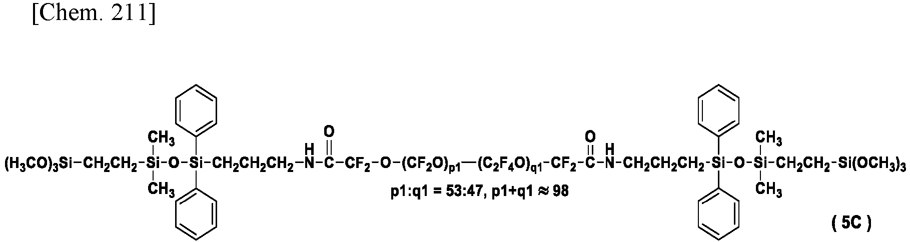

### [Synthesis Example 6]

A reactor was charged with 100 g (5.94×10⁻³ mol) of a compound having the formula (6A): 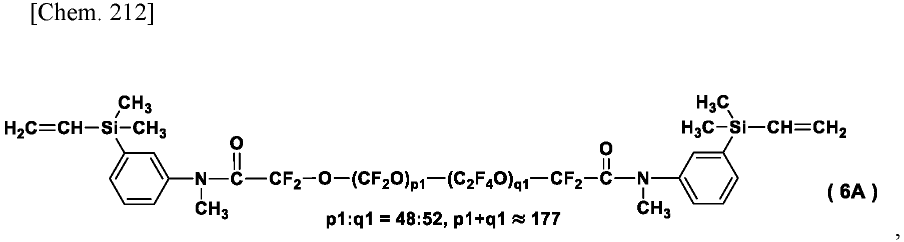
100 g of 1,3-bis(trifluoromethyl)benzene, 6.52 g (1.78×10⁻² mol) of an organosilicon compound having the formula (6B): 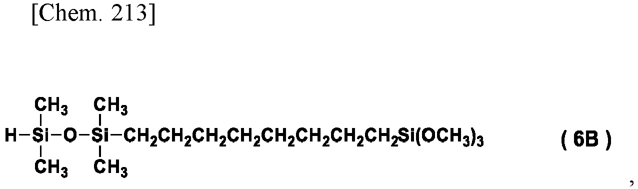
and 2.27×10⁻² g (containing 7.01×10⁻⁸ mol of Pt element) of a toluene solution of chloroplatinic acid/vinylsiloxane complex. The mixture was aged at 80°C for 24 hours. The solvent and unreacted reactants were distilled off under reduced pressure. After washing, 102 g of a liquid product was obtained.

On ¹H-NMR analysis, the compound was identified to have the structure represented by the formula (6C).

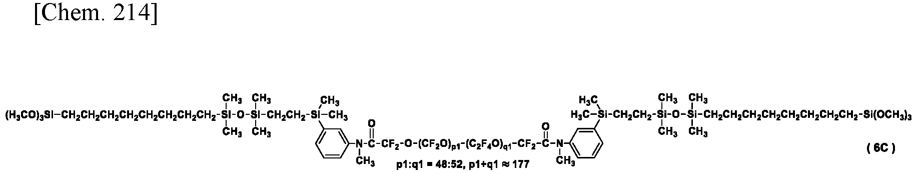

### [Synthesis Example 7]

A reactor was charged with 50 g (6.38×10⁻³ mol) of a compound having the formula (7A): 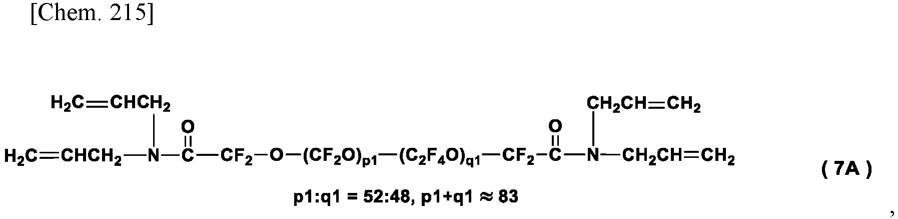
50 g of 1,3-bis(trifluoromethyl)benzene, 11.3 g (3.83×10⁻² mol) of an organosilicon compound having the formula (7B): 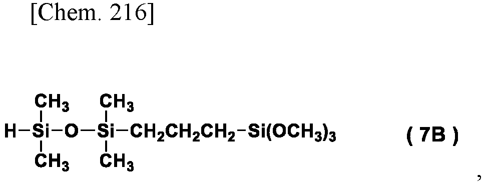
and 2.44×10⁻² g (containing 7.53×10⁻⁸ mol of Pt element) of a toluene solution of chloroplatinic acid/vinylsiloxane complex. The mixture was aged at 80°C for 24 hours. The solvent and unreacted reactants were distilled off under reduced pressure. After washing, 53 g of a liquid product was obtained.

On ¹H-NMR analysis, the compound was identified to have the structure represented by the formula (7C).

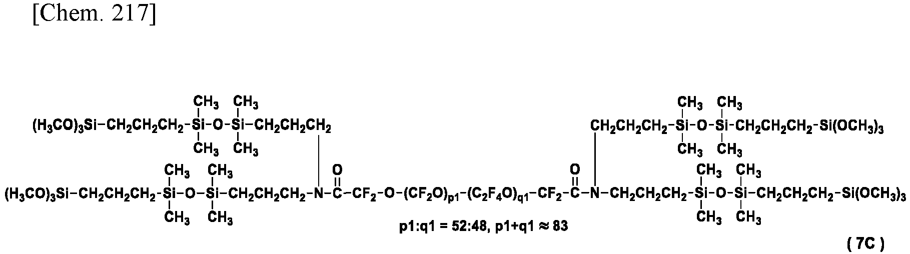

### [Synthesis Example 8]

A reactor was charged with 100 g (1.10×10⁻² mol) of a compound having the formula (8A): 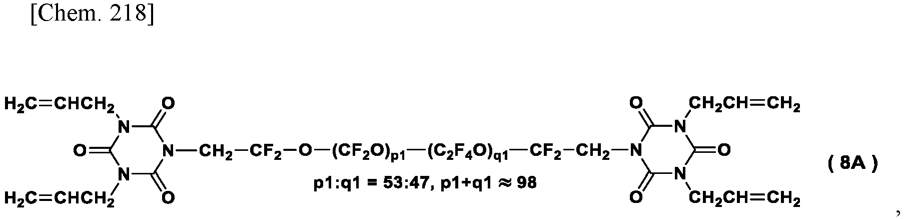
100 g of 1,3-bis(trifluoromethyl)benzene, 18.6 g (6.59×10⁻² mol) of an organosilicon compound having the formula (8B): 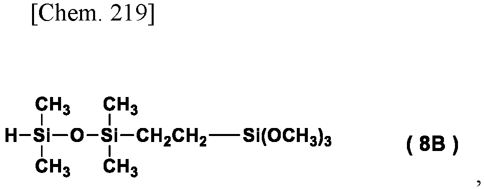
and 4.20×10⁻² g (containing 1.30×10⁻⁷ mol of Pt element) of a toluene solution of chloroplatinic acid/vinylsiloxane complex. The mixture was aged at 80°C for 24 hours. The solvent and unreacted reactants were distilled off under reduced pressure. After washing, 110 g of a liquid product was obtained.

On ¹H-NMR analysis, the compound was identified to have the structure represented by the formula (8C).

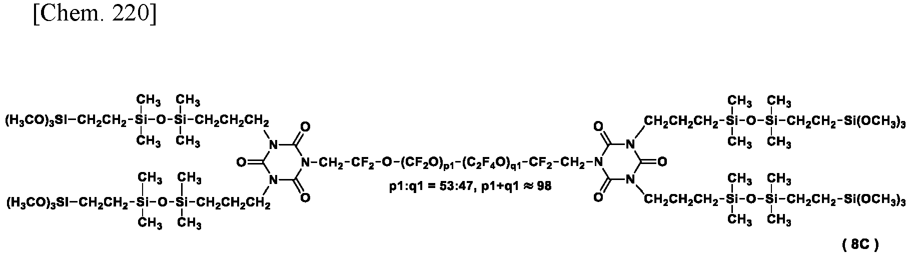

### [Synthesis Example 9]

A reactor was charged with 100 g (1.41×10⁻² mol) of a compound having the formula (9A): 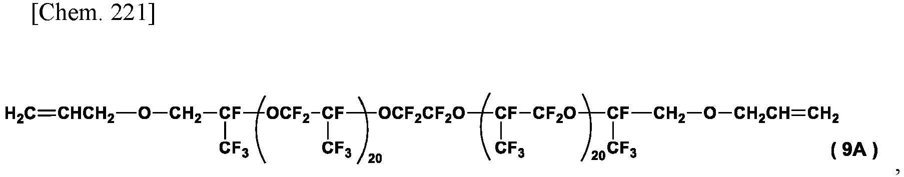
100 g of 1,3-bis(trifluoromethyl)benzene, 21.8 g (4.23×10⁻² mol) of an organosilicon compound having the formula (9B): 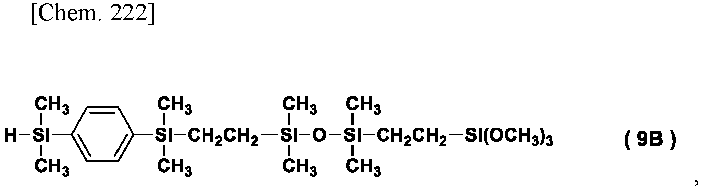
and 5.39×10⁻² g (containing 1.66×10⁻⁷ mol of Pt element) of a toluene solution of chloroplatinic acid/vinylsiloxane complex. The mixture was aged at 80°C for 24 hours. The solvent and unreacted reactants were distilled off under reduced pressure. After washing, 115 g of a liquid product was obtained.

On ¹H-NMR analysis, the compound was identified to have the structure represented by the formula (9C).

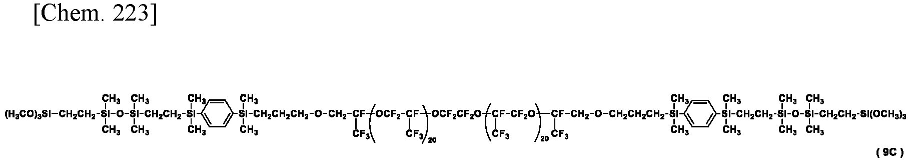

### [Synthesis Example 10]

A reactor was charged with 100 g (5.99×10⁻³ mol) of a compound having the formula (10A): 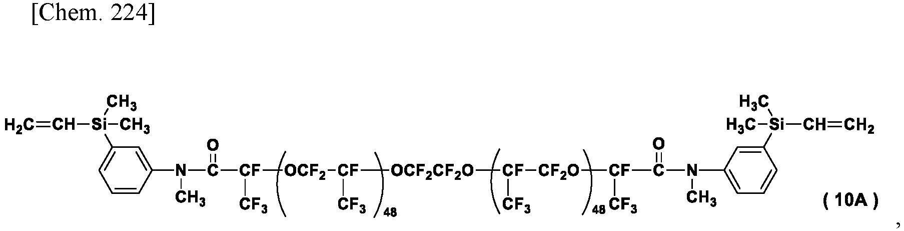
100 g of 1,3-bis(trifluoromethyl)benzene, 5.33 g (1.80×10⁻² mol) of an organosilicon compound having the formula (10B): 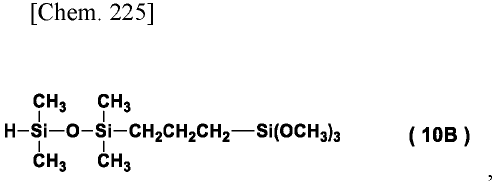
and 2.29×10⁻² g (containing 7.07×10⁻⁸ mol of Pt element) of a toluene solution of chloroplatinic acid/vinylsiloxane complex. The mixture was aged at 80°C for 24 hours. The solvent and unreacted reactants were distilled off under reduced pressure. After washing, 102 g of a liquid product was obtained.

On ¹H-NMR analysis, the compound was identified to have the structure represented by the formula (10C).

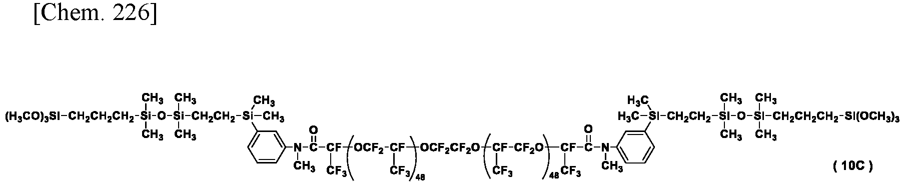

### [Synthesis Example 11]

A reactor was charged with 100 g (1.01×10⁻² mol) of a compound having the formula (11A): 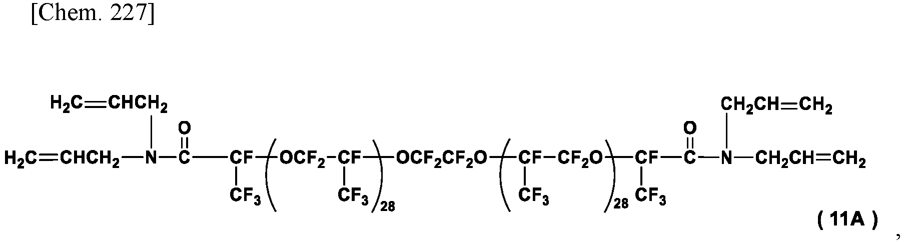
100 g of 1,3-bis(trifluoromethyl)benzene, 22.3 g (6.08×10⁻² mol) of an organosilicon compound having the formula (11B): 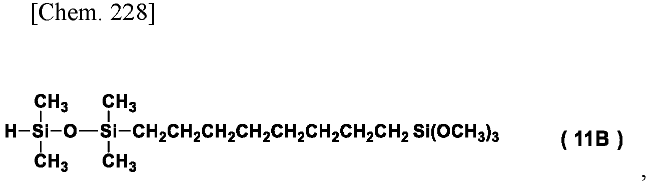
and 3.86×10⁻² g (containing 1.19×10⁻⁷ mol of Pt element) of a toluene solution of chloroplatinic acid/vinylsiloxane complex. The mixture was aged at 80°C for 24 hours. The solvent and unreacted reactants were distilled off under reduced pressure. After washing, 113 g of a liquid product was obtained.

On ¹H-NMR analysis, the compound was identified to have the structure represented by the formula (11C).

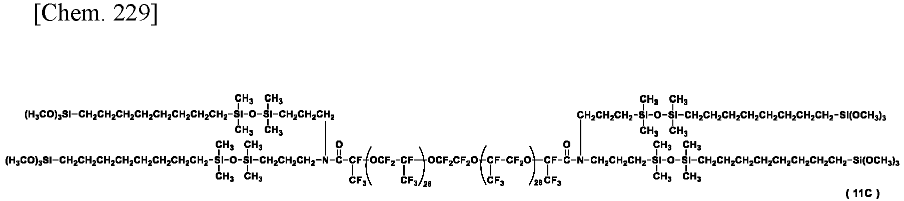

### [Synthesis Example 12]

A reactor was charged with 50 g (4.04×10⁻³ mol) of a compound having the formula (12A): 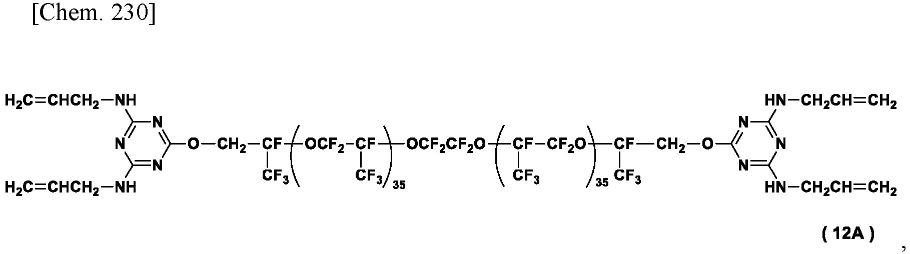
50 g of 1,3-bis(trifluoromethyl)benzene, 8.99 g (2.43×10⁻² mol) of an organosilicon compound having the formula (12B): 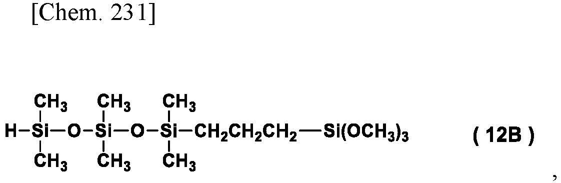
and 1.54×10⁻² g (containing 4.77×10⁻⁸ mol of Pt element) of a toluene solution of chloroplatinic acid/vinylsiloxane complex. The mixture was aged at 80°C for 24 hours. The solvent and unreacted reactants were distilled off under reduced pressure. After washing, 50 g of a liquid product was obtained.

On ¹H-NMR analysis, the compound was identified to have the structure represented by the formula (12C).

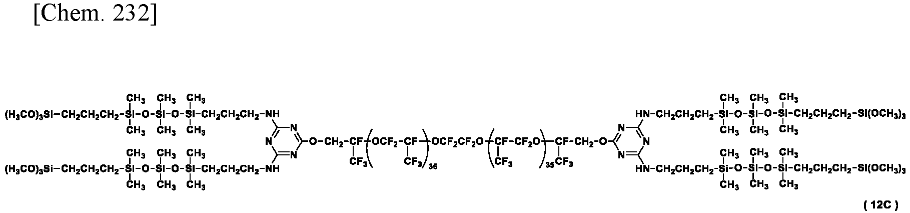

### [Synthesis Example 13]

A reactor was charged with 100 g (1.28×10⁻² mol) of a compound having the formula (13A): 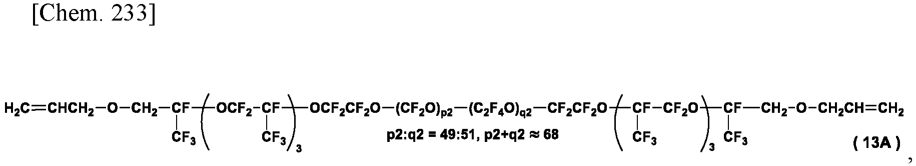
100 g of 1,3-bis(trifluoromethyl)benzene, 10.8 g (3.84×10⁻² mol) of an organosilicon compound having the formula (13B): 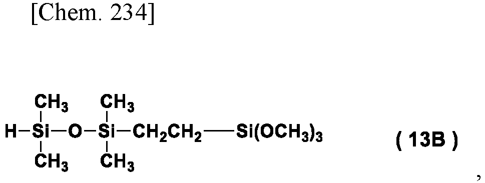
and 4.89×10⁻² g (containing 1.51×10⁻⁷ mol of Pt element) of a toluene solution of chloroplatinic acid/vinylsiloxane complex. The mixture was aged at 80°C for 24 hours. The solvent and unreacted reactants were distilled off under reduced pressure. After washing, 102 g of a liquid product was obtained.

On ¹H-NMR analysis, the compound was identified to have the structure represented by the formula (13C).

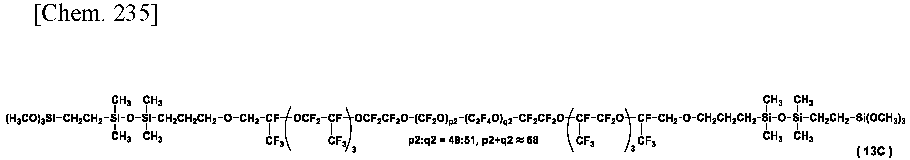

### [Synthesis Example 14]

A reactor was charged with 100 g (1.42×10⁻² mol) of a compound having the formula (14A): 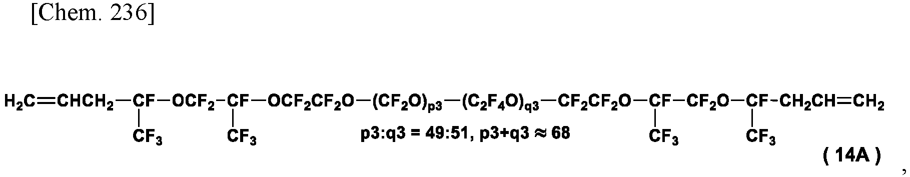
100 g of 1,3-bis(trifluoromethyl)benzene, 15.1 g (4.25×10⁻² mol) of an organosilicon compound having the formula (14B): 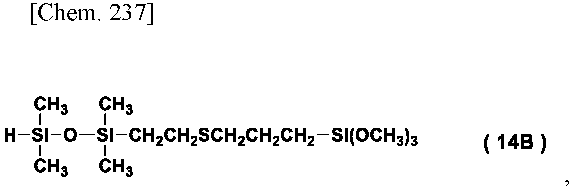
and 5.42×10⁻² g (containing 1.68×10⁻⁷ mol of Pt element) of a toluene solution of chloroplatinic acid/vinylsiloxane complex. The mixture was aged at 80°C for 24 hours. The solvent and unreacted reactants were distilled off under reduced pressure. After washing, 106 g of a liquid product was obtained.

On ¹H-NMR analysis, the compound was identified to have the structure represented by the formula (14C).

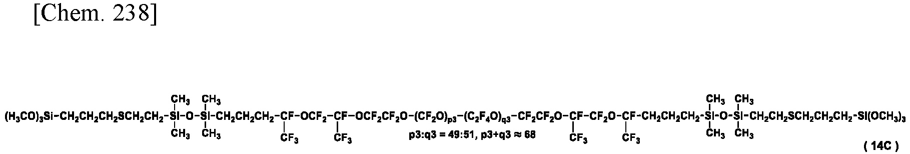

### [Synthesis Example 15]

A reactor was charged with 70 g (7.14×10⁻³ mol) of a compound having the formula (15A): 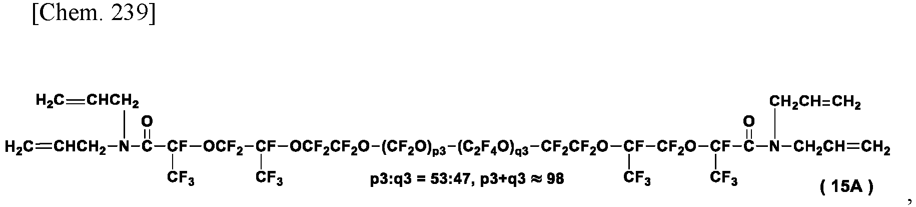
70 g of 1,3-bis(trifluoromethyl)benzene, 12.6 g (4.28×10⁻² mol) of an organosilicon compound having the formula (15B): 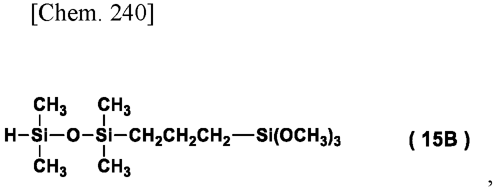
and 2.73×10⁻² g (containing 8.43×10⁻⁸ mol of Pt element) of a toluene solution of chloroplatinic acid/vinylsiloxane complex. The mixture was aged at 80°C for 24 hours. The solvent and unreacted reactants were distilled off under reduced pressure. After washing, 78 g of a liquid product was obtained.

On ¹H-NMR analysis, the compound was identified to have the structure represented by the formula (15C).

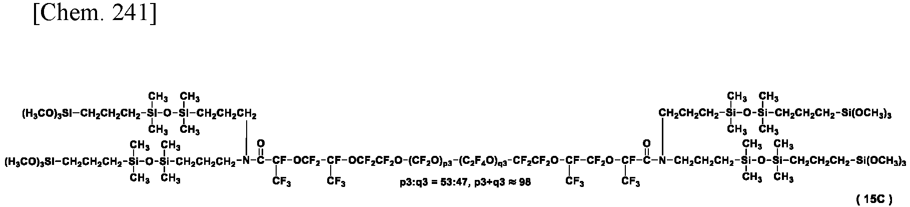

### [Synthesis Example 16]

A reactor was charged with 100 g (1.23×10⁻² mol) of a compound having the formula (16A): 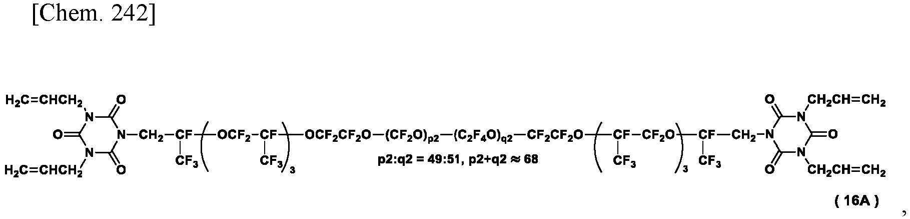
100 g of 1,3-bis(trifluoromethyl)benzene, 21.9 g (7.40×10⁻² mol) of an organosilicon compound having the formula (16B): 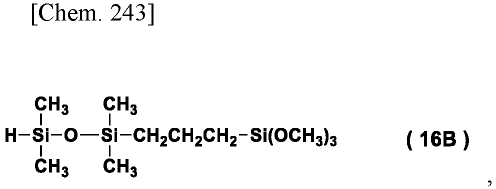
and 4.70×10⁻² g (containing 1.45×10⁻⁷ mol of Pt element) of a toluene solution of chloroplatinic acid/vinylsiloxane complex. The mixture was aged at 80°C for 24 hours. The solvent and unreacted reactants were distilled off under reduced pressure. After washing, 110 g of a liquid product was obtained.

On ¹H-NMR analysis, the compound was identified to have the structure represented by the formula (16C).

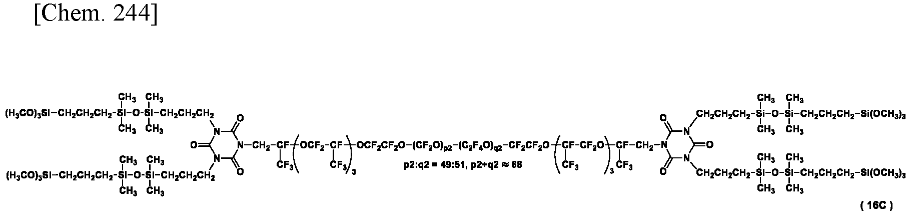

### [Synthesis Example 17]

A reactor was charged with 100 g (1.44×10⁻² mol) of a compound having the formula (17A): 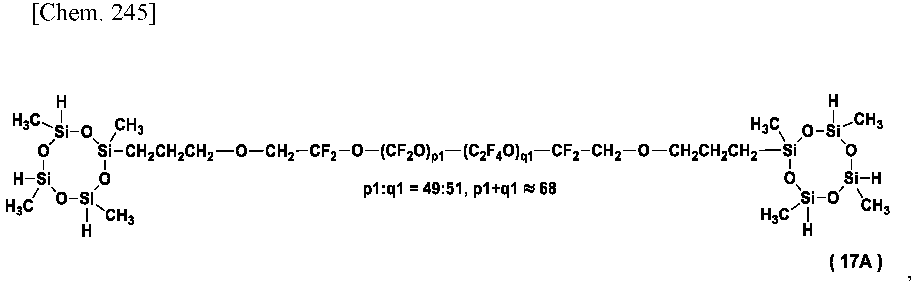
100 g of 1,3-bis(trifluoromethyl)benzene, 21.0 g (1.30×10⁻¹ mol) of an organosilicon compound having the formula (17B): 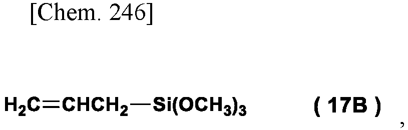
and 5.49×10⁻² g (containing 1.70×10⁻⁷ mol of Pt element) of a toluene solution of chloroplatinic acid/vinylsiloxane complex. The mixture was aged at 80°C for 24 hours. The solvent and unreacted reactants were distilled off under reduced pressure. After washing, 101 g of a liquid product was obtained.

On ¹H-NMR analysis, the compound was identified to have the structure represented by the formula (17C).

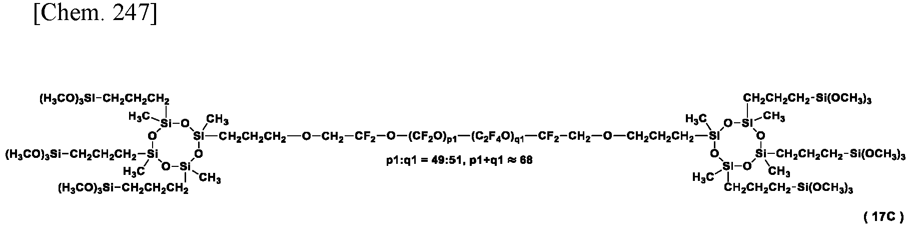

### [Synthesis Example 18]

A reactor was charged with 30 g (1.76×10⁻³ mol) of a compound having the formula (18A): 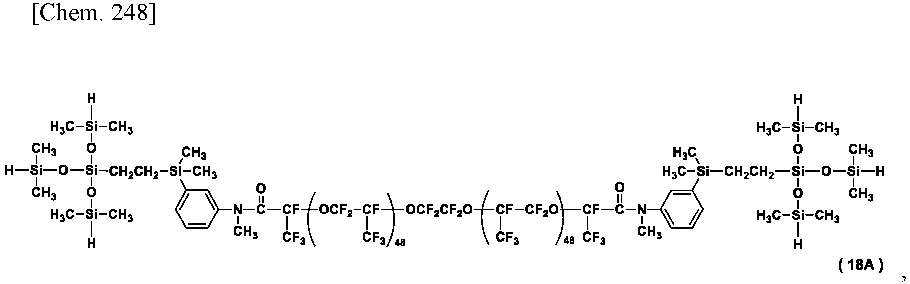
30 g of 1,3-bis(trifluoromethyl)benzene, 2.35 g (1.58×10⁻² mol) of an organosilicon compound having the formula (18B): 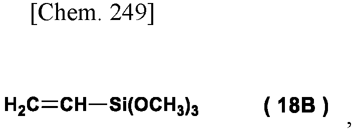
and 6.70×10⁻³ g (containing 2.07×10⁻⁸ mol of Pt element) of a toluene solution of chloroplatinic acid/vinylsiloxane complex. The mixture was aged at 80°C for 24 hours. The solvent and unreacted reactants were distilled off under reduced pressure. After washing, 30 g of a liquid product was obtained.

On ¹H-NMR analysis, the compound was identified to have the structure represented by the formula (18C).

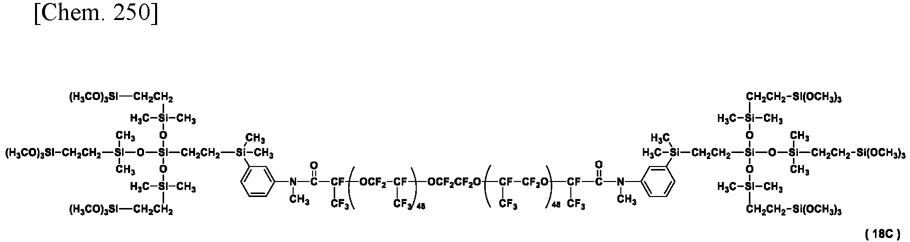

### [Synthesis Example 19]

A reactor was charged with 50 g (7.57×10⁻³ mol) of a compound having the formula (19A): 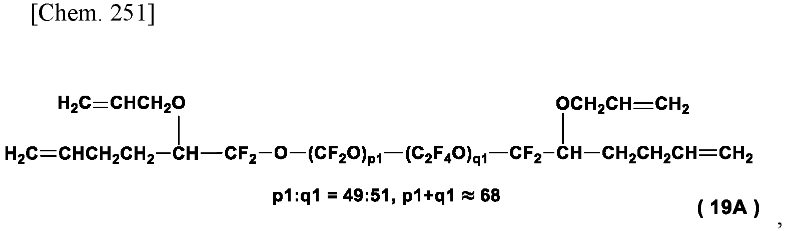
50 g of 1,3-bis(trifluoromethyl)benzene, 13.5 g (4.54× 10⁻² mol) of an organosilicon compound having the formula (19B): 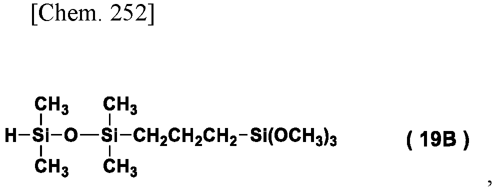
and 2.89×10⁻² g (containing 8.94×10⁻⁸ mol of Pt element) of a toluene solution of chloroplatinic acid/vinylsiloxane complex. The mixture was aged at 80°C for 24 hours. The solvent and unreacted reactants were distilled off under reduced pressure. After washing, 48 g of a liquid product was obtained.

On ¹H-NMR analysis, the compound was identified to have the structure represented by the formula (19C).

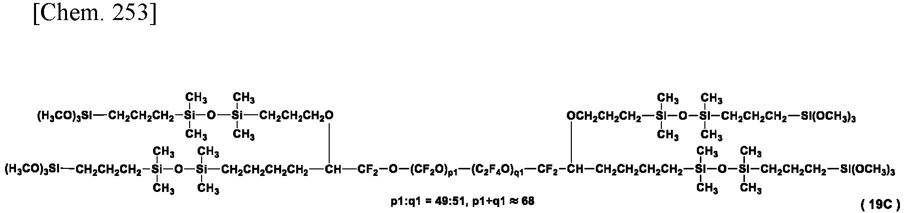

### [Synthesis Example 20]

A reactor was charged with 100 g (1.52×10⁻² mol) of a compound having the formula (20A): 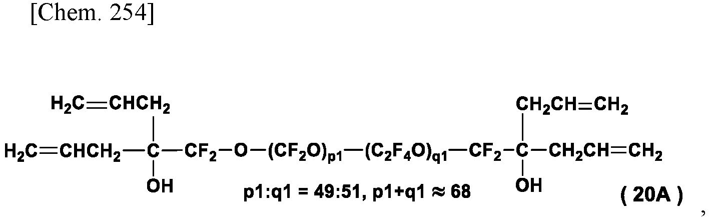
100 g of 1,3-bis(trifluoromethyl)benzene, 33.4 g (9.12×10⁻² mol) of an organosilicon compound having the formula (20B): 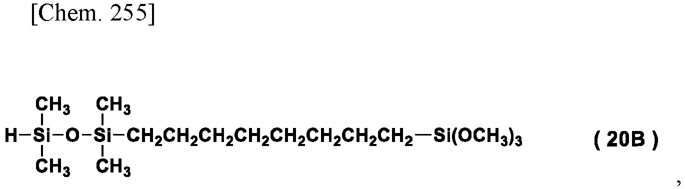
and 5.82×10⁻² g (containing 1.80×10⁻⁷ mol of Pt element) of a toluene solution of chloroplatinic acid/vinylsiloxane complex. The mixture was aged at 80°C for 24 hours. The solvent and unreacted reactants were distilled off under reduced pressure. After washing, 120 g of a liquid product was obtained.

On ¹H-NMR analysis, the compound was identified to have the structure represented by the formula (20C).

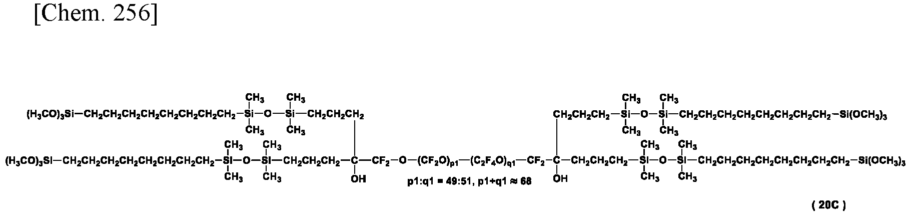

### [Synthesis Example 21]

A reactor was charged with 80 g (1.01×10⁻² mol) of a compound having the formula (21A): 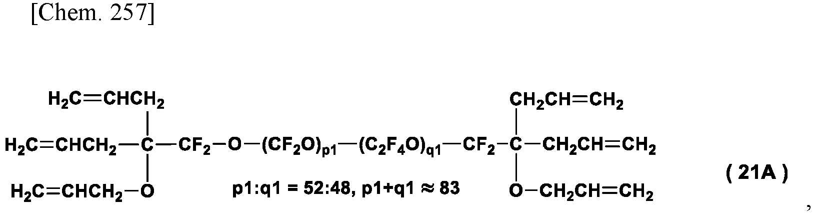
80 g of 1,3-bis(trifluoromethyl)benzene, 25.6 g (9.09×10⁻² mol) of an organosilicon compound having the formula (21B): 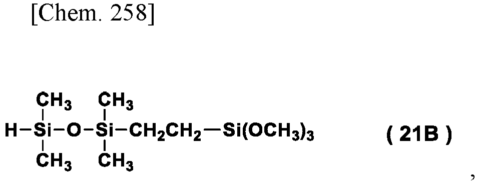
and 3.87×10⁻² g (containing 1.20×10⁻⁷ mol of Pt element) of a toluene solution of chloroplatinic acid/vinylsiloxane complex. The mixture was aged at 80°C for 24 hours. The solvent and unreacted reactants were distilled off under reduced pressure. After washing, 90 g of a liquid product was obtained.

On ¹H-NMR analysis, the compound was identified to have the structure represented by the formula (21C).

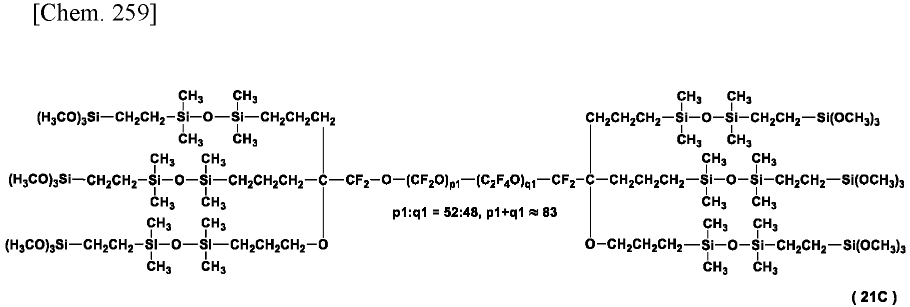

### [Synthesis Example 22]

A reactor was charged with 50 g (7.37×10⁻³ mol) of a compound having the formula (22A): 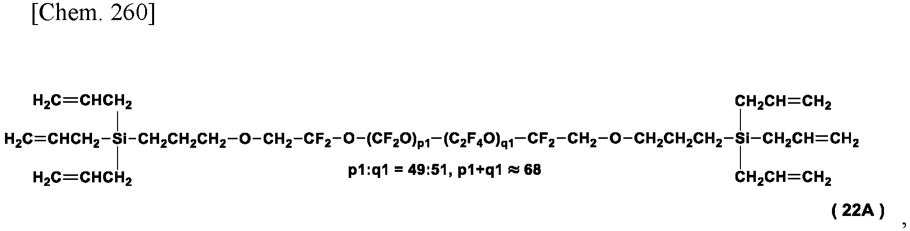
100 g of 1,3-bis(trifluoromethyl)benzene, 25.6 g (6.63×10⁻² mol) of an organosilicon compound having the formula (22B): 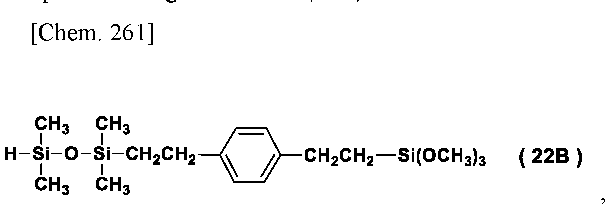
and 2.81×10⁻² g (containing 8.70×10⁻⁸ mol of Pt element) of a toluene solution of chloroplatinic acid/vinylsiloxane complex. The mixture was aged at 80°C for 24 hours. The solvent and unreacted reactants were distilled off under reduced pressure. After washing, 63 g of a liquid product was obtained.

On ¹H-NMR analysis, the compound was identified to have the structure represented by the formula (22C).

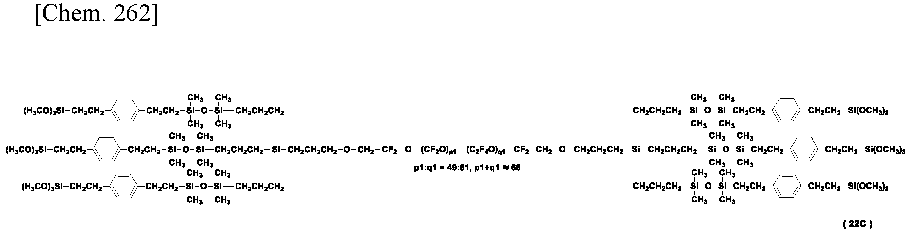

### [Synthesis Example 23]

A reactor was charged with 50 g (6.27 × 10⁻³ mol) of a compound having the formula (23A): 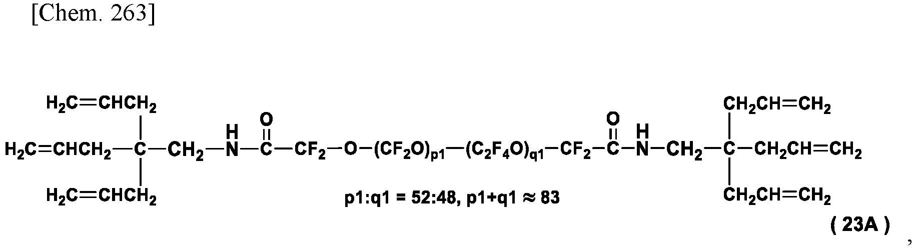
100 g of 1,3-bis(trifluoromethyl)benzene, 16.7 g (5.64×10⁻² mol) of an organosilicon compound having the formula (23B): 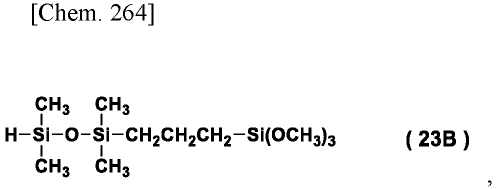
and 2.40×10⁻² g (containing 7.41×10⁻⁸ mol of Pt element) of a toluene solution of chloroplatinic acid/vinylsiloxane complex. The mixture was aged at 80°C for 24 hours. The solvent and unreacted reactants were distilled off under reduced pressure. After washing, 57 g of a liquid product was obtained.

On ¹H-NMR analysis, the compound was identified to have the structure represented by the formula (23C).

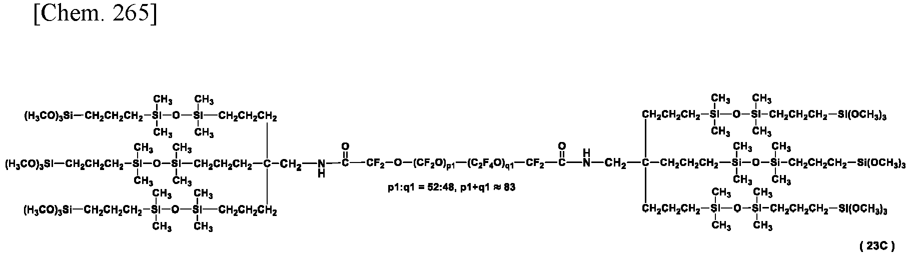

### [Synthesis Example 24]

A reactor was charged with 50 g (7.14×10⁻³ mol) of a compound having the formula (24A): 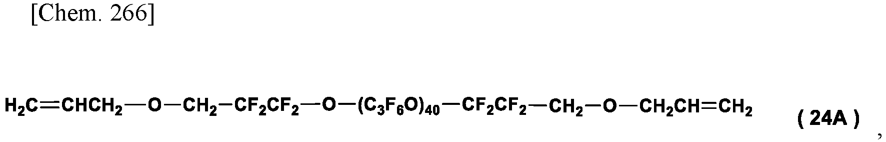
50 g of 1,3-bis(trifluoromethyl)benzene, 6.04 g (2.14×10⁻² mol) of an organosilicon compound having the formula (24B): 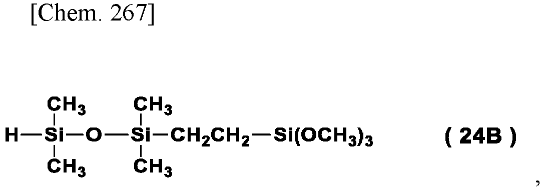
and 2.73×10⁻² g (containing 8.43×10⁻⁸ mol of Pt element) of a toluene solution of chloroplatinic acid/vinylsiloxane complex. The mixture was aged at 80°C for 24 hours. The solvent and unreacted reactants were distilled off under reduced pressure. After washing, 48 g of a liquid product was obtained.

On ¹H-NMR analysis, the compound was identified to have the structure represented by the formula (24C).

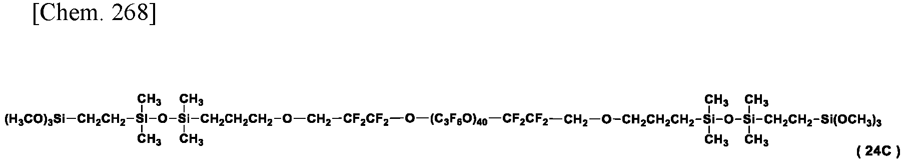

### [Synthesis Example 25]

A reactor was charged with 50 g (5.62×10⁻³ mol) of a compound having the formula (25A): 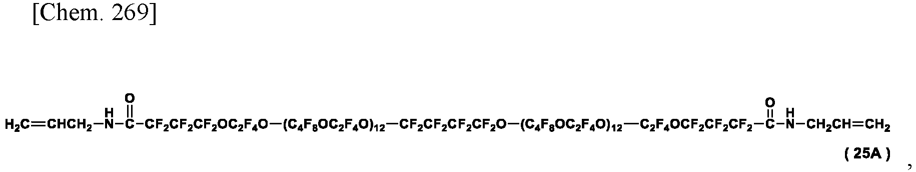
50 g of 1,3-bis(trifluoromethyl)benzene, 5.00 g (1.69×10⁻² mol) of an organosilicon compound having the formula (25B): 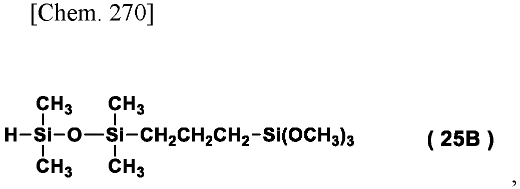
and 2.15×10⁻² g (containing 6.60×10⁻⁸ mol of Pt element) of a toluene solution of chloroplatinic acid/vinylsiloxane complex. The mixture was aged at 80°C for 24 hours. The solvent and unreacted reactants were distilled off under reduced pressure. After washing, 47 g of a liquid product was obtained.

On ¹H-NMR analysis, the compound was identified to have the structure represented by the formula (25C).

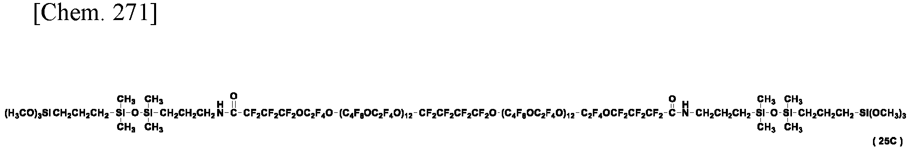

### [Example 1]

A surface treating agent was prepared by dissolving the compound of Synthesis Example 1 in Novec 7200 (ethyl perfluorobutyl ether, 3M) in a concentration of 20% by weight.

### [Example 2]

A surface treating agent was prepared by dissolving the compound of Synthesis Example 2 in Novec 7200 (ethyl perfluorobutyl ether, 3M) in a concentration of 20% by weight.

### [Example 3]

A surface treating agent was prepared by dissolving the compound of Synthesis Example 3 in Novec 7200 (ethyl perfluorobutyl ether, 3M) in a concentration of 20% by weight.

### [Example 4]

A surface treating agent was prepared by dissolving the compound of Synthesis Example 4 in Asahiklin AC-6000 (tridecafluorooctane, AGC) in a concentration of 20% by weight.

### [Example 5]

A surface treating agent was prepared by dissolving the compound of Synthesis Example 6 in Asahiklin AC-6000 (tridecafluorooctane, AGC) in a concentration of 20% by weight.

### [Example 6]

A surface treating agent was prepared by dissolving the compound of Synthesis Example 7 in Opteon SF10 (methyl perfluoroheptenyl ether, Chemours-Mitsui Fluoroproducts Co., Ltd.) in a concentration of 20% by weight.

### [Example 7]

A surface treating agent was prepared by dissolving the compound of Synthesis Example 8 in Novec 7200 (ethyl perfluorobutyl ether, 3M) in a concentration of 20% by weight.

### [Example 8]

A surface treating agent was prepared by dissolving the compound of Synthesis Example 10 in Opteon SF10 (methyl perfluoroheptenyl ether, Chemours-Mitsui Fluoroproducts Co., Ltd.) in a concentration of 20% by weight.

### [Example 9]

A surface treating agent was prepared by dissolving the compound of Synthesis Example 11 in Opteon SF10 (methyl perfluoroheptenyl ether, Chemours-Mitsui Fluoroproducts Co., Ltd.) in a concentration of 20% by weight.

### [Example 10]

A surface treating agent was prepared by dissolving the compound of Synthesis Example 13 in Novec 7200 (ethyl perfluorobutyl ether, 3M) in a concentration of 20% by weight.

### [Example 11]

A surface treating agent was prepared by dissolving the compound of Synthesis Example 15 in Asahiklin AC-6000 (tridecafluorooctane, AGC) in a concentration of 20% by weight.

### [Example 12]

A surface treating agent was prepared by dissolving the compound of Synthesis Example 16 in Novec 7300 (methyl perfluorohexyl ether, 3M) in a concentration of 20% by weight.

### [Example 13]

A surface treating agent was prepared by dissolving the compound of Synthesis Example 17 in Novec 7300 (methyl perfluorohexyl ether, 3M) in a concentration of 20% by weight.

### [Example 14]

A surface treating agent was prepared by dissolving the compound of Synthesis Example 19 in Novec 7200 (ethyl perfluorobutyl ether, 3M) in a concentration of 20% by weight.

### [Example 15]

A surface treating agent was prepared by dissolving the compound of Synthesis Example 20 in Asahiklin AE-3000 (1, 1,2,2-tetrafluoroethyl 2,2,2-trifluoroethyl ether, AGC) in a concentration of 20% by weight.

### [Example 16]

A surface treating agent was prepared by dissolving the compound of Synthesis Example 21 in Opteon SF10 (methyl perfluoroheptenyl ether, Chemours-Mitsui Fluoroproducts Co., Ltd.) in a concentration of 20% by weight.

### [Example 17]

A surface treating agent was prepared by dissolving the compound of Synthesis Example 23 in Novec 7300 (methyl perfluorohexyl ether, 3M) in a concentration of 20% by weight.

### [Example 18]

A surface treating agent was prepared by dissolving the compound of Synthesis Example 24 in Novec 7300 (methyl perfluorohexyl ether, 3M) in a concentration of 20% by weight.

### [Example 19]

A surface treating agent was prepared by dissolving the compound of Synthesis Example 25 in Opteon SF10 (methyl perfluoroheptenyl ether, Chemours-Mitsui Fluoroproducts Co., Ltd.) in a concentration of 20% by weight.

### [Example 20]

A surface treating agent was prepared by mixing the compound of Synthesis Example 1 with a compound having the formula (D): 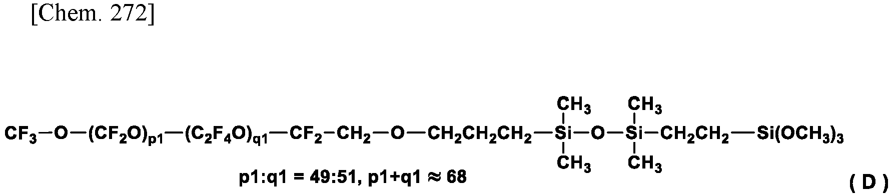 in such a ratio that the compound of Synthesis Example 1 : the compound having formula (D) was 95:5, and dissolving them in Novec 7200 (ethyl perfluorobutyl ether, 3M) in a concentration of 20% by weight.

### [Comparative Example 1]

A surface treating agent was prepared by dissolving a compound having the formula (E): 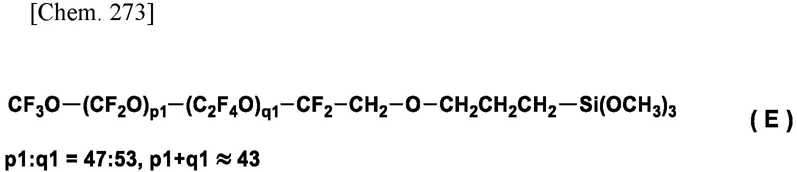 in Novec 7200 (ethyl perfluorobutyl ether, 3M) in a concentration of 20% by weight.

### [Comparative Example 2]

A surface treating agent was prepared by dissolving a compound having the formula (F): 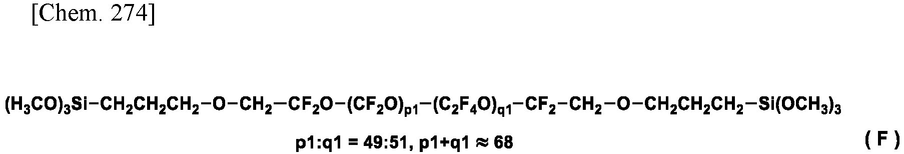 in Novec 7200 (ethyl perfluorobutyl ether, 3M) in a concentration of 20% by weight.

### [Comparative Example 3]

A surface treating agent was prepared by dissolving a compound having the formula (G):

C₆F₁₃-Si(OCH₃)₃ (G)

in Novec 7200 (ethyl perfluorobutyl ether, 3M) in a concentration of 20% by weight.

### Preparation of surface treating agent and formation of cured film

Surface treating agents were prepared as described in Examples and Comparative Examples. Onto an antireflective-treated plastic lens having a SiO₂ layer on its outermost surface (size: 80 mm diameter), each surface treating agent was deposited by vacuum evaporation under conditions including pressure 2.0×10⁻² Pa and heating temperature 700°C. The deposit was cured in an atmosphere of 25°C and relative humidity 50% for 12 hours, forming a cured film of 10 nm thick.

### Evaluation of water/oil repellency

Using a contact angle meter Drop Master (Kyowa Interface Science Co., Ltd.), the cured film on lens was measured for a contact angle with water as an index of water repellency (droplet 2 µl, temperature 25°C, RH 40%). The results (initial contact angle with water) are shown in Table 1.

At the initial, all the films of Examples and Comparative Examples showed excellent water repellency.

### Evaluation of chucking (1): Measurement of dynamic friction with microfiber cloth

Using a surface tester Type 14FW (Shinto Scientific Co., Ltd.), the coefficient of dynamic friction of the cured film on lens relative to BEMCOT (Asahi Kasei Corp.) was measured under the following conditions. The results are shown in Table 1.

| | |
|---|---|
| contact area: | 10 mm × 30 mm |
| load: | 100 gf |

### Evaluation of chucking (2): Measurement of tape shear bond strength

Lens blocking tape (LEAP III 1695M, 3M) was applied to the cured film on lens before a tensile shear bond strength was measured. Specifically, the cured film-bearing lens and the lens blocking tape attached thereto were pulled apart such that a shear stress acted on the bonding interface. The maximum force (tensile shear bond strength) when the bonded juncture was ruptured was measured. Evaluation was made according to the following criteria. The results are shown in Table 1.

### [Measurement of tensile shear bond strength]

| | |
|---|---|
| Contact area: | 2.7 cm² |
| Tensile rate: | 50 mm/min |

### [Evaluation criteria of shear bond strength]

×: less than 30 N
△: from 30 N to less than 40 N
○: from 40 N to less than 50 N
⊚: from 50 N to less than 60 N

### Evaluation of abrasion resistance

Using a rubbing tester (Shinto Scientific Co., Ltd.), the cured film on lens was rubbed under the following conditions. Thereafter, the cured film was measured for a contact angle with water as an index of water repellency as described above. The test environment conditions included temperature 25°C and RH 40%. A percent reduction from the initial contact angle with water was computed. The results (contact angle with water after paper abrasion and reduction of contact angle with water) are shown in Table 1.

### [Measurement of paper abrasion resistance]

| | |
|---|---|
| Paper: | dusper (Ozu Corp.) |
| Contact area: | 1 cm² |
| Moving distance (one way): | 40 mm |
| Moving speed: | 4,800 mm/min |
| Load: | 1 kgf/1 cm² |
| Abrasion cycles: | 10,000 cycles |

Examples 1 to 20, which used a compound having a high molecular weight and possessing a siloxane structure or siloxane bond in a linking group (i.e., fluoropolyether-containing polymer within the scope of the invention), showed improved substrate adhesion and high paper abrasion durability. Owing to the inclusion of functional groups at both ends of the molecular chain, a high tensile shear bond strength was observed. Comparative Example 1 showed a low coefficient of dynamic friction and low tensile shear bond strength. Comparative Example 2 showed a high tensile shear bond strength, but poor paper abrasion durability. Comparative Example 3 also showed poor paper abrasion resistance. As seen from the foregoing, Examples using fluoropolyether-containing polymers within the scope of the invention meet both paper abrasion durability and chucking properties at a high level.

**[Table 1]**

| | Initial contact angle with water (°) | Contact angle with water after paper abrasion (°) | Reduction of contact angle with water (%) | Chucking property (1) | Chucking property (2) |
|---|---|---|---|---|---|
| Example 1 | 110 | 108 | 1.8 | 0.08 | ⊚ |
| Example 2 | 109 | 108 | 0.9 | 0.07 | ⊚ |
| Example 3 | 111 | 108 | 2.7 | 0.08 | ⊚ |
| Example 4 | 112 | 109 | 2.7 | 0.07 | ○ |
| Example 5 | 111 | 110 | 0.9 | 0.07 | ○ |
| Example 6 | 109 | 108 | 0.9 | 0.08 | ⊚ |
| Example 7 | 110 | 108 | 1.8 | 0.09 | ⊚ |
| Example 8 | 111 | 107 | 3.6 | 0.22 | ⊚ |
| Example 9 | 108 | 106 | 1.9 | 0.25 | ⊚ |
| Example 10 | 110 | 108 | 1.8 | 0.09 | ○ |
| Example 11 | 111 | 109 | 1.8 | 0.10 | ⊚ |
| Example 12 | 110 | 107 | 2.7 | 0.09 | ○ |
| Example 13 | 109 | 107 | 1.8 | 0.12 | ⊚ |
| Example 14 | 108 | 107 | 0.9 | 0.07 | ⊚ |
| Example 15 | 109 | 106 | 2.8 | 0.08 | ⊚ |
| Example 16 | 107 | 105 | 1.9 | 0.08 | ⊚ |
| Example 17 | 107 | 106 | 0.9 | 0.09 | ⊚ |
| Example 18 | 108 | 106 | 1.9 | 0.17 | ⊚ |
| Example 19 | 108 | 107 | 0.9 | 0.18 | ⊚ |
| Example 20 | 110 | 107 | 2.7 | 0.09 | ⊚ |
| Comparative Example 1 | 116 | 112 | 3.4 | 0.03 | × |
| Comparative Example 2 | 107 | 98 | 8.4 | 0.08 | Δ |
| Comparative Example 3 | 105 | 79 | 24.7 | 0.30 | ⊚ |

## Claims

1. A fluoropolyether-containing polymer having a silanol group or hydrolyzable silyl group, represented by the general formula (1): 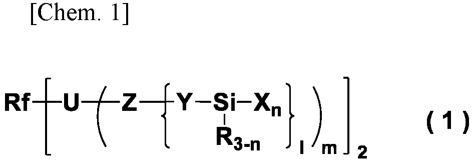
wherein Rf is a divalent fluorooxyalkylene-containing polymer residue represented by the general formula (2): 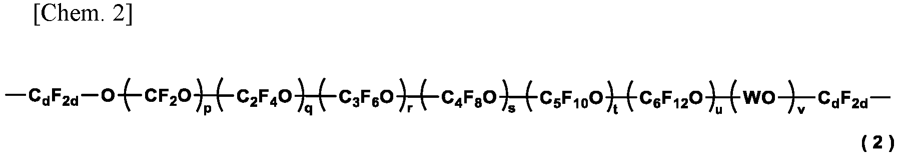
wherein W is a fluoroalkylene group containing at least one hydrogen, d is independently for each unit an integer of 1 to 3, p, q, r, s, t, u, and v each are an integer of 0 to 450, p+q+r+s+t+u+v is 20 to 450, each of the units associated with p, q, r, s, t, u and v may be linear or branched, and individual repeating units within the parentheses with p, q, r, s, t, u and v may be randomly bonded, and the polymer residue has a number average molecular weight of 6,000 to 30,000,
U is independently a di- to tetravalent organic group,
Z is independently a di- to hexavalent linear organo(poly)siloxane residue of 2 to 10 silicon atoms or a di- to hexavalent branched or cyclic organo(poly)siloxane residue of 3 to 10 silicon atoms,
Y is independently a divalent organic group,
R is independently a C₁-C₄ alkyl group or phenyl group,
X is independently a hydroxy or hydrolyzable group,
n is independently for each attachment silicon an integer of 1 to 3, m is independently an integer of 1 to 3, and l is independently an integer of 1 to 5.

2. The fluoropolyether-containing polymer of claim 1 wherein in formula (1), U is
a C₁-C₂₀ di- or trivalent aliphatic saturated hydrocarbon group which may contain at least one atom or group selected from among C₆-C₈ arylene groups, oxygen, sulfur, hydroxy, diorganosilylene, unsubstituted or substituted secondary amino, tertiary amino, carbonyl, amide, ester, isocyanurate, and triazine ring-containing groups, or
a tetravalent group which contains a carbon or silicon atom having four valence bonds as the center atom and in which a C₁-C₂₀ aliphatic saturated hydrocarbon group, which may contain at least one atom or group selected from among oxygen, unsubstituted or substituted secondary amino, carbonyl, and amide, or oxygen is attached to three or four of the four valence bonds of the center atom.

3. The fluoropolyether-containing polymer of claim 1 wherein in formula (1), Y is a C₁-C₂₀ alkylene group which may contain at least one atom or group selected from among oxygen, sulfur and C₆-C₈ arylene groups.

4. The fluoropolyether-containing polymer of claim 1 wherein in formula (1), X is selected from the group consisting of hydroxy, C₁-C₁₀ alkoxy groups, C₂-C₁₀ alkoxyalkoxy groups, C₂-C₁₀ acyloxy groups, C₂-C₁₀ alkenyloxy groups, and halogen.

5. The fluoropolyether-containing polymer of claim 1 wherein the polymer having formula (1) is represented by any one of the following formulae: 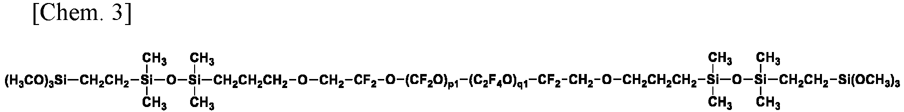 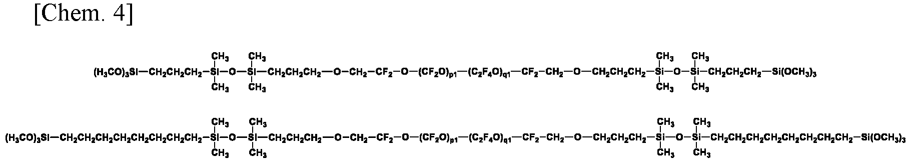 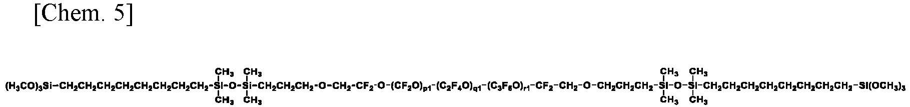 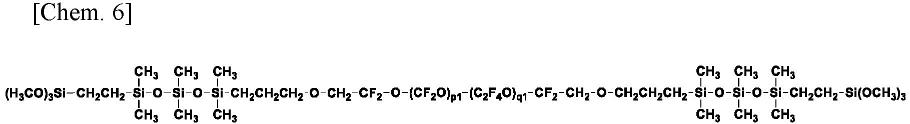 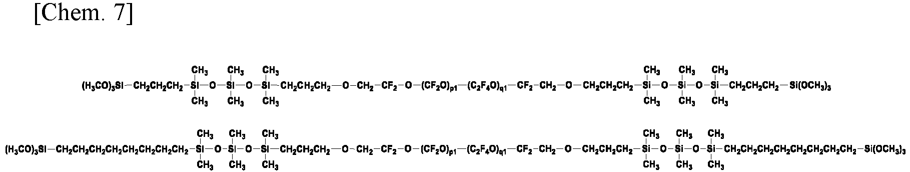 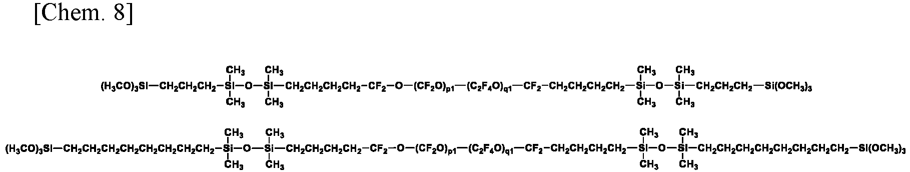 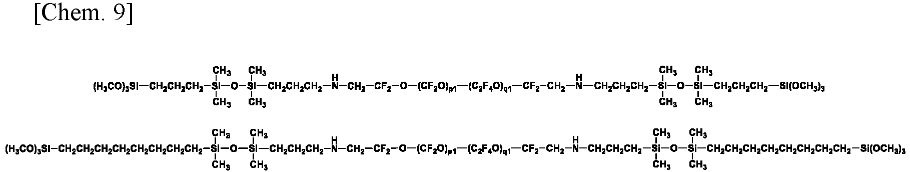 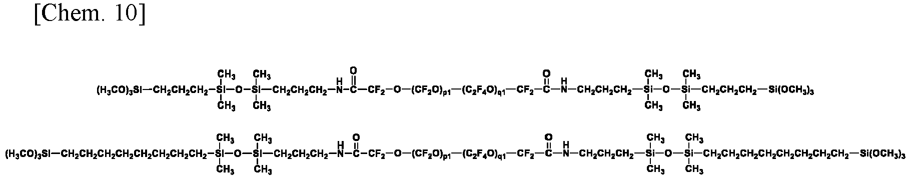 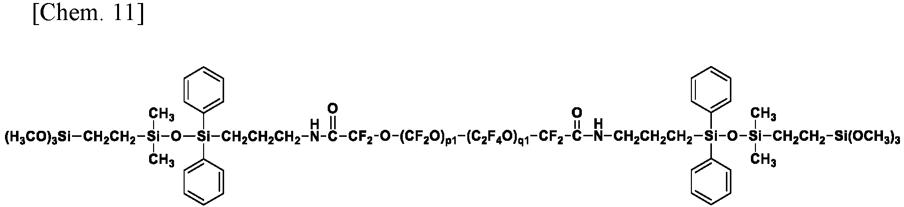 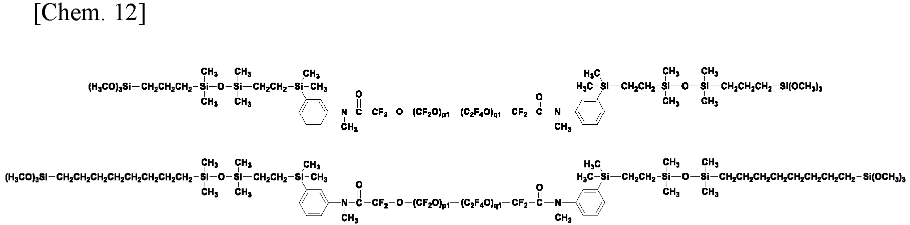 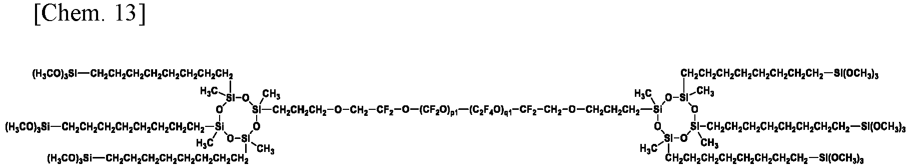 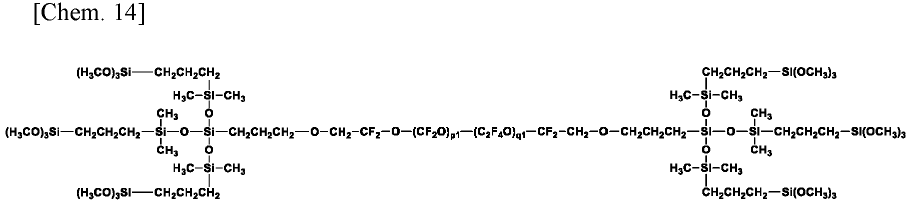 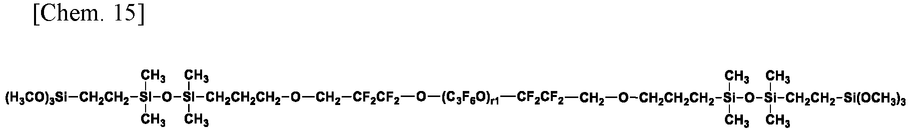 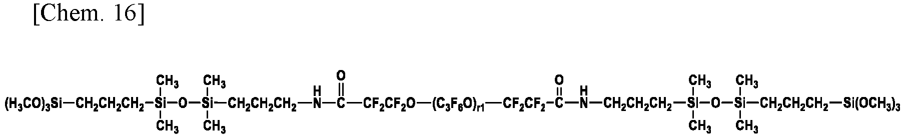 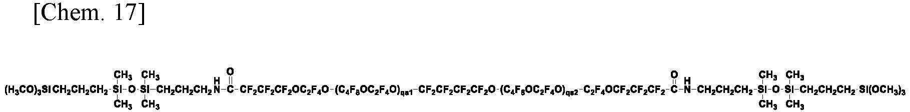 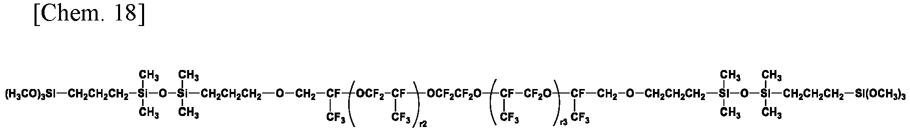 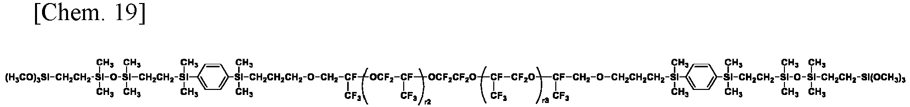 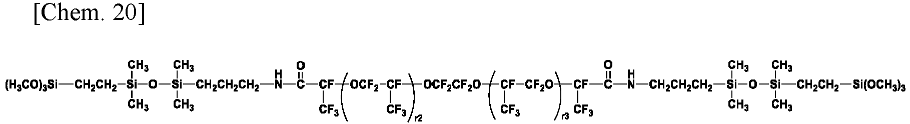 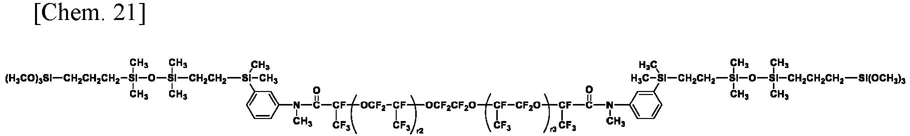 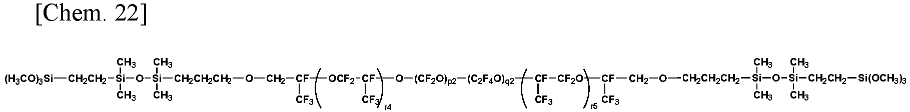 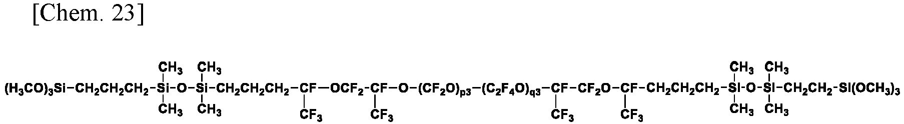 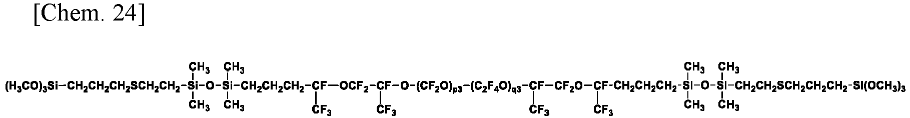 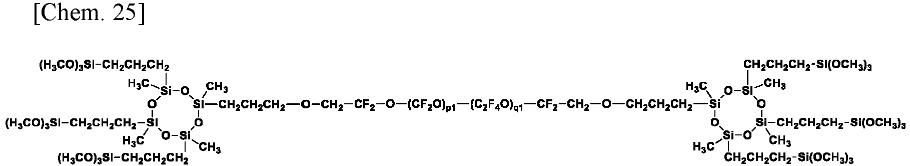 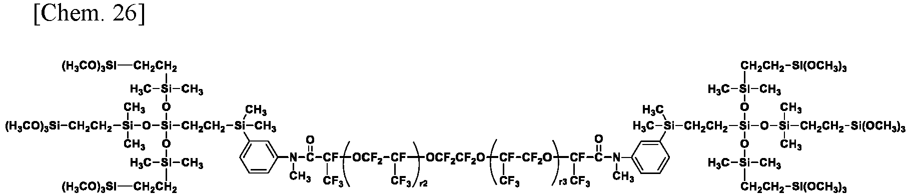 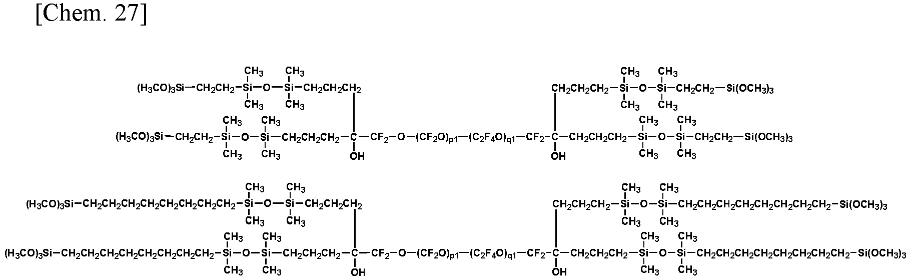 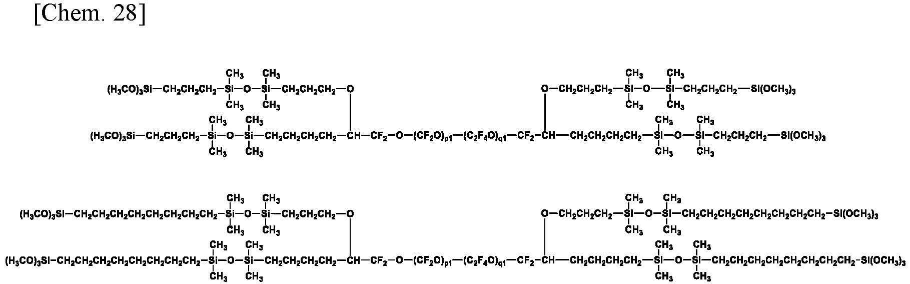 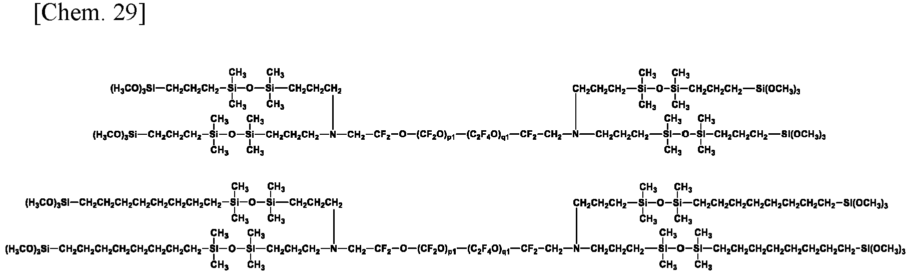 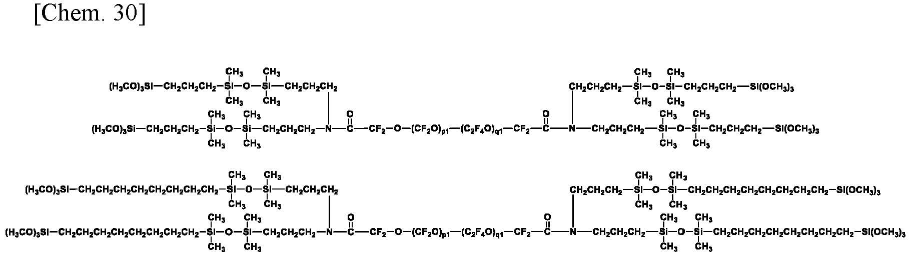 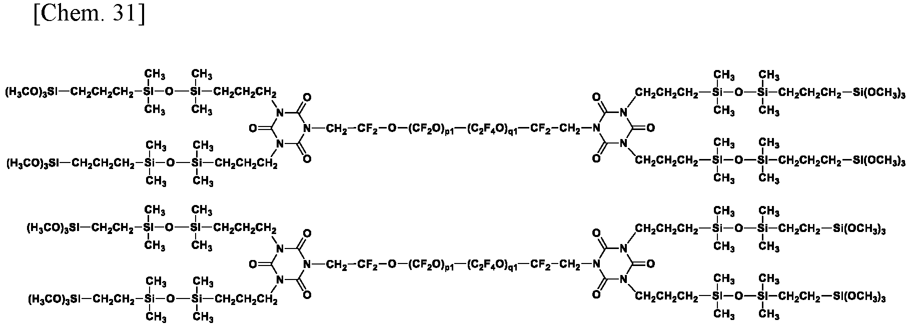 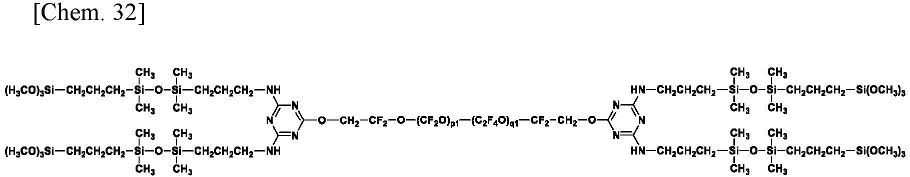 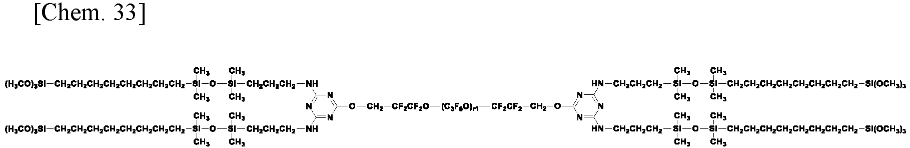 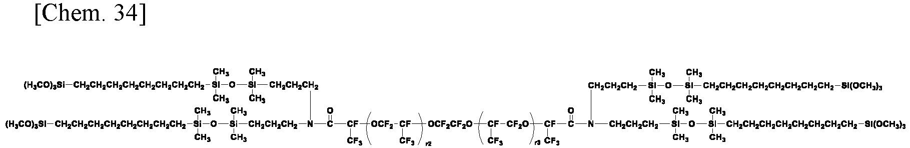 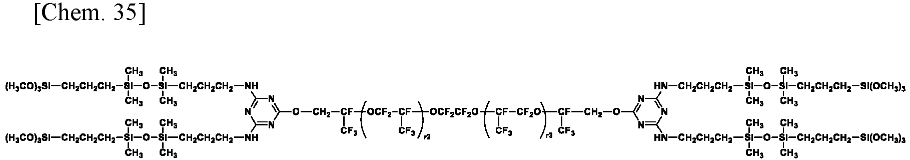 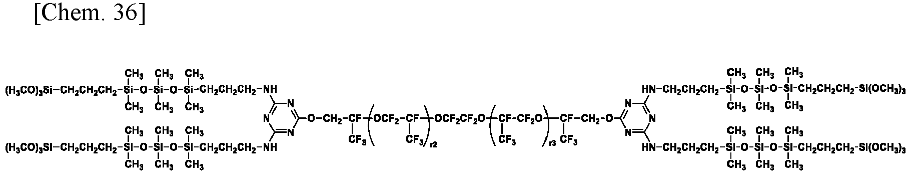 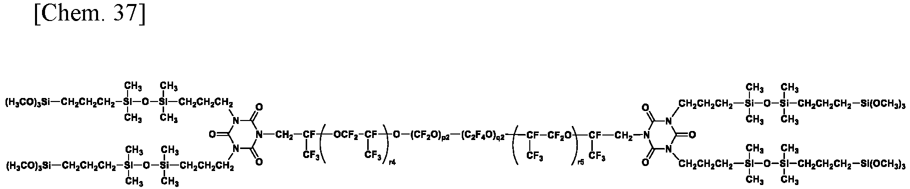 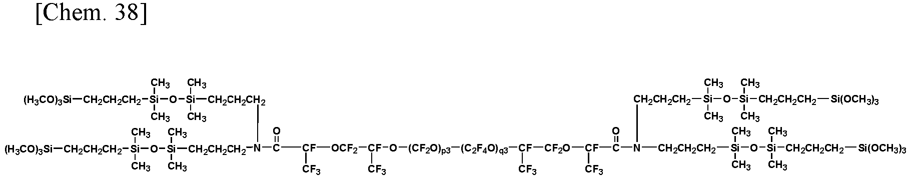 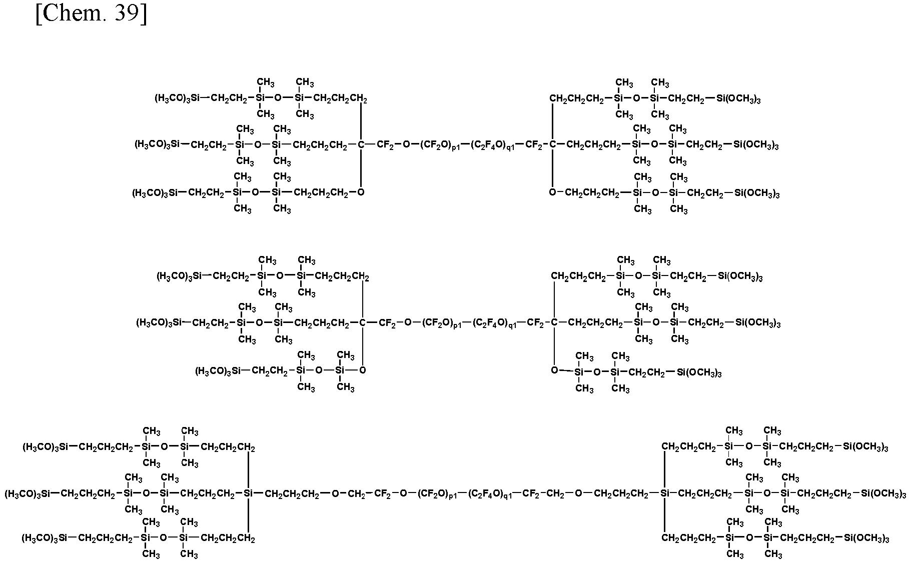 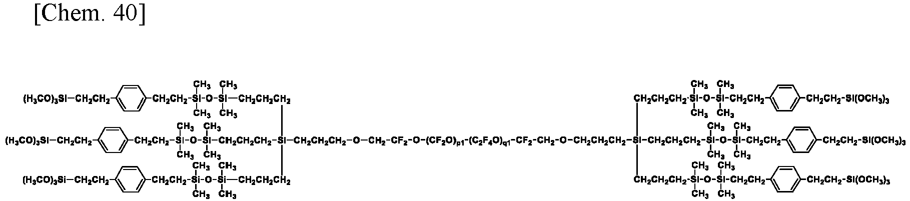 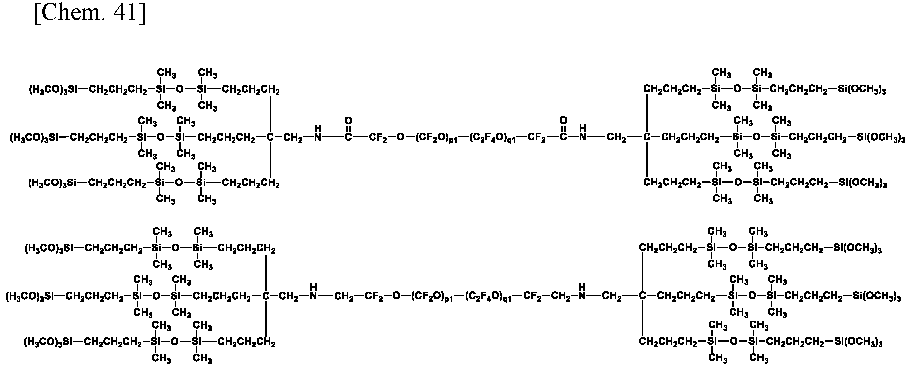 wherein p1 is an integer of 5 to 440, q1 is an integer of 5 to 250, p1+q1 is an integer of 50 to 450, r1 is an integer of 35 to 180, r2 is an integer of 1 to 100, r3 is an integer of 1 to 100, r2+r3 is an integer of 35 to 180, p2 is an integer of 1 to 400, q2 is an integer of 1 to 250, r4 is an integer of 1 to 100, r5 is an integer of 1 to 100, p2+q2+r4+r5 is an integer of 40 to 403, p3 is an integer of 5 to 440, q3 is an integer of 5 to 250, p3+q3 is an integer of 50 to 445, qs1 is an integer of 1 to 85, qs2 is an integer of 1 to 85, qs1+qs2 is an integer of 16 to 86, individual repeating units within the parentheses with p1 and q1, p2 and q2, and p3 and q3 may be randomly bonded, and the fluorooxyalkylene-containing polymer residue has a number average molecular weight of 6,000 to 30,000.

6. A surface treating agent comprising the fluoropolyether-containing polymer of any one of claims 1 to 5 and/or a partial (hydrolytic) condensate thereof as a main component.

7. The surface treating agent of claim 6, further comprising a fluoropolyether-containing polymer having a silanol group or hydrolyzable silyl group, represented by the general formula (3), and/or a partial (hydrolytic) condensate thereof, 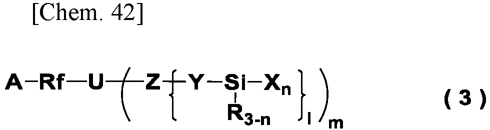
wherein A is independently fluorine, hydrogen or a monovalent fluorinated group terminated with -CF₃, -CF₂H or -CH₂F group,
Rf is a divalent fluorooxyalkylene-containing polymer residue having the general formula (2): 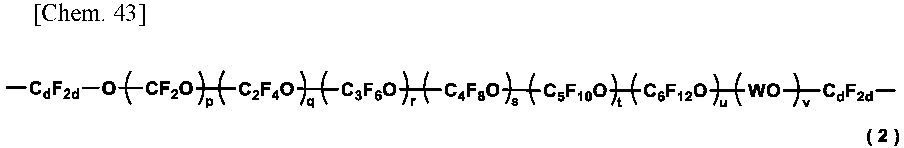
wherein W is a fluoroalkylene group containing at least one hydrogen, d is independently for each unit an integer of 1 to 3, p, q, r, s, t, u, and v is independently an integer of 0 to 450, p+q+r+s+t+u+v is 20 to 450, each of the units associated with p, q, r, s, t, u and v may be linear or branched, and individual repeating units within the parentheses with p, q, r, s, t, u and v may be randomly bonded, and the polymer residue has a number average molecular weight of 6,000 to 30,000,
U is independently a di- to tetravalent organic group,
Z is independently a di- to hexavalent linear organo(poly)siloxane residue of 2 to 10 silicon atoms or a di- to hexavalent branched or cyclic organo(poly)siloxane residue of 3 to 10 silicon atoms,
Y is independently a divalent organic group,
R is independently a C₁-C₄ alkyl group or phenyl group,
X is independently a hydroxy or hydrolyzable group,
n is independently for each attachment silicon an integer of 1 to 3, m is independently an integer of 1 to 3, and l is independently an integer of 1 to 5.

8. An article having a surface treated with the surface treating agent of claim 6.

9. The article of claim 8 which is a lens.
